(19) Europäisches Patentamt
European Patent Office
Office européen des brevets

(11) EP 0 799 284 B1

(12) EUROPÄISCHE PATENTSCHRIFT

(45) Veröffentlichungstag und Bekanntmachung des Hinweises auf die Patenterteilung:
**11.08.1999 Patentblatt 1999/32**

(21) Anmeldenummer: **95942097.7**

(22) Anmeldetag: **11.12.1995**

(51) Int Cl.[6]: **C09D 4/00**, C08F 38/00, C08G 61/08

(86) Internationale Anmeldenummer:
**PCT/EP95/04866**

(87) Internationale Veröffentlichungsnummer:
**WO 96/19540 (27.06.1996 Gazette 1996/29)**

# (54) POLYMERISIERBARE ZUSAMMENSETZUNG MIT ACETYLENEN UND VERFAHREN ZUR PHOTOPOLYMERISATION VON ACETYLENEN

POLYMERISABLE ACETYLENE COMPOSITION AND ACETYLENE PHOTOPOLYMERISATION PROCESS

COMPOSITION POLYMERISABLE D'ACETYLENES ET PROCEDE DE PHOTOPOLYMERISATION D'ACETYLENES

(84) Benannte Vertragsstaaten:
**BE CH DE ES FR GB IT LI NL SE**

(30) Priorität: **21.12.1994 CH 385294**

(43) Veröffentlichungstag der Anmeldung:
**08.10.1997 Patentblatt 1997/41**

(73) Patentinhaber: **Ciba Specialty Chemicals Holding Inc.**
**4057 Basel (CH)**

(72) Erfinder:
- **VAN DER SCHAAF, Paul, Adriaan**
  **CH-1700 Fribourg (CH)**
- **HAFNER, Andreas**
  **CH-3177 Laupen (CH)**
- **MÜHLEBACH, Andreas**
  **CH-1782 Belfaux (CH)**

(56) Entgegenhaltungen:
**EP-A- 0 480 248** **EP-A- 0 483 722**
**WO-A-95/14051** **DE-A- 3 542 319**
**US-A- 4 667 006**

- **DATABASE WPI Week 8629 Derwent Publications Ltd., London, GB; AN 86-187072 XP002000745 & JP,A,61 120 817 (ASAHI CHEMICAL IND) , 7.Juni 1986**
- **JOURNAL CHEM. SOC., CHEMICAL COMMUNICATIONS, 1.April 1991, Seiten 503-504, XP000564528 MASUDA ET AL.: "Metathesis copolymerisation of cycloalkenes with substituted acetylenes" in der Anmeldung erwähnt**
- **TETRAHEDRON LETTERS, Bd. 34, Nr. 38, 17.September 1993, Seiten 6123-6126, XP000564525 GITA B.: "Synthesis of homo and block copolymers of norbornene with W(CO)6 via photo-initiation" in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 799 284 B1

## Beschreibung

Die vorliegende Erfindung betrifft Zusammensetzungen mit nichtflüchtigen Acetylenen und photokatalytischen Mengen eines Molybdän-, Wolfram-, Niob- oder Tantalkatalysators, der entweder mindestens zwei Methylgruppen oder zwei monosubstituierte Methylgruppen ohne $\alpha$-Wasserstoffatome im Substituenten, oder wenigstens ein Halogen und nur eine Silylmethylgruppe am Metall gebunden enthält; ein Photopolymerisationsverfahren zur Herstellung von Polyacetylenen; ein Zweistufenverfahren zur Photopolymerisation und anschliessenden thermischen Polymerisation von nichtflüchtigen Acetylenen; Trägermaterialien mit wenigstens einer Schicht, enthaltend nichtflüchtige Acetylene zusammen mit einer katalytischen Menge dieses Katalysators; und Trägermaterialien mit wenigstens einer Schicht aus nichtflüchtigen Polyacetylenen oder einer Reliefstruktur aus Polyacetylenen.

Voronkov et al. [Voronkov, M.G., Pukhnarevich, V.B., Sushchinskaya, S.P., Annenkova, V.Z., Annenkova, V. M., Andreeva, N.J., J. Polymer Science: Polymer Chemistry Edition 18:53-57 (1980)] beschreiben die Polymerisation von Acetylen und substituierten Acetylenen unter Verwendung von Molybdän- und Wolframhalogeniden in 1,2-Dichlorethan. Masuda et al. [Masuda, T., Okano, Y., Kuwane, Y., Higashimura, T., Polymer Journal 12:907-913 (1980)] beschreiben die gleiche Reaktion in weiteren halogenierten Lösungsmitteln oder in Kohlenwasserstoffen. Die Katalysatoren sind so reaktiv, dass die Polymerisatbildung bei Raumtemperatur oder sogar tieferen Temperaturen stattfindet Die Zusammensetzungen sind daher schwierig zu verarbeiten und haben demgemäss keinerlei Bedeutung erlangt.

Masuda et al. [Masuda, T., Kawasaki, M., Okano, Y., Higashimura, T., Polymer Journal 14:371-377 (1982)] erwähnen, dass mit Cokatalysatoren wie zum Beispiel Tetraphenylzinn oder Triethylaluminium die Reaktivität der Molybdän- und Wolframhalogenide bei der Polymerisation von Acetylenen gesteigert werden kann. Ferner wird beschrieben, dass Molybdän- und Wolframhexacarbonyl nach einer Bestrahlung mit UV-Licht während einer Stunde in Gegenwart von $CCl_4$ ein für die Polymerisation von Acetylenen aktives Katalysatorsystem bilden.

Tamura et al. [Tamura, K., Masuda, T., Higashimura, T., Polymer Bulletin 32:289-296 (1994)] beschreiben, dass Molybdän- und Wolframhexacarbonyl zusammen mit Lewissäuren nach der Bestrahlung mit UV-Licht wirksame Initiatoren für die Polymerisation von Acetylenen darstellen.

Gita und Sundarajan [Gita, B., Sundarajan, G., Tetrahedron Letters 34:6123-6126 (1993)] beschreiben die Herstellung von Blockcopolymerisaten durch Metathesepolymerisation von Norbornen und Phenylacetylen unter Verwendung von UV-bestrahltem $W(CO)_6/CCl_4$. Die Herstellung von statischen Polymeren aus Norbornen und Phenylacetylen ist zuvor von Masuda et al. [Masuda, T., Yoshida, T., Makio, H., Rahman, M.Z.A., Higashimura, T., J. Chem. Soc., Chem. Commun. 503-504(1991)] beschrieben worden.

Über eine direkte Photopolymerisation von gegebenenfalls substituierten Acetylenen allein oder zusammen mit gespannten Cycloolefinen ist in der Fachwelt noch nichts bekannt geworden.

Es wurde nun überraschend gefunden, dass nichtflüchtige Acetylene allein oder zusammen mit bestimmten Einkomponentenkatalysatoren unter Licht- und Feuchtigkeitsausschluss lagerstabile Zusammensetzungen darstellen, die durch Einwirkung von aktinischer Strahlung einer Metathesepolymerisation beziehungsweise -copolymerisation unterliegen, wobei die Polymerisate in kurzen Reaktionszeiten und guten bis sehr guten Ausbeuten gebildet werden. Es wurde ferner gefunden, dass es überraschend genügt, die Polymerisation durch Bestrahlung zu initiieren und dann unter Einwirkung von Wärme fortzusetzen. Es wurde auch noch überraschend gefunden, dass die Polymerisation ohne Lösungsmittel durchgeführt werden kann, was breitere Anwendungsmöglichkeiten erschliesst, zum Beispiel die direkte Herstellung von Formteilen durch Massepolymerisation.

Gegenstand der Erfindung ist eine Zusammensetzung aus mindestens einem nichtflüchtigen Acetylen der Formel I,

$$R_a\text{-}C\equiv C\text{-}R_b \qquad \text{(I)},$$

worin

$R_a$ unsubstituiertes oder mit Halogen, -OH, -CN, $-NH_2$, $-NH(C_1\text{-}C_6\text{-Alkyl})$, $-N(C_1\text{-}C_6\text{-Alkyl})_2$, $C_1$-$C_6$-Alkyl, $C_1$-$C_6$-Alkyl-O-, $C_1$-$C_6$-Alkyl-S-, $C_1$-$C_6$-Alkyl-C(O)O-, $C_1$-$C_6$-Alkyl-OC(O)-, -C(O)-$NH_2$, $C_1$-$C_6$-Alkyl-C(O)NH- oder $C_1$-$C_6$-Alkyl-NHC(O)- substituiertes $C_1$-$C_{20}$-Alkyl, $C_3$-$C_{12}$-Cycloalkyl, ($C_3$-$C_{12}$-Cycloalkyl)-$C_1$-$C_{12}$-alkyl, $C_6$-$C_{18}$-Aryl, $C_7$-$C_{19}$-Aralkyl, $C_1$-$C_{20}$-Alkoxy, $C_3$-$C_{12}$-Cycloalkoxy, ($C_3$-$C_{12}$-Cycloalkyl)-$C_1$-$C_{12}$-alkoxy, $C_6$-$C_{18}$-Aryloxy, $C_7$-$C_{19}$-Aralkyloxy, $C_3$-$C_9$-Heterocycloalkyl mit 1 bis 3 Heteroatomen ausgewählt aus der Gruppe O, N und S, oder $C_3$-$C_{15}$-Heteroaryl mit 1 bis 3 Heteroatomen ausgewählt aus der Gruppe O, N und S darstellt, oder $R_a$-$(O)_k$-$SiR_cR_dR_e$, $C_1$-$C_{18}$-Alkyl-OC(O)-, -C(O)-$NH_2$ oder $C_1$-$C_{18}$-Alkyl-NHC(O)- bedeutet;

$R_b$ für Wasserstoff steht oder unabhängig die Bedeutung von $R_a$ hat;

$R_c$, $R_d$ und $R_e$ unabhängig voneinander $C_1$-$C_{18}$-Alkyl, $C_1$-$C_{18}$-Alkoxy $C_5$- oder $C_6$-Cycloalkyl, $C_5$- oder $C_6$-Cycloalkoxy oder unsubstituiertes oder mit $C_1$-$C_6$-Alkyl oder $C_1$-$C_6$-Alkoxy substituiertes Phenyl, Phenyloxy, Benzyl oder Benzyloxy bedeuten; und

k für 0 oder 1 steht;

allein oder zusammen mit einem gespannten Cycloolefin und katalytischen Mengen eines Katalysators zur Metathesepolymerisation,
dadurch gekennzeichnet, dass sie mindestens einen Einkomponentenkatalysator aus der Gruppe Molybdän-, Wolfram-, Niob- und Tantalverbindungen enthält, die (a) entweder mindestens zwei Methylgruppen oder zwei monosubstituierte Methylgruppen ohne $\alpha$-Wasserstoffatome im Substituenten oder (b) wenigstens ein Halogen und nur eine Silylmethylgruppe am Metall gebunden enthalten.

Bei den Cycloolefinen handelt es sich bekannterweise um gespannte Ringe. Cyclohexen kann generell mit Olefin-Metathese nicht polymerisiert werden. Diese Ausnahme ist dem Fachmann bekannt und beispielsweise in Ivin [Ivin, K.J. in: Ivin, K.J., Saegusa, T. (Hrsg.), Ring-Opening Polymerisation 1:139-144 Elsevier Applied Science Publishers, London und New York (1984)] beschrieben.

Bevorzugte Substituenten für $R_a$ und $R_b$ sind -OH, -F, -Cl, -CN, $C_1$-$C_4$-Alkyl und $C_1$-$C_4$-Alkoxy, wie zum Beispiel Methyl, Ethyl, n- oder i-Propyl und n-, i- oder t- Butyl.

$R_a$ und $R_b$ enthalten als Alkyl bevorzugt 1 bis 12 und besonders bevorzugt 1 bis 8 C-Atome, wobei in einer bevorzugten Ausführungsform $R_a$ und $R_b$ unabhängig voneinander für verzweigtes Alkyl stehen. Beispiele sind Methyl, Ethyl, Isopropyl, n-Propyl, n-Butyl, iso-Butyl, sek-Butyl, tert.-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Bei $R_a$ und $R_b$ als Cycloalkyl handelt es sich bevorzugt um $C_5$-$C_8$-Cycloalkyl, besonders um $C_5$- oder $C_6$-Cycloalkyl. Einige Beispiele sind Cyclopropyl, Dimethylcyclopropyl, Cyclobutyl, Cyclopentyl, Methylcyclopentyl, Cyclohexyl, Cycloheptyl und Cyclooctyl.

Bei $R_a$ und $R_b$ als Cycloalkyl-alkyl handelt es sich bevorzugt um $C_5$-$C_8$-Cycloalkyl-$CH_2$-, $C_5$-$C_8$-Cycloakyl-CH($CH_3$)- oder $C_5$-$C_8$-Cycloalkyl-C($CH_3$)$_2$-, besonders um $C_5$- oder $C_6$-Cycloalkyl-$CH_2$. Einige Beispiele sind Cyclopropyl-$CH_2$-, Dimethylcyclopropyl-$CH_2$-, Cyclobutyl-$CH_2$-, Cyclopentyl-$CH_2$-, Cyclopentyl-C($CH_3$)$_2$-, Methylcyclopentyl-$CH_2$-, Cyclohexyl-$CH_2$-, Cyclohexyl-CH($CH_3$)-, Cyclohexyl-C($CH_3$)$_2$-, Cycloheptyl-$CH_2$- und Cyclooctyl-$CH_2$-.

$R_a$ und $R_b$ enthalten als Aryl bevorzugt 6 bis 14 und besonders bevorzugt 6 bis 10 C-Atome. Es kann sich beispielsweise um Phenyl, Methylphenyl, Dimethylphenyl, Trimethylphenyl, Chlorphenyl, Fluorphenyl, Methoxyphenyl und Dimethoxyphenyl, Pentalin, Inden, Naphthalin, Azulin oder Anthracen handeln. Besonders bevorzugt ist unsubstituiertes oder substituiertes Phenyl.

$R_a$ und $R_b$ enthalten als Aralkyl bevorzugt 7 bis 12 C-Atome und besonders bevorzugt 7 bis 10 C-Atome. Es kann sich zum Beispiel um Benzyl, Phenethyl, 3-Phenylpropyl, $\alpha$-Methylbenzyl, Phenbutyl und $\alpha,\alpha$-Dimethylbenzyl. Besonders bevorzugt ist unsubstituiertes oder substituiertes Benzyl wie zum Beispiel Benzyl, Methylbenzyl, Dimethylbenzyl, Trimethylbenzyl, $\alpha$-Methylbenzyl und $\alpha,\alpha$-Dimethylbenzyl.

$R_a$ und $R_b$ enthalten als Heterocycloalkyl bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln, von denen sich $R_a$ und $R_b$ als einwertige Reste ableiten. Das Heterocycloalkyl ist bevorzugt über eines seiner C-Atome an den Acetylenrest gebunden.

$R_a$ und $R_b$ enthalten als Heteroaryl bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin und Chinolin handeln, von denen sich $R_a$ und $R_b$ als einwertige Reste ableiten. Das Heteroaryl ist bevorzugt über eines seiner C-Atome an den Acetylenrest gebunden.

Wenn $R_a$ und $R_b$ Alkoxy, Cycloalkoxy, (Cycloalkyl)-alkoxy, Aryloxy oder Aralkyloxy darstellen, gelten für die Kohlenwasserstoffgruppen in den Oxyresten die gleichen bevorzugten Ausführungsformen wie sie zuvor für Alkyl, Cycloalkyl, Cycloalkyl-alkyl, Aryl und Aralkyl angegeben sind.

Bedeuten $R_c$, $R_d$ und $R_e$ Alkyl oder Alkoxy, so kann es linear oder verzweigt sein und bevorzugt 1 bis 12, besonders bevorzugt 1 bis 8 und insbesondere 1 bis 4 C-Atome enthalten. Besonders bevorzugtes Alkyl ist Methyl und Ethyl. Besonders bevorzugt als Alkoxy sind Methoxy und Ethoxy.

Bevorzugte Substituenten für $R_c$, $R_d$ und $R_e$ als Phenyl, Phenyloxy, Benzyl und Benzyloxy sind im Rahmen der Definitionen Methyl, Ethyl, Methoxy und Ethoxy.

In einer bevorzugten Ausführungsform bedeuten $R_c$, $R_d$ und $R_e$ $C_1$-$C_4$-Alkyl, $C_1$-$C_4$-Alkoxy, Phenyl oder Benzyl.

In der Formel -(O)$_k$-Si$R_cR_dR_e$ steht k bevorzugt für 0.

Einige Beispiele für die Gruppe $R_a$ der Formel -(O)$_k$-Si$R_cR_dR_e$ sind -Si($CH_3$)$_3$, -Si($OCH_3$)$_3$, -Si($C_6H_5$)$_3$, -Si

$(C_2H_5)_3$, $-Si(n-C_3H_7)_3$, $-Si(n-C_4H_9)_3$, $-Si(CH_3)_2(n-C_4H_9)$, $-Si(CH_3)_2(t-C_4H_9)$, $-Si(CH_3)_2(C_2H_5)$, $-Si(CH_3)_2[C(CH_3)_2CH(CH_3)_2]$, $-Si(OC_6H_5)_3$, $-Si(CH_3)_2(n-C_{12}H_{25})$, $-Si(CH_3)_2(n-C_{18}H_{37})$, $-Si(CH_2-C_6H_5)_3$, $-Si(C_6H_5)(CH_3)_2$, $-Si(CH_2-C_6H_5)(CH_3)_2$ und $-Si(OCH_2-C_6H_5)_3$. Ganz besonders bevorzugt ist $-Si(CH_3)_3$.

In einer besonders bevorzugten Ausführungsform stellt zumindest eine der Gruppen $R_a$ und $R_b$ eine sterisch anspruchsvolle Gruppe dar, wie zum Beispiel cyclische Reste und besonders sekundäre oder tertiäre Alkylreste.

Einige Beispiele für Actylene der Formel I sind $CH_3$-C=-CH, $CH_3-C\equiv C-CH_3$, $C_2H_5-C\equiv CH$, n- oder i-$C_3H_7-C\equiv CH$, n-, i- oder t-$C_4H_9-C\equiv CH$, t-$C_4H_9-C\equiv C-CH_3$, $C_4H_9-C\equiv C-C_4H_9$, $C_6H_{11}-C\equiv CH$, $C_6H_5-C\equiv CH$, $C_6H_5C\equiv CC_6H_5$, $HC\equiv C-Si(CH_3)_3$, $(H_3C)_3Si-C\equiv C-Si(CH_3)_3$, $CH_3-C\equiv C-Si(CH_3)_3$, t-$C_4H_9O-C\equiv CH$ und $HC\equiv C-Si(OCH_3)_3$.

Ganz besonders bevorzugte Acetylene sind t-Butylacetylen, Trimethylsilylacetylen und Methyl-trimethylsilylacetylen.

Die Acetylene der Formel I sind bekannt oder können nach bekannten Verfahren hergestellt werden.

Die Acetylene der Formel I können alleine oder zusammen mit gespannten Cycloolefinen als Comonomere einer Photometathesepolymerisation unterworfen werden.

Die erfindungsgemässe Zusammensetzung kann daher zusätzlich nichtflüchtige gespannte Cycloolefine als Comonomere enthalten. So ist es möglich, die Eigenschaften der Polymere gezielt zu modifizieren. Die Menge an Comonomeren kann zum Beispiel von 0,1 bis 99 Gew.-%, bevorzugt 1 bis 95 Gew.-%, bevorzugter 5 bis 90 Gew.-%, besonders bevorzugt 5 bis 75 Gew.-%, und insbesondere bevorzugt 5 bis 60 Gew.-% betragen, bezogen auf die Gesamtmenge der Monomeren.

Bei den cyclischen Olefinen kann es sich um monocyclische oder polycyclische kondensierte, und/oder überbrückte und/oder direkt oder über eine Brückengruppe verbundene Ringsysteme, zum Beispiel mit zwei bis vier Ringen, handeln, die unsubstituiert oder substituiert sind und Heteroatome wie zum Beispiel O, S, N oder Si in einem oder mehreren Ringen und/oder kondensierte aromatische oder heteroaromatische Ringe wie zum Beispiel o-Phenylen, o-Naphthylen, o-Pyridinylen oder o-Pydmidinylen enthalten können. Die einzelnen cyclischen Ringe können 3 bis 16, bevorzugt 3 bis 12 und besonders bevorzugt 3 bis 8 Ringglieder enthalten. Die cyclischen und polycyclischen Olefine können weitere nichtaromatische Doppelbindungen enthalten, je nach Ringgrösse bevorzugt 2 bis 4 solcher zusätzlichen Doppelbindungen. Bei den Ringsubstituenten handelt es sich um solche, die inert sind, das heisst, die die chemische Stabilität und die Thermostabilität der Niob-, Tantal-, Molybdän- und Wolframverbindungen nicht beeinträchtigen. Bei den Cycloolefinen handelt es sich um gespannte Ringe beziehungsweise Ringsysteme.

Thermostabilität bedeutet im Rahmen der Erfindung, dass die photokatalytisch aktiven Niob(V)-, Tantal(V)-, Molybdän(VI)- oder Wolfram(VI)verbindungen unter Erwärmen keine aktiven Spezies für die Metathese-Polymerisation bilden. Der Katalysator kann zum Beispiel bei Raumtemperatur bis leicht erhöhter Temperatur wie etwa + 40°C innerhalb von Wochen unter Lichtausschluß keine Metathese-Polymerisation initiieren. Während dieser Zeit wird nur eine unbedeutende Menge an Monomer (weniger als 0,2 Gew.-%) umgesetzt. Die Thermostabilität kann zum Beispiel bestimmt werden, indem man eine Toluol-Lösung mit 20 Gew.-% Monomer und 0,33 Gew.-% Molybdän-, Wolfram-, Niob- oder Tantalkatalysator bei 50°C 96 Stunden in der Dunkelheit lagert und eine eventuell gebildete Polymermenge, erkennbar am Viskositätsaufbau und durch Ausfällen in einem Fällungsmittel, beispielsweise Ethanol, Filtration und Trocknen quantitativ bestimmbar, nicht mehr als 0,5 Gew.-% und bevorzugt nicht mehr als 0,2 Gew.-% beträgt.

Wenn die cyclischen Olefine mehr als eine Doppelbindung enthalten, zum Beispiel 2 bis 4 Doppelbindungen, können sich abhängig von den Reaktionsbedingungen, dem gewählten Monomer und der Katalysatormenge, auch vernetzte Polymerisate bilden.

In einer bevorzugten Ausführungsform entsprechen die Cycloolefine der Formel II

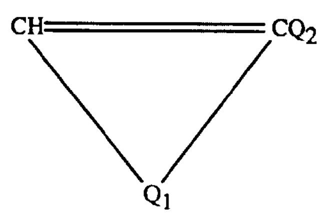

(II),

worin

$Q_1$ ein Rest mit mindestens einem Kohlenstoffatom ist, der zusammen mit der $-CH=CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$,

-COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Arahyl, $C_3$-$C_6$-Heterocycloalkyl, $C_3$-$C_{16}$-Heteroaryl, $C_4$-$C_{16}$-Heteroaralkyl oder $R_4$-X- substituiert ist; oder bei dem zwei benachbarte C-Atome mit -CO-O-CO- oder $-CO-NR_5-CO-$ substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoakyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyakyl, $C_3$-$C_8$-Cycloalkyl, $C_6$-$C_{16}$-Aryl, $C_7$-$C_{16}$-Arakyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder $-C(O)-NR_{12}-$ ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroarakylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

Ankondensierte alicyclische Ringe enthalten bevorzugt 3 bis 8, besonders bevorzugt 4 bis 7 und insbesondere bevorzugt 5 oder 6 Ring-C-Atome.

In den Definitionen der Substituenten können die Alkyl-, Alkenyl- und Alkinylgruppen geradkettig oder verzweigt sein. Dasselbe gilt auch für den bzw. jeden Alkylteil von Alkoxy-, Alkylthio-, Alkoxycarbonyl- und von weiteren Alkyl-enthaltenden Gruppen. Diese Alkylgruppen enthalten bevorzugt 1 bis 12, bevorzugter 1 bis 8 und besonders bevorzugt 1 bis 4 C-Atome. Diese Alkenyl- und Alkinylgruppen enthalten bevorzugt 2 bis 12, bevorzugter 2 bis 8 und besonders bevorzugt 2 bis 4 C-Atome.

Alkyl umfaßt beispielsweise Methyl, Ethyl, Isopropyl, n-Propyl, n-Butyl, iso-Butyl, sekButyl, tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Hydroxyalkyl umfaßt beispielsweise Hydroxymethyl, Hydroxyethyl, 1-Hydroxyisopropyl, 1-Hydroxy-n-Propyl, 2-Hydroxy-n-Butyl, 1-Hydroxy-iso-Butyl, 1-Hydroxy-sek-Butyl, 1-Hydroxy-tert-Butyl sowie die verschiedenen isomeren Pentyl-, Hexyl-, Heptyl-, Octyl-, Nonyl-, Decyl-, Undecyl-, Dodecyl-, Tridecyl-, Tetradecyl, Pentadecyl, Hexadecyl-, Heptadecyl, Octadecyl-, Nonadecyl- und Eicosylradikale.

Halogenalkyl umfaßt beispielsweise Fluormethyl, Difluormethyl, Trifluormethyl, Chlormethyl, Dichlormethyl, Trichlormethyl, 2,2,2-Trifluorethyl, 2-Fluorethyl, 2-Chlorethyl, 2,2,2-Trichlorethyl sowie halogenierte, besonders fluorierte oder chlorierte Alkane, wie zum Beispiel der Isopropyl-, n-Propyl-, n-Butyl-, iso-Butyl-, sek-Butyl-, tert-Butyl-, und der verschiedenen isomeren Pentyl-, Hexyl-, Heptyl-, Octyl-, Nonyl-, Decyl-, Undecyl-, Dodecyl-, Tridecyl-, Tetradecyl-, Pentadecyl-, Hexadecyl-, Heptadecyl-, Octadecyl-, Nonadecyl- und Eicosylradikale.

Alkenyl umfaßt zum Beispiel Propenyl, Isopropenyl, 2-Butenyl, 3-Butenyl, Isobutenyl, n-Penta-2,4-dienyl, 3-Methyl-but-2-enyl, n-Oct-2-enyl, n-Dodec-2-enyl, iso-Dodecenyl, n-Octadec-2-enyl, n-Octadec-4-enyl.

Beim Cycloalkyl handelt es sich bevorzugt um $C_5$-$C_8$-Cycloalkyl, besonders um $C_5$- oder $C_6$-Cycloalkyl. Einige

Beispiele sind Cyclopropyl, Dimethylcyclopropyl, Cyclobutyl, Cyclopentyl, Methylcyclopentyl, Cyclohexyl, Cycloheptyl und Cyclooctyl.

Cyanoalkyl umfaßt beispielsweise Cyanomethyl (Methylnitril), Cyanoethyl (Ethylnitril), 1-Cyanoisopropyl, 1-Cyano-n-Propyl, 2-Cyano-n-Butyl, 1-Cyano-iso-Butyl, 1-Cyano-sek-Butyl, 1-Cyano-tert-Butyl sowie die verschiedenen isomeren Cyanopentyl- und -hexylreste.

Aralkyl enthält bevorzugt 7 bis 12 C-Atome und besonders bevorzugt 7 bis 10 C-Atome. Es kann sich zum Beispiel um Benzyl, Phenethyl, 3-Phenylpropyl, $\alpha$-Methylbenzyl, Phenbutyl oder $\alpha,\alpha$-Dimethylbenzyl handeln.

Aryl enthält bevorzugt 6 bis 10 C-Atome. Es kann sich beispielsweise um Phenyl, Pentalin, Inden, Naphthalin, Azulin oder Anthracen handeln.

Heteroaryl enthält bevorzugt 4 oder 5 C-Atome und ein oder zwei Heteroatome aus der Gruppe O, S und N. Es kann sich beispielsweise um Pyrrol, Furan, Thiophen, Oxazol, Thiazol, Pyridin, Pyrazin, Pyrimidin, Pyridazin, Indol, Purin oder Chinolin handeln.

Heterocycloalkyl enthält bevorzugt 4 oder 5 C-Atome und ein oder zwei Heteroatome aus der Gruppe O, S und N. Es kann sich beispielsweise um Oxiran, Azirin, 1,2-Oxathiolan, Pyrazolin, Pyrrolidin, Piperidin, Piperazin, Morpholin, Tetrahydrofuran oder Tetrahydrothiophen handeln.

Alkoxy ist beispielsweise Methoxy, Ethoxy, Propyloxy, i-Propyloxy, n-Butyloxy, i-Butyloxy, sek.-Butyloxy und t-Butyloxy.

Unter Alkalimetall ist im Rahmen der vorliegenden Erfindung Lithium, Natrium, Kalium, Rubidium und Cäsium, insbesondere Lithium, Natrium und Kalium zu verstehen.

Unter Erdalkalimetall ist im Rahmen der vorliegenden Erfindung Beryllium, Magnesium, Calcium, Strontium und Barium, insbesondere Magnesium und Calcium zu verstehen.

In den obigen Definitionen ist unter Halogen, Fluor, Chlor, Brom und Jod vorzugsweise Fluor, Chlor und Brom zu verstehen.

Besonders geeignete Verbindungen der Formel II sind jene, worin $Q_2$ Wasserstoff bedeutet.

Ferner sind Verbindungen der Formel II bevorzugt, worin der alicyclische Ring, den $Q_1$ zusammen mit der $-CH=CQ_2-$ Gruppe bildet, 3 bis 16, bevorzugter 3 bis 12 und besonders bevorzugt 3 bis 8 Ringatome aufweist, und wobei es sich um ein monocyclisches, bicyclisches, tricyclisches oder tetracyclisches Ringsystem handeln kann.

Mit besonderem Vorteil enthält die erfindungsgemäße Zusammensetzung Verbindungen der Formel II, worin

| | |
|---|---|
| $Q_1$ | ein Rest mit mindestens einem Kohlenstoffatom ist, der zusammen mit der $-CH=CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_5$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_4$-X- substituiert ist; oder bei dem zwei benachbarte C-Atome in diesem Rest $Q_1$ mit -CO-O-CO- oder $-CO-NR_5-CO-$ substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist; |
| X und $X_1$ | unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen; |
| $R_1$, $R_2$ und $R_3$ | unabhängig voneinander $C_1$-$C_6$-Alkyl, $C_1$-$C_6$-Perfluoralkyl, Phenyl oder Benzyl bedeuten; |
| M | für ein Alkalimetall und $M_1$ für ein Erdalkalimetall stehen; |
| $R_4$ und $R_{13}$ | unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten; |
| $R_5$ und $R_{10}$ | unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind; |
| $R_6$, $R_7$ und $R_8$ | unabhängig voneinander $C_1$-$C_6$-Alkyl, $C_1$-$C_6$-Perfluoralkyl, Phenyl oder Benzyl darstellen; |
| u | für 0 oder 1 steht; |

wobei der mit $Q_1$ gebildete alicyclische Ring gegebenenfalls weitere nichtaromatische Doppelbindungen enthält;

| | |
|---|---|
| $Q_2$ | Wasserstoff, $C_1$-$C_{12}$-Alkyl, $C_1$-$C_{12}$-Halogenalkyl, $C_1$-$C_6$-Alkoxy, Halogen, -CN, $R_{11}$-$X_2$- bedeutet; |
| $R_{11}$ | $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt; |

$X_2$ -C(O)-O- oder -C(O)-$NR_{12}$- ist; und
$R_{12}$ Wasserstoff, $C_1$-$C_6$-Alkyl, Phenyl oder Benzyl bedeutet;

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, -$NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und

$R_9$ Wasserstoff, $C_1$-$C_6$-Alkyl, Phenyl oder Benzyl bedeutet.

Aus dieser Gruppe sind diejenigen Verbindungen der Formel II bevorzugt, worin

| | |
|---|---|
| $Q_1$ | ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoakyl, $C_3$-$C_6$-Cycloalkyl, Phenyl, Benzyl oder $R_{13}$-$X_1$- substituiert ist; |
| $R_1$, $R_2$ und $R_3$ | unabhängig voneinander $C_1$-$C_4$-Alkyl, $C_1$-$C_4$-Perfluoralkyl, Phenyl oder Benzyl bedeuten; |
| M | für ein Alkalimetall und $M_1$ für ein Erdalkalimetall stehen; |
| $R_4$ und $R_{13}$ | unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten; |
| X und $X_1$ | unabhängig voneinander für -O-, -S-, -CO-, -SO- oder -$SO_2$- stehen; |
| $R_6$, $R_7$ und $R_8$ | unabhängig voneinander $C_1$-$C_4$-Alkyl, $C_1$-$C_4$-Perfluoralkyl, Phenyl oder Benzyl darstellen; |

und $Q_2$ Wasserstoff bedeutet.

Insbesondere eignet sich das erfindungsgemäße Verfahren zur Polymerisation von Norbornen und Norbornenderivaten. Von diesen Norbornenderivaten sind diejenigen besonders bevorzugt, die entweder der Formel III

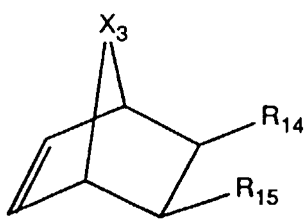

(III),

worin

| | |
|---|---|
| $X_3$ | -$CHR_{16}$-, Sauerstoff oder Schwefel; |
| $R_{14}$ und $R_{15}$ | unabhängig voneinander Wasserstoff, -CN, Trifluormethyl, $(CH_3)_3$Si-O-, $(CH_3)_3$Si- oder -$COOR_{17}$; und |
| $R_{16}$ und $R_{17}$ | unabhängig voneinander Wasserstoff, $C_1$-$C_{12}$-Alkyl, Phenyl oder Benzyl bedeuten; |

oder der Formel IV

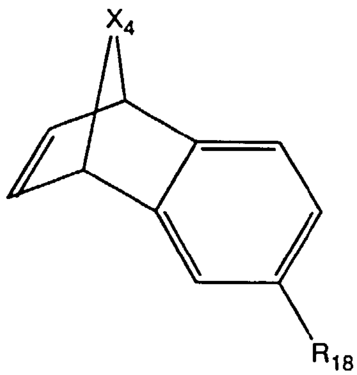

(IV)

worin

$X_4$ $-CHR_{19}-$, Sauerstoff oder Schwefel;
$R_{19}$ Wasserstoff, $C_1$-$C_{12}$-Alkyl, Phenyl oder Benzyl; und
$R_{18}$ Wasserstoff, $C_1$-$C_6$-Alkyl oder Halogen bedeuten;

oder der Formel V

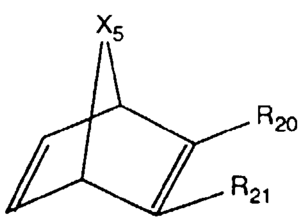

(V),

worin

$X_5$ $-CHR_{22}-$, Sauerstoff oder Schwefel;
$R_{22}$ Wasserstoff, $C_1$-$C_{12}$-Alkyl, Phenyl oder Benzyl;
$R_{20}$ und $R_{21}$ unabhängig voneinander Wasserstoff, CN, Trifluormethyl, $(CH_3)_3Si-O-$, $(CH_3)_3Si-$ oder $-COOR_{23}$; und
$R_{23}$ Wasserstoff, $C_1$-$C_{12}$-Alkyl, Phenyl oder Benzyl bedeuten;

oder der Formel VI entsprechen,

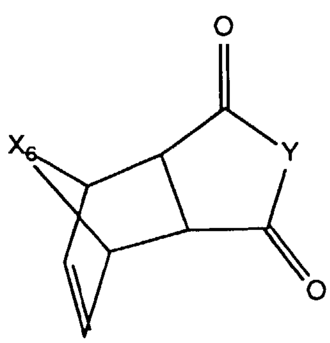

(VI),

worin

$X_6$ $-CHR_{24}-$, Sauerstoff oder Schwefel;

$R_{24}$ Wasserstoff, $C_1$-$C_{12}$-Alkyl, Phenyl oder Benzyl;
Y Sauerstoff oder $\rangle$N-$R_{25}$; und
$R_{25}$ Wasserstoff, Methyl, Ethyl oder Phenyl bedeuten.

Folgende Verbindungen sind für das erfindungsgemäße Polymerisationsverfahren besonders gut geeignet, wobei bi- und polycyclische Systeme durch Diels-Alder-Reaktionen zugänglich sind:

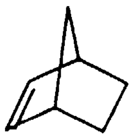 (1),

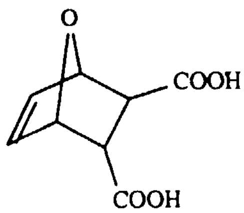 (2),

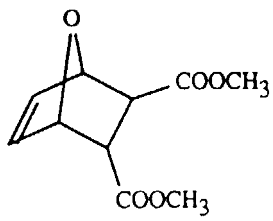 (3),

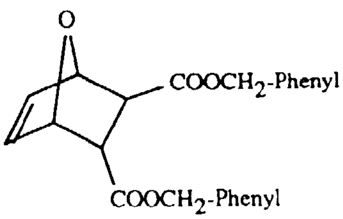 (4),

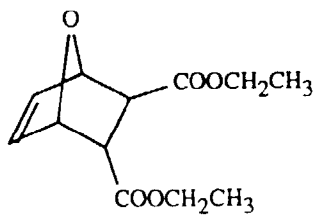 (5),

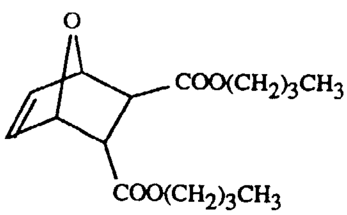 (6),

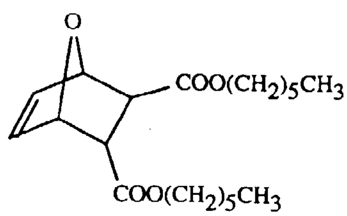 (7),

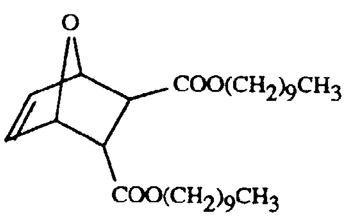 (8),

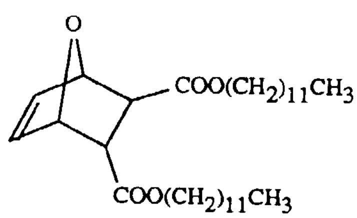 (9),

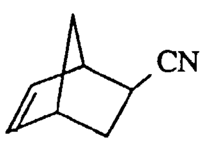 (10),

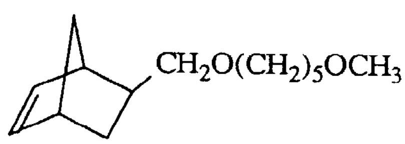 (11),

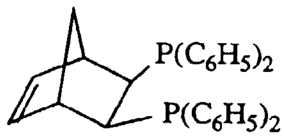

(12),

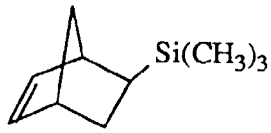

(13),

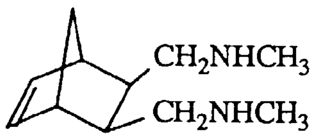

(14),

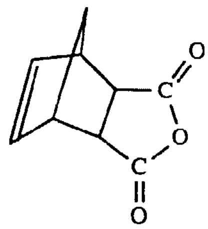

(15),

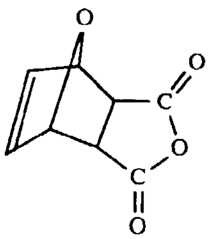

(16),

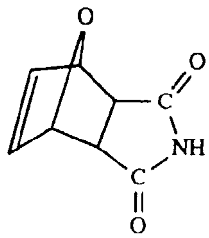

(17),

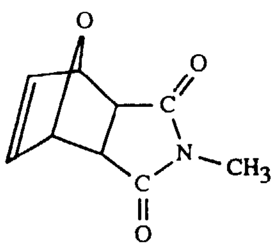

(18),

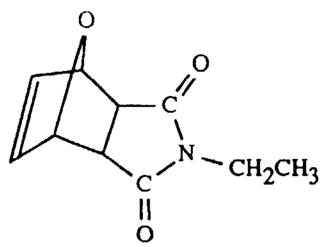

(19),

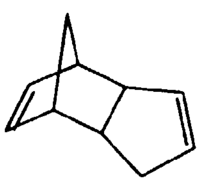

(20),

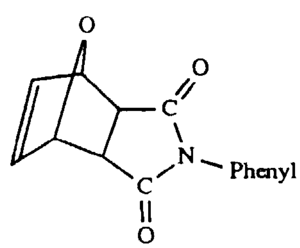

(21),

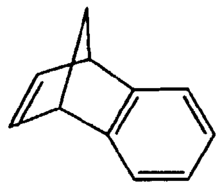 (22), 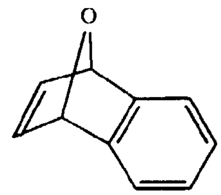 (23),

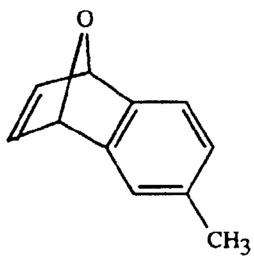 (24), 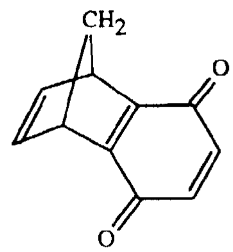 (25),

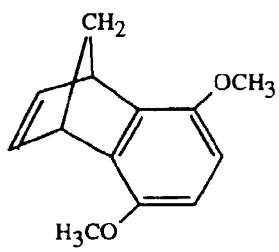 (26), 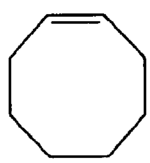 (27), 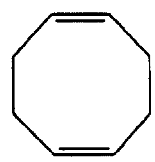 (28),

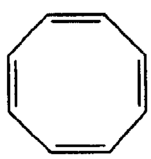 (29), 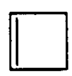 (30), 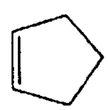 (31),

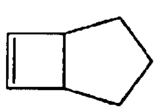 (32), 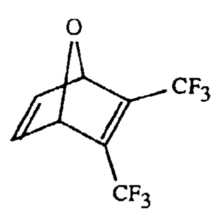 (33), 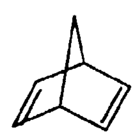 (34),

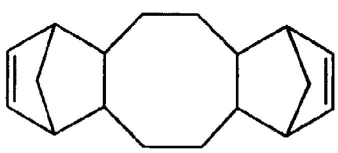 (35), 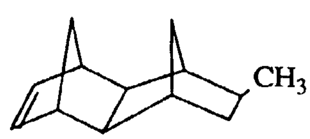 (36),

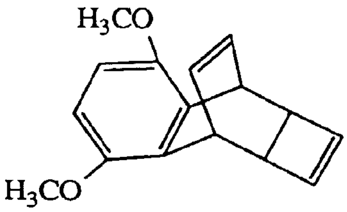 (37), 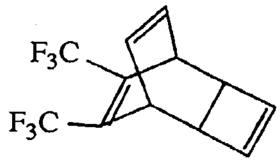 (38),

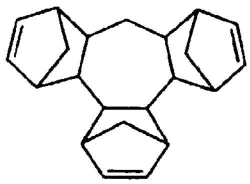 (39), 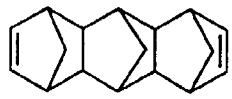 (40),

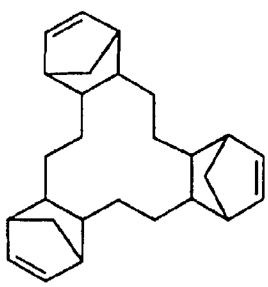 (41), 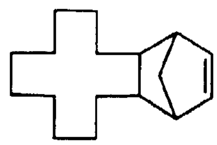 (42),

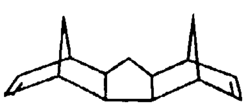 (43), 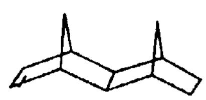 (44),

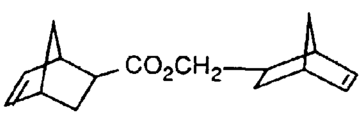 (45) und 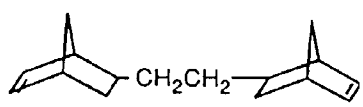 (46).

In einer bevorzugten Ausführungsform enthält die erfindungsgemässe Zusammensetzung gespannte Cycloolefine als Comonomere, die nur aus Kohlenstoff und Wasserstoff aufgebaut sind.

Ganz besonders bevorzugte Comonomere sind ausgewählt aus der Gruppe bestehend aus Norbornen, Cyclopenten, Cyclohepten und Cycloocten.

Die erfindungsgemäss zu verwendenden Niob(V)- und Tantal(V)verbindungen enthalten ein Metallatom. Bei den erfindungsgemäss zu verwendenden Molybdän(VI)- und Wolfram(VI)-Verbindungen kann es sich um solche handeln, die ein Metallatom oder zwei über eine Einfach-, Doppel- oder Dreifachbindung verbundene Metallatome enthalten.

Wenn am Metall eine Methylgruppe oder eine monosubstituierte Methylgruppe ohne $\alpha$-Wasserstoffatome im Substituenten gebunden ist, so ist sie mindestens zweimal, besonders bevorzugt zwei- bis fünfmal und insbesondere bevorzugt zwei- oder dreimal als Ligand gebunden. Die am Metallatom gebundene Gruppe entspricht bevorzugt der Formel VII

$$-CH_2-R \quad (VII),$$

worin

$R$ H, $-CF_3$, $-CR_{26}R_{27}R_{28}$, $-SiR_{29}R_3OR_{31}$, unsubstituiertes oder mit $C_1$-$C_6$-Alkyl oder $C_1$-$C_6$-Alkoxy substituiertes $C_6$-$C_{16}$-Aryl oder $C_4$-$C_{15}$-Heteroaryl mit 1 bis 3 Heteroatomen aus der Gruppe O, S und N darstellt; und

$R_{26}$, $R_{27}$ und $R_{28}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy substituiert ist; und

$R_{26}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

Bedeuten $R_{26}$ bis $R_{31}$ Alkyl, so kann es linear oder verzweigt sein und bevorzugt 1 bis 8 und besonders bevorzugt 1 bis 4 C-Atome enthalten. Bedeuten $R_{28}$ bis $R_{31}$ Aryl, so handelt es sich bevorzugt um Phenyl oder Naphthyl.
Bedeutet R in Formel VII Aryl, so handelt es sich bevorzugt um Phenyl oder Naphthyl. Bedeutet R in Formel VII Heteroaryl, so handelt es sich bevorzugt um Pyridinyl, Furanyl, Thiophenyl oder Pyrrolyl.
Bevorzugte Substituenten für $R_{26}$ bis $R_{31}$ sind im Rahmen der Definitionen Methyl, Ethyl, Methoxy und Ethoxy. Beispiele für die Reste $R_{26}$ bis $R_{31}$ sind zuvor unter den Verbindungen der Formel I angegeben worden.
In einer bevorzugten Ausführungsform bedeutet die Gruppe R in Formel VII H, $-C(CH_3)_3$, $-C(CH_3)_2C_6H_5$, unsubstituiertes oder mit Methyl, Ethyl, Methoxy oder Ethoxy substituiertes Phenyl, $-CF_3$ oder $-Si(CH_3)_3$.
Wenn wenigstens ein Halogen und eine Silylmethylgruppe an das Metallatom gebunden sind, entspricht die Silylmethylgruppe bevorzugt der Formel VIIa,

$$-CH_2-SiR_{29}R_{30}R_{31} \quad (VIIa),$$

worin

$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten. Das Halogen ist in diesem Fall bevorzugt Cl oder Br.

Bedeuten $R_{29}$ bis $R_{31}$ Alkyl, so kann es linear oder verzweigt sein und bevorzugt 1 bis 12, besonders bevorzugt 1 bis 8 und insbesondere 1 bis 4 C-Atome enthalten. Besonders bevorzugt als Alkyl sind Methyl und Ethyl.
Bevorzugte Substituenten für $R_{29}$ bis $R_{31}$ als Phenyl und Benzyl sind im Rahmen der Definitionen Methyl, Ethyl, Methoxy und Ethoxy.
In einer bevorzugten Ausführungsform bedeuten in der Gruppe der Formel VIIa $R_{29}$ bis $R_{31}$ $C_1$-$C_4$-Alkyl, Phenyl oder Benzyl.
Einige Beispiele für die Gruppe der Formel VIIa sind $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si(CH_3)_2[C(CH_3)_2CH(CH_3)_2]$, $-CH_2-Si(CH_3)_2(n-C_{12}H_{25})$, $-CH_2-Si(CH_3)_2(n-C_{18}H_{37})$, $-CH_2-Si(C_6H_5)_3$, $-CH_2-Si(CH_2-C_6H_5)_3$, $-CH_2-Si(C_6H_5)(CH_3)_2$ und $-CH_2-Si(CH_2-C_6H_5)(CH_3)_2$. Ganz besonders bevorzugt ist $-CH_2-Si(CH_3)_3$,
**[0069]** Die übrigen Valenzen des Molybdäns, Wolframs, Niobs und Tantals sind bevorzugt mit thermostabilen Neutralliganden abgesättigt, wobei deren Zahl die stöchiometrisch mögliche Zahl überschreiten kann (Solvate). Es handelt sich vorteilhafterweise um gleiche oder verschiedene Liganden aus der Gruppe bestehend aus =O, $=N-R_{33}$, sekundären Aminen mit 2 bis 18 C-Atomen, $R_{32}O$-, $R_{32}S$-, Halogen, gegebenenfalls substituiertem Cyclopentadienyl, überbrücktem Biscyclopentadienyl, tridentaten monoanionischen Liganden und Neutralliganden, wie zum Beispiel Ethern, Nitrilen, CO und tertiären Phosphinen und Aminen, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)anüno, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-

$C_6$-Alkoxymethyl-, $C_1$-$C_6$-Alkoxyethyl- oder Halogen substituiertes Benzyl oder Phenylethyl bedeutet.

Sekundäre Amine sind bevorzugt solche der Formel $R_{34}R_{35}N$-, worin $R_{34}$ und $R_{35}$ unabhängig voneinander lineares oder verzweigtes $C_1$-$C_{18}$-Alkyl, $C_5$- oder $C_6$-Cycloalkyl, unsubstituiertes oder mit $C_1$-$C_6$-Alkoxy oder Halogen substituiertes Benzyl oder Phenylethyl oder $(C_1$-$C_6$-alkyl$)_3Si$; oder zusammen Tetramethylen, Pentamethylen oder 3-Oxapentan-1,5-diyl bedeuten. Das Alkyl enthält bevorzugt 1 bis 12 und besonders bevorzugt 1 bis 6 C-Atome. Einige Beispiele sind Dimethyl-, Diethyl-, Di-n-propyl-, Di-i-propyl-, Di-n-butyl-, Methyl-ethyl-, Dibenzyl-, Benzyl-methyl-, Diphenyl-, Phenyl-methylamino und Di(trimethylsilyl)amino.

Halogen als Ligand oder Substituent ist bevorzugt F oder Cl, besonders bevorzugt Cl.

Das Cyclopentadienyl kann unsubstituiert oder mit ein bis fünf $C_1$-$C_4$-Alkyl, besonders Methyl, oder -Si($C_1$-$C_4$-Alkyl), besonders $-Si(CH_3)_3$ substituiert sein. Überbrückte Cyclopentadienyle sind besonders solche der Formel $R_{36}$-A-$R_{36}$, worin $R_{36}$ unsubstituienes oder mit ein bis fünf $C_1$-$C_4$-Alkyl, besonders Methyl, oder -Si($C_1$-$C_4$-Alkyl), besonders $-Si(CH_3)_3$ substituiertes Cyclopentadienyl darstellt und A für $-CH_2-CH_2-$, $-Si(CH_3)_2-$, $-CH_2-$, $-Si(CH_3)_2-Si(CH_3)_2-$ oder $-Si(CH_3)_2-O-Si(CH_3)_2-$ steht. Besonders bevorzugt sind aus dieser Gruppe unsubstituiertes Cyclopentadienyl und Indenyl.

Bei Ethern als Neutralliganden kann es sich um Dialkylether mit 2 bis 8 C-Atomen oder cyclische Ether mit 5 oder 6 Ringgliedern handeln. Einige Beispiele sind Diethylether, Methylethylether, Diethylether, Di-n-propylether, Di-i-propylether, Di-n-butylether, Ethylenglykoldimethylether, Tetrahydrofuran und Dioxan.

Bei Nitrilen als Neutralliganden kann es sich um aliphatische oder aromatische Nitrile mit 1 bis 12, vorzugsweise 1 bis 8 C-Atomen handeln. Einige Beispiele sind Acetonitril, Propionitril, Butylnitril, Benzonitril und Benzylnitril.

Bei tertiären Aminen und Phosphinen als Neutralliganden kann es sich um solche mit 3 bis 24, vorzugsweise 3 bis 18 C-Atomen handeln. Einige Beispiele sind Trimethylamin und -phosphin, Triethylamin und -phosphin, Tri-n-propylamin und -phosphin, Tri-n-butylamin und -phosphin, Triphenylamin und -phosphin, Tricyclohexylamin und -phosphin, Phenyldimethylamin und -phosphin, Benzyldimethylamin und -phosphin, 2,6-Dimethylphenyl-dimethylamin und -phosphin.

Bei den tridentaten monoanionischen Liganden kann es sich zum Beispiel um Hydro(trispyrazol-1-yl)borate oder Alkyl(trispyrazol-1-yl)borate, die unsubstituiert oder mit ein bis drei $C_1$-$C_4$-Alkyl substituiert sind [siehe Trofimenko, S., Chem Rev., 93:943-980 (1993)], oder um $[C_5(R'_5)Co(R_{37}R_{38}P{=}{-}O)_3]^{\ominus}$, worin R' H oder Methyl und $R_{37}$ sowie $R_{38}$ unabhängig voneinander $C_1$-$C_4$-Alkyl, $C_1$-$C_4$-Alkoxy oder Phenyl bedeuten [siehe Kläui, W., Angew. Chem. 102: 661-670(1990)], handeln.

Bei Halogen als Substituent für die Reste $R_{32}$ und $R_{33}$ handelt es sich bevorzugt um Fluor und besonders bevorzugt um Chlor. Die Substituenten Alkyl, Alkoxy oder Alkoxy im Alkoxymethyl oder -ethyl enthalten bevorzugt 1 bis 4 und besonders 1 oder 2 C-Atome. Beispiele sind Methyl, Ethyl, n- und i-Propyl, n-, i- und t-Butyl, Methoxy, Ethoxy, n- und i-Propyloxy und n-, i- und t-Butyloxy.

$R_{32}$ und $R_{33}$ enthalten als Alkyl bevorzugt 1 bis 12, besonders bevorzugt 1 bis 8, und insbesondere bevorzugt 1 bis 4 C-Atome. Bevorzugt handelt es sich um verzweigtes Alkyl.

Einige Beispiele für $R_{32}$ sind Methoxy, Ethoxy, n- und i-Propyloxy, n-, i- und t-Butyloxy, Hexafluor-i-propyloxy und Hexa- sowie Perfluorbutyloxy.

Einige Beispiele für substituiertes Phenyl und Benzyl für $R_{32}$ und $R_{33}$ sind p-Methylphenyl oder Benzyl, p-Fluor- oder p-Chlorphenyl oder -benzyl, p-Ethylphenyl oder -benzyl, p-n- oder i-Propylphenyl oder -benzyl, p-i-Butylphenyl oder -benzyl, 3-Methylphenyl oder -benzyl, 3-i-Propylphenyl oder -benzyl, 2,6-Dimethylphenyl oder -benzyl, 2,6-i-Propylphenyl oder -benzyl, 2,6-n- oder -t-Butylphenyl und -benzyl. $R_{33}$ stellt besonders bevorzugt unsubstituiertes oder mit $C_1$-$C_4$-Alkyl oder $C_1$-$C_4$-Alkoxy substituiertes Phenyl dar.

Bei dem Bisphenolat kann es sich um Liganden der Formel

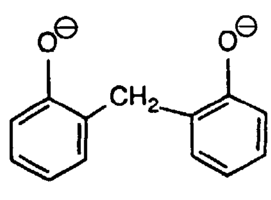

handeln, die unsubstituiert sind oder bei denen die Benzolringe mit ein oder zwei $C_1$-$C_4$-Alkyl substituiert sind.

In einer bevorzugten Ausführungsform entsprechen die Molybdän-, Wolfram-, Niob- und Tantalverbindungen besonders den Formeln VIII bis VIIId,

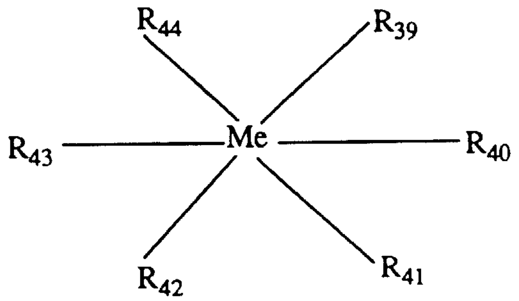

(VIII),

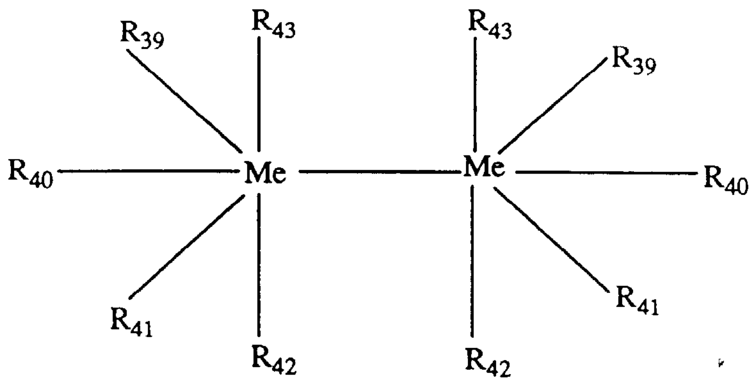

(VIIIa),

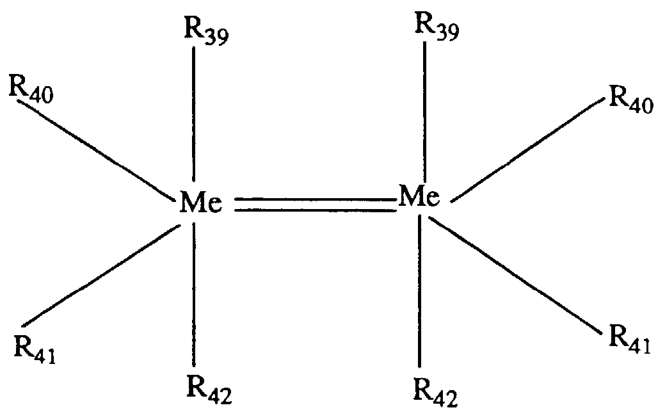

(VIIIb),

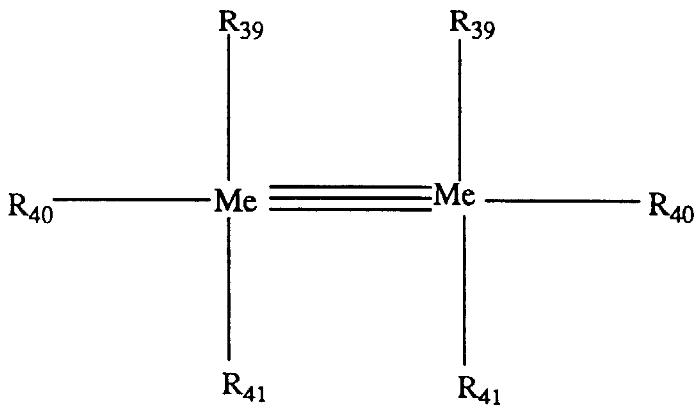

(VIIIc),

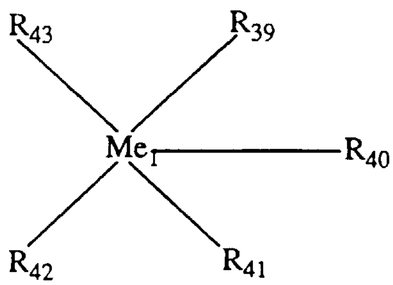

(VIIId),

worin

Me für Mo(VI) oder W(VI) steht,

$Me_1$ für Nb(V) oder Ta(V) steht,

mindestens zwei, bevorzugt 2 oder 3, der Reste $R_{39}$ bis $R_{43}$ einen Rest $-CH_2-R$ der Formel VII bedeuten, R H, $-CF_3$, $-CR_{26}R_{27}R_{28}$, $-SiR_{29}R_3OR_{31}$, unsubstituiertes oder mit $C_1$-$C_6$-Alkyl oder $C_1$-$C_6$-Alkoxy substituiertes $C_6$-$C_{16}$-Aryl oder $C_4$-$C_{15}$-Heteroaryl mit 1 bis 3 Heteroatomen aus der Gruppe O, S und N darstellt;

$R_{26}$, $R_{27}$ und $R_{28}$ unabhängig voneinander $C_1$-$C_{10}$-Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy substituiert ist; und

$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

je zwei der übrigen Reste von $R_{39}$ bis $R_{43}$ =O oder $=N-R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder

die übrigen Reste von $R_{39}$ bis $R_{43}$ Sekundäramino mit 2 bis 18 C-Atomen, $R_{32}O$- oder $R_{32}S$-, Halogen, Indenyl, Cyclopentadienyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

Für die Reste R und $R_{26}$ bis $R_{33}$ gelten die zuvor angegebenen Bevorzugungen.

In einer besonders bevorzugten Ausführungsform werden in der erfindungsgemässen Zusammensetzung Molybdän- und Wolframverbindungen der Formel VIII verwendet, worin

a) $R_{39}$ bis $R_{44}$ einen Rest der Formel VII $-CH_2-R$ bedeuten, oder
b) $R_{39}$ und $R_{40}$ einen Rest der Formel VII $-CH_2-R$ darstellen, $R_{41}$ und $R_{42}$ zusammen den Rest $=N-R_{33}$ bedeuten, und $R_{43}$ und $R_{44}$ zusammen unabhängig voneinander $R_{32}$-O- oder Halogen darstellen, oder
c) $R_{43}$ und $R_{44}$ zusammen und $R_{41}$ und $R_{42}$ zusammen den Rest $=N-R_{33}$ bedeuten, und $R_{39}$ und $R_{40}$ einen Rest der Formel VII $-CH_2-R$ darstellen,

wobei R, $R_{32}$ und $R_{33}$ die voranstehenden Bedeutungen haben. Für R, $R_{32}$ und $R_{33}$ gelten die voranstehenden Bevorzugungen.

Unter den Verbindungen der Formel VIIIc sind besonders jene bevorzugt, worin $R_{39}$, $R_{40}$ und $R_{41}$ einen Rest der Formel VIIa darstellen, wobei es sich bei dem Rest der Formel VIIa besonders bevorzugt um $-CH_2-Si(C_1-C_4\text{-Alkyl})_3$ handelt.

Ganz besonders bevorzugt werden in der erfindungsgemässen Zusammensetzung Molybdän- und Wolframverbindungen der Formeln IX, IXa oder IXb verwendet,

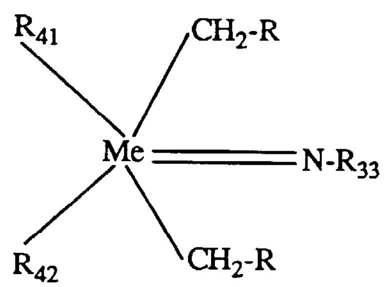

(IX),

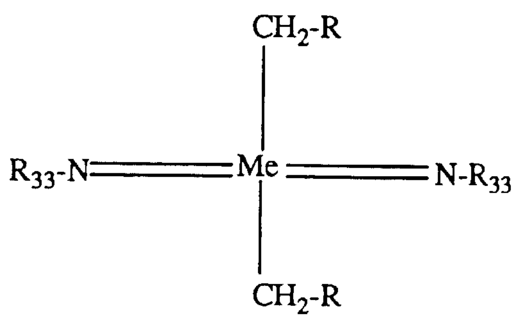

(IXa),

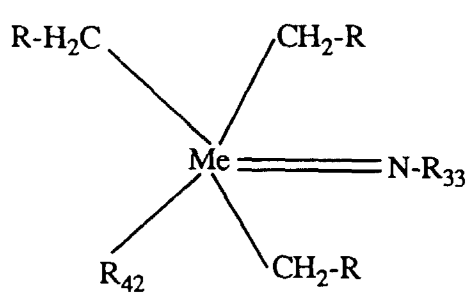

(IXb),

worin

Me für Mo(VI) oder W(VI) steht,

R H, $-C(CH_3)_3$, $-C(CH_3)_2-C_6H_5$, $-C_6H_5$ oder $-Si(C_1-C_4\text{-Alkyl})_3$ darstellt,
$R_{33}$ Phenyl oder mit 1 bis 3 $C_1$-$C_4$-Alkyl oder $C_1$-$C_4$-Alkoxy substituiertes Phenyl bedeutet,
$R_{41}$ unsubstituiertes oder mit Fluor substituiertes lineares oder besonders verzweigtes $C_1$-$C_4$-Alkoxy darstellt, und
$R_{42}$ die gleiche Bedeutung wie $R_{41}$ hat oder für F, Cl oder Br steht. $R_{41}$ stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpropyloxy und Nonafluorpropyloxy. Bei $R_{42}$ handelt es sich bevorzugt um Cl.

In einer anderen besonders bevorzugten Ausführungsform enthält die erfindungsgemässe Zusammensetzung Niob- und Tantalverbindungen der Formel VIIId, worin

a) $R_{39}$ bis $R_{43}$ einen Rest der Formel VII $-CH_2-R$ bedeuten, oder
b) $R_{39}$ und $R_{40}$ einen Rest der Formel VII $-CH_2-R$ darstellen, $R_{41}$ und $R_{42}$ zusammen den Rest $=N-R_{33}$ bedeuten, und $R_{43}$ unsubstituiertes oder substituiertes Cyclopentadienyl, Indenyl, $R_{32}$-O- oder Halogen darstellt, oder
c) $R_{39}$, $R_{40}$ und $R_{41}$ einen Rest der Formel VII $-CH_2-R$ darstellen, und $R_{42}$ und $R_{43}$ zusammen den Rest $=N-R_{33}$ bedeuten, oder

$R_{39}$, $R_{40}$, $R_{41}$ und $R_{42}$ einen Rest der Formel VII $-CH_2-R$ darstellen, und $R_{43}$ unsubstituiertes oder substituiertes Cyclopentadienyl oder Indenyl, $R_{32}$-O- oder Halogen bedeutet, wobei R, $R_{32}$ und $R_{33}$ die voranstehenden Bedeutungen haben. Für R, $R_{32}$ und $R_{33}$ gelten die voranstehenden Bevorzugungen.

Ganz besonders bevorzugt werden in der erfindungsgemässen Zusammensetzung Niob- oder Tantalverbindungen der Formeln IXc, IXd oder IXe verwendet,

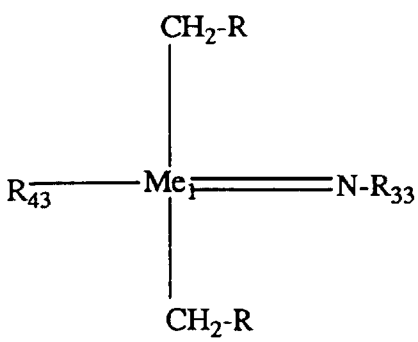 (IXc), 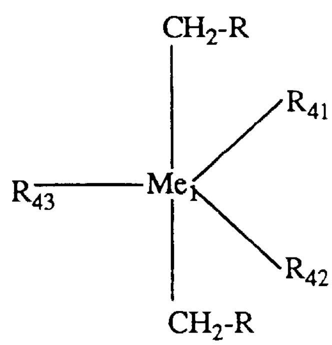 (IXd),

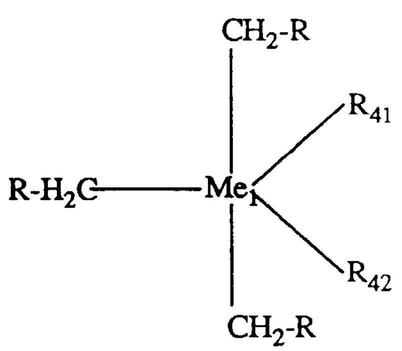 (IXe),

worin

$Me_1$ für Nb(V) oder Ta(V) steht,
R H, $-C(CH_3)_3$, $-C(CH_3)_2-C_6H_5$, $-C_6H_5$ oder $-Si(C_1-C_4\text{-Alkyl})_3$ darstellt,
$R_{33}$ Phenyl oder mit 1 bis 3 $C_1$-$C_4$-Alkyl oder $C_1$-$C_4$-Alkoxy substituiertes Phenyl bedeutet,
$R_{43}$ in Formel IXc die Gruppe $-CH_2-R$ oder F, Cl, Br, unsubstituiertes oder mit Fluor substituiertes lineares oder

besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl darstellt;
$R_{41}$, $R_{42}$ und $R_{43}$ in Formel IXd unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl bedeuten; und $R_{41}$ und $R_{42}$ in Formel IXe unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpropyloxy und Nonafluorpropyloxy.

Eine bevorzugte Untergruppe bei den Molybdän-, Wolfram-, Niob- und Tantalverbindungen sind solche, worin mindestens ein Halogen aus der Gruppe F, Cl, Br und I an das Metallatom gebunden ist, wenn zwei der Reste der Formel VIIa die Gruppe $-CH_2-SiR_{29}R_{30}R_{31}$ darstellt, wobei für $R_{29}$, $R_{30}$ und $R_{31}$ die voranstehenden Bevorzugungen gelten.

Einige Beispiele für Molybdän- und Wolframverbindungen sind:
$W(=N-C_6H_5)(OC(CH_3)_3)(Cl)[(CH_2Si(CH_3)_3)]_2$, $W(=NC_6H_5)[CH_2Si(CH_3)_3]_3Cl$, $W(=N-C_6H_5)(OC(CF_3)_2CH_3)_2[(CH_2Si(CH_3)_3)]_2$, $[(CH_3)_3SiCH_2]_3Mo{\equiv}Mo[CH_2Si(CH_3)_3]_3$, Mo(=N-2,6-diisopropyl$C_6H_3)_2[(CH_2C(CH_3)_2-C_6H_5)]_2$, Mo(=N-2,6-diisopropyl$C_6H_3)_2[(CH_2-C_6H_5)]_2$, Mo(=N-2,6-dimethyl$C_6H_3)_2[(CH_2-C_6H_5)]_2$ und Mo(=N-2,6-dimethyl$C_6H_3)_2(CH_3)_2$ (Tetrahydrofuran).

Einige Beispiele für Niob(V)- und Tantal(V)verbindungen sind [Cp bedeutet Cyclopentadienyl und Me bedeutet Nb(V) oder Ta(V)]:
$Me[CH_2Si(CH_3)_3]_3Cl_2$, $CpMe[OCCH_3(CF_3)_2]_2[CH_2-C_6H_5]_2$,$Cp_2Me[CH_2C(CH_3)_2-C_6H_5]_3$, Me(2,6-Dimethylphenyloxy)$_2(CH_3)_3$, $Cp_2$Me(Methyl)$_2[OCH(CH_3)_2]$, $Me[CH_2Si(CH_3)_3]_5$, $Me(=N-C_6H_5)[OC(CF_3)_2CH_3][CH_2Si(CH_3)_3]_2$, Me(=N-2,6-dimethyl$C_6H_3)[CH_2-C_6H_5]_3$, Me(=N-2,6-diisopropyl$C_6H_3)[(CH_2C(CH_3)_2-C_6H_5]_2Cl$, $CpMe[OC(CH_3)_3]_2[CH_2-C_6H_5]_2$, Me(=N-2,6-diisopropyl$C_6H_3)[CH_2-C_6H_5]_3$, Me(2,6-Diisopropylphenyloxy)$_2(CH_3)_3$, Me(=N-2,6-dimethyl$C_6H_3)(CH_3)_3$, $Me[CH_2Si(CH_3)_3]_3[OCH(CH_3)]_2$, $Cp_2$Me(Methyl)$_3$, $Cp_2Me[CH_2-C_6H_5]_3$, $Cp_2Me[CH_2Si(CH_3)_3]_3$, $CpMe[OCH(CH_3)_2]_2[CH_2Si(CH_3)_3]_2$, $Cp_2$Me[2,6-dimethyl$C_6H_3O)][CH_2Si(CH_3)_3]_2$, $Me(=N-C_6H_5)[OC(CH_3)_3][CH_2Si(CH_3)_3]_2$.

In einer anderen bevorzugten Ausführungsform entsprechen die Niob-, Tantal-, Molybdän- und Wolframverbindungen besonders den Formeln X oder Xa

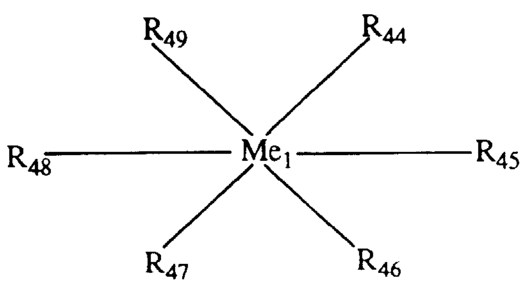

(X),

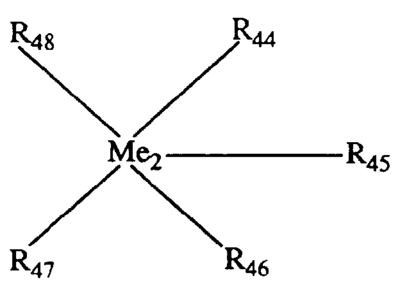

(Xa),

worin

$Me_1$ für Mo(VI) oder W(VI) steht;
$Me_2$ für Nb(V) oder Ta(V) steht;
einer der Reste $R_{44}$ bis $R_{49}$ einen Rest $-CH_2-SiR_{29}R_{30}R_{31}$ der Formel VIIa bedeutet; wenigstens einer der Reste $R_{44}$ bis $R_{49}$ F, Cl oder Br darstellt;
$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;
in Formel X zwei oder jeweils zwei und in Formel Xa zwei der übrigen Reste von $R_{44}$ bis $R_{49}$ je zusammen =O oder $=N-R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-akyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und
die übrigen Reste $R_{44}$ bis $R_{48}$ Sekundäramino mit 2 bis 18 C-Atomen, $R_{32}O$- oder $R_{32}S$-, Halogen, unsubstituiertes oder substituiertes Cyclopentadienyl, Indenyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)anüno, Di($C_1$-$C_6$-alkyl)amino-$C_1$-$C_3$-alkyl oder Halogen substituiertes Benzyl oder Phenylethyl darstellen; oder in den Formeln X und Xa die übrigen Reste von $R_{44}$ bis $R_{49}$ unabhängig voneinander Sekundäramino mit 2 bis 18 C-Atomen, $R_{32}O$- oder $R_{32}S$-, Halogen, unsubstituiertes oder substituiertes Cyclopentadienyl, Indenyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-akyl)anüno, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

Für die Reste $R_{23}$ bis $R_{33}$ gelten die zuvor angegebenen Bevorzugungen.
In einer besonders bevorzugten Ausführungsform enthält die erfindungsgemässe Zusammensetzung Niob-, Tantal-, Molybdän- und Wolframverbindungen der Formeln X und Xa, worin
$R_{44}$ einen Rest der Formel VIIa $-CH_2-Si(R_{29}R_{30}R_{31})_3$ und $R_{45}$ F, Cl oder Br darstellen; und

(a) in Formel X $R_{46}$ und $R_{47}$ sowie $R_{48}$ und $R_{49}$ jeweils zusammen den Rest $=N-R_{33}$ bedeuten, oder $R_{46}$ und $R_{47}$ zusammen den Rest $=N-R_{33}$ bedeuten, und $R_{48}$ und $R_{49}$ unabhängig voneinander unsubstituiertes oder substituiertes Cyclopentadienyl, Indenyl, $R_{32}$-O- oder Halogen darstellen, oder
b) in Formel Xa $R_{46}$ und $R_{47}$ zusammen den Rest $=N-R_{33}$ bedeuten, und $R_{48}$ unsubstituiertes oder substituiertes Cyclopentadienyl, Indenyl, $R_{32}$-O- oder Halogen bedeuten, oder in Formel Xa $R_{46}$, $R_{47}$ und $R_{48}$ unabhängig voneinander unsubstituiertes oder substituiertes Cyclopentadienyl, $R_{32}$-O- oder Halogen bedeuten,

wobei $R_{29}$ bis $R_{33}$ die voranstehenden Bedeutungen haben. Für $R_{29}$, $R_{30}$, $R_{31}$, $R_{32}$ und $R_{33}$ gelten die voranstehenden Bevorzugungen.
Ganz besonders bevorzugt enthält die erfindungsgemässe Zusammensetzung Niob-, Tantal-, Molybdän- oder Wolframverbindungen der Formel XI, XIa, XIb oder XIc

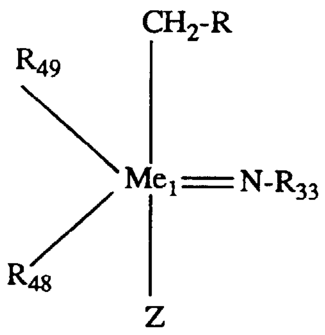 (XI), 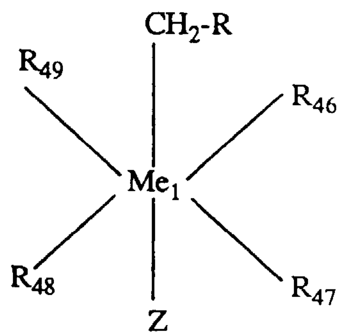 (XIa)

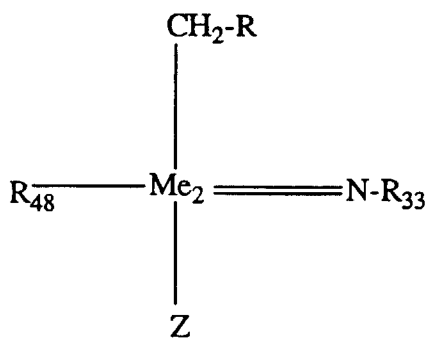 (XIb), 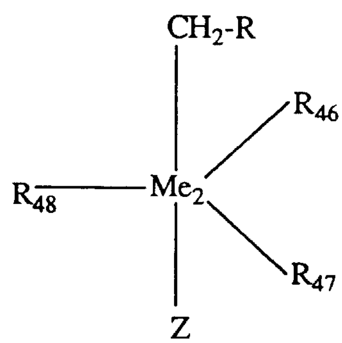 (XIc),

worin

$Me_1$ für Mo(VI) oder W(VI) steht;
$Me_2$ für Nb(V) oder Ta(V) steht;
R $-Si(C_1-C_4-Alkyl)_3$ darstellt;
Z für F, Cl oder Br steht;
$R_{33}$ Phenyl oder mit 1 bis 3 $C_1$-$C_4$-Alkyl oder $C_1$-$C_4$-Alkoxy substituiertes Phenyl bedeutet,

(a) $R_{48}$ und $R_{49}$ in Formel XI zusammen die Gruppe $=NR_{33}$ oder einzeln unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellen;
(b) $R_{46}$, $R_{47}$ und $R_{48}$ und $R_{49}$ in Formel XIa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl bedeuten;
(c) $R_{48}$ in Formel XIb F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellt; und
(d) $R_{46}$, $R_{47}$ und $R_{48}$ in Formel XIc unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellen. Das Alkoxy stellt besonders bevorzugt verzweigtes Alkoxy dar, das gegebenenfalls mit F teilweise oder vollständig substituiert ist, zum Beispiel i-Propyloxy, i- und t-Butyloxy, Hexafluorpropyloxy und Nonafluorpropyloxy. Bei dem Phenyloxyrest handelt es sich besonders um in den 2,6-Stellungen mit $C_1$-$C_4$-Alkyl substituiertes Phenyloxy, zum Beispiel 2,6-Dimethylphenyloxy. Beispiele für substituierte Cyclopentadienylreste sind Mono- bis Pentamethylcyclopentadienyl und Trimethylsilylcyclopentadienyl. $R_{33}$ stellt bevorzugt Phenyl oder mit $C_1$-$C_1$-Alkyl substituiertes Phenyl dar, besonders Phenyl, 3,5-Dimethyl-, 2,6-Dimethyl-, 3,5-Diethyl- und 2,6-Diethylphenyl.

Ganz besonders bevorzugte Verbindungen in der erfindungsgemässen Zusammensetzung sind solche der Formeln XII, XIIa, XIIb und XIIc

$$(R_{33}\text{-}N{=})_2Me_1X_aCH_2Si(CH_3)_3 \qquad (XII),$$

$$(R_{33}\text{-}N{=})R_{46}Me_1X_a(OR_{32})CH_2Si(CH_3)_3 \qquad (XIIa),$$

$$R_{46}R_{47}Me_2X_a(OR_{32})CH_2Si(CH_3)_3 \qquad (XIIb),$$

$$R_{33}\text{-}N{=}Me_2X_a(OR_{32})CH_2Si(CH_3)_3 \qquad (XIIc),$$

worin

$Me_1$ für Mo(VI) oder W(VI);
$Me_2$ für Nb(V) oder Ta(V); und
$X_a$ für F, Cl oder Br stehen;
$R_{33}$ Phenyl oder mit 1 oder 2 $C_1$-$C_4$-Alkylgruppen substituiertes Phenyl bedeutet;
$R_{32}$ verzweigtes gegebenenfalls teilweise oder vollständig mit Fluor substituiertes $C_3$-oder $C_4$-Alkyl oder Phenyloxy oder mit 1 bis 3 Methyl- oder Ethylgruppen substituiertes Phenyloxy darstellt;
$R_{46}$ und $R_{47}$ unabhängig voneinander unsubstituiertes oder mit 1 bis 5 Methylgruppen substituiertes Cyclopentadienyl, $X_a$ oder $R_{32}$O- bedeuten; und
$R_{48}$ unsubstituiertes oder mit 1 bis 5 Methylgruppen substituiertes Cyclopentadienyl, $X_a$ oder $R_{32}$O- darstellt.

Einige Beispiele für Niob(V)-, Tantal(V)-, Molybdän(VI)- und Wolfram(VI)verbindungen sind [Cp bedeutet Cyclopentadienyl und Me bedeutet Nb(V) oder Ta(V)]:
Me(=N-$C_6H_5$)[OCH$(CH_3)_2$][($CH_2$Si$(CH_3)_3$]Cl, $Cp_2$Me[OC$(CH_3)_3$][($CH_2$Si$(CH_3)_3$]Cl, Me(=N-$C_6H_5$)[OCH$(CF_3)_2$][($CH_2$Si $(CH_3)_3$]Cl, CpMe[OCH$(CH_3)_2]_2$[($CH_2$Si$(CH_3)_3$]Br, Me(=N-2,6-diisopropyl$C_6H_3$)[($CH_2$Si$(CH_3)_3$]$Cl_2$, $(C_6H_5O)_2$CpMe [($CH_2$Si$(CH_3)_3$]Cl, Me(=N-2,6-diisopropyl$C_6H_3$)[$(CH_3)_2$CHO][($CH_2$Si$(CH_3)_3$]Cl, $Cp_2$Me[($CH_2$Si$(CH_3)_3$]$Cl_2$, CpMe[OCH $(CH_3)_2]_2$[($CH_2$Si$(CH_3)_3$]Cl, W(=N-$C_6H_5$)[(OC$(CH_3)_3$][$CH_2$-Si$(CH_3)_3$]$Cl_2$, CpMe[OCH$(CF_3)_2]_2$[($CH_2$Si$(CH_3)_3$]Cl, W(=N-$C_6H_5$)[(OC$(CH_3)_3]_2$[$CH_2$-Si$(CH_3)_3$]Cl, $Cp_2$Me(Methyl)[($CH_2$Si$(CH_3)_3$]Cl, Mo(=N-2,6-diisopropyl$C_6H_3)_2$[$CH_2$-Si$(CH_3)_3$] Cl, $Cp_2$Me[OCH$(CH_3)_2$[($CH_2$Si$(CH_3)_3$]Cl, CpMe[OC($CH_3$)$(CF_3)_2]_2$[($CH_2$Si$(CH_3)_3$]Cl, [OCH$(CH_3)_2]_2$Me[$CH_2$Si$(CH_3)_3$] $Cl_2$, (=N-2,6-dimethyl$C_6H_3$)CpMe[($CH_2$Si$(CH_3)_3$]Cl, Me[$CH_2$Si$(CH_3)_3$][OCH($CH_3$)]$(CF_3O)_2$Cl, $Mo_2$[($CH_2$-Si$(CH_3)_3$) (O$CH_2$C$(CH_3)_3$)Cl$]_2$, (2,6-Diisopropylphenyloxy)$_2$Me[$CH_2$Si$(CH_3)_3$]$Cl_2$, Mo(=N-$C_6H_5)_2$[$CH_2$-Si$(CH_3)_3$]Cl, (=N-2,6-dimethyl$C_6H_3$)Me[2,6-dimethyl$C_6H_3$O)][($CH_2$Si$(CH_3)_3$)]Cl, Me(=N-2,6-dimethyl$C_6H_3$)(2,6-Dimethyl-$C_6H_5$O)[$CH_2$ Si$(CH_3)_3$]Cl, Mo(=N-2,6-diisopropyl$C_6H_3$)[(O$CH_2$C$(CH_3)_3]_2$[$CH_2$-Si$(CH_3)_3$]Cl, Me(=N-2,6-dimethyl$C_6H_3$)(($CF_3)_2$CHO) [$CH_2$Si$(CH_3)_3$]Cl und Me(2,6-Dimethylphenyloxy)$(CH_3O)_2$[($CH_2$Si$(CH_3)_3$]Cl.

Die erfindungsgemäss zu verwendenden Niob-, Tantal-, Molybdän- und Wolframverbindungen sind bekannt oder nach bekannten und analogen Verfahren ausgehend von gegebenenfalls entsprechend substituierten Metallhalogeniden mittels Grignardreaktionen herstellbar [Schrock, R.R., Murdzeck, J.S., Bazan, G.C., Robbins, J., DiMare, M., O'Regan, M., J. Am. Chem. Soc., 112:3875-3886 (1990)].

Katalytische Mengen bedeutet im Rahmen der vorliegenden Erfindung bevorzugt eine Menge von 0,001 bis 20 Mol-%, bevorzugter 0,01 bis 15 Mol-%, besonders bevorzugt 0,01 bis 10 Mol-%, und ganz besonders bevorzugt 0,01 bis 5 Mol-%, bezogen auf die Menge des Monomers. Wenn die Katalysatoren eine hohe photokatalytische Aktivität aufweisen, sind in diesem Fall Mengen von 0,001 bis 2 Gew.-% ganz besonders bevorzugt.

Die erfindungsgemässe Zusammensetzung kann Lösungsmittel enthalten, besonders wenn sie zur Herstellung von Beschichtungen verwendet wird. Ein ganz besonderer Vorteil besteht darin, dass keine Lösungsmittel verwendet werden müssen, da die Katalysatoren selbst in gespannten Cycloolefinen gut löslich sind, die nur Kohlenstoff und Wasserstoff enthalten. Dadurch werden bislang nicht durchführbare Polymerisationen in der Masse ermöglicht, was bei der Herstellung von Formkörpern und Beschichtungen besondere anwendungstechnische und ökologische Vorteile darstellt.

Geeignete inerte Lösungsmittel sind zum Beispiel protisch-polare und aprotische Lösungsmittel, die allein oder in Mischungen aus mindestens zwei Lösungsmitteln verwendet werden können. Beispiele sind: Ether (Dibutylether, Tetrahydrofuran, Dioxan, Ethylenglykolmonomethyl- oder -dimethylether, Ethylenglykolmonoethyl- oder -diethylether, Diethylenglykoldiethylether, Triethylenglykoldimethylether), halogenierte Kohlenwasserstoffe (Methylenchlorid, Chloroform, 1,2-Dichlorethan, 1,1,1-Trichlorethan, 1,1,2,2-Tetrachlorethan), Carbonsäureester und Lactone (Essigsäureethylester, Propionsäuremethylester, Benzoesäureethylester, 2-Methoxyethylacetat, γ-Butyrolacton, δ-Valerolacton, Pivalolacton), Carbonsäureamide und Lactame (N,N-Dimethylformamid, N,N-Diethylformamid, N,N-Dimethylacetamid, Tetramethylharnstoff, Hexamethylphosphorsäuretriamid, γ-Butyrolactam, ε-Caprolactam, N-Methylpyrrolidon, N-Acetylpyrrolidon, N-Methylcaprolactam), Sulfoxide (Dimethylsulfoxid), Sulfone (Dimethylsulfon, Diethylsulfon, Trimethylensulfon, Tetramethylensulfon), tertiäre Amine (N-Methylpiperidin, N-Methylmorpholin), aliphatische und aromatische Kohlenwasserstoffe wie zum Beispiel Petrolether, Pentan, Hexan, Cyclohexan, Methylcyclohexan, Benzol oder substituierte Benzole (Chlorbenzol, o-Dichlorbenzol, 1,2,4-Trichlorbenzol, Nitrobenzol, Toluol, Xylol) und Nitrile (Acetonitril, Propionitril, Benzonitril, Phenylacetonitril). Bevorzugte Lösungsmittel sind aprotische polare und unpolare Lösungsmittel.

Die Wahl der Lösungsmittel richtet sich hauptsächlich nach den Eigenschaften der Einkomponenten-Katalysatoren, die durch die verwendeten Lösungsmittel nicht desaktiviert werden dürfen. Bei den verwendeten Einkomponenten-Katalysatoren empfiehlt sich der Ausschluss von Sauerstoff und Feuchtigkeit. Die Zusammensetzungen sind lagerstabil, wobei wegen der Lichtempfindlichkeit eine Lagerung im Dunkeln zu empfehlen ist.

Die erfindungsgemässe Zusammensetzung kann Formulierungshilfstoffe enthalten. Bekannte Hilfsstoffe sind Antistatika, Antioxidantien, Lichtschutzmittel, Weichmacher, Farbstoffe, Pigmente, Füllstoffe, Verstärkerfüllstoffe, Gleitmittel, Haftvermittler, viskositätserhöhende Mittel und Entformungshilfsmittel. Die Füllstoffe können in überraschend hohen Anteilen zugegen sein, ohne die Polymerisation nachteilig zu beeinflussen, zum Beispiel in Mengen von bis zu 70 Gew.-%, bevorzugt 1 bis 70 Gew.%, bevorzugter 5 bis 60 Gew.-%, besonders bevorzugt 10 bis 50 Gew.-% und insbesondere bevorzugt 10 bis 40 Gew.-%, bezogen auf die Zusammensetzung. Füllstoffe und Verstärkerfüllstoffe zur Verbesserung der optischen, physikalischen, mechanischen und elektrischen Eigenschaften sind in grosser Vielzahl bekannt geworden. Einige Beispiele sind Glas und Quarz in Form von Pulvern, Kugeln und Fasern, Metall- und Halbmetalloxide, Carbonate wie $MgCO_3$, $CaCO_3$, Dolomit, Metallsulfate wie Gips und Schwerspat, natürliche und synthetische Silikate wie Talk, Zeolithe, Wollastonit, Feldspate, Tonerden wie Chinaclay, Gesteinsmehle, Whisker, Carbonfasern, Kunststoffasern oder -pulver und Russ. Viskositätserhöhende Mittel sind insbesondere Metathesepolymerisate, die olefinisch ungesättigte Gruppen aufweisen und bei der Polymerisation in das Polymer eingebaut werden können. Solche Metathesepolymerisate sind bekannt und zum Beispiel unter dem Handelsnamen Vestenamere® käuflich. Andere viskositätserhöhende Mittel sind Polybutadien, Polyisopren oder Polychlorbutadien, sowie Copolymere von Butadien, Isopren und Chloropren mit Olefinen. Die viskositätserhöhenden Mittel können in einer Menge von 0,1 bis 50, bevorzugt 1 bis 30, und besonders bevorzugt 1 bis 20 Gew.-% enthalten sein bezogen auf die Zusammensetzung. Bei der Verwendung von Füllstoffen ist es zweckmässig, die optische Transparenz für die Polymerisation zu erhalten oder die Polymerisation in dünnen Schichten durchzuführen.

Ein weiterer Gegenstand der Erfindung ist ein Verfahren zur Herstellung von Polymeren aus Acetylenen durch Photometathesepolymerisation, dadurch gekennzeichnet, dass man eine Zusammensetzung, die mindestens ein nichtflüchtiges Acetylen der Formel I,

$$R_a\text{-}C\equiv C\text{-}R_b \qquad (I),$$

worin

$R_a$ unsubstituiertes oder mit Halogen, -OH, -CN, $-NH_2$, $-NH(C_1\text{-}C_6\text{-Alkyl})$,$-N(C_1\text{-}C_6\text{-Alkyl})_2$, $C_1$-$C_6$-Alkyl, $C_1$-$C_6$-Alkyl-O-, $C_1$-$C_6$-Alkyl-S-, $C_1$-$C_6$-Alkyl-C(O)O-, $C_1$-$C_6$-Alkyl-OC(O)-, -C(O)-$NH_2$, $C_1$-$C_6$-Alkyl-C(O)NH- oder $C_1$-$C_6$-Alkyl-NHC(O)- substituiertes $C_1$-$C_{20}$-Alkyl, $C_3$-$C_{12}$-Cycloalkyl, ($C_3$-$C_{12}$-Cycloalkyl)-$C_1$-$C_{12}$-alkyl, $C_6$-$C_{18}$-Aryl, $C_7$-$C_{19}$-Aralkyl, $C_1$-$C_{20}$-Alkoxy, $C_3$-$C_{12}$-Cycloalkoxy, ($C_3$-$C_{12}$-Cycloalkyl)-$C_1$-$C_{12}$-alkoxy, $C_6$-$C_{18}$-Aryloxy, $C_7$-$C_{19}$-Aralkyloxy, $C_3$-$C_9$-Heterocycloalkyl mit 1 bis 3 Heteroatomen ausgewählt aus der Gruppe O, N und S, oder $C_3$-$C_{15}$-Heteroaryl mit 1 bis 3 Heteroatomen ausgewählt aus der Gruppe O, N und S darstellt, oder $R_a$ $-(O)_k\text{-}SiR_cR_dR_e$, $C_1$-$C_{18}$-Alkyl-OC(O)-, -C(O)-$NH_2$ oder $C_1$-$C_{18}$-Alkyl-NHC(O)- bedeutet;

$R_b$ für Wasserstoff steht oder unabhängig die Bedeutung von $R_a$ hat;

$R_c$, $R_d$ und $R_e$ unabhängig voneinander $C_1$-$C_{18}$-Alkyl, $C_1$-$C_{18}$-Alkoxy, $C_5$- oder $C_6$-Cycloalkyl, $C_5$- oder $C_6$-Cycloalkoxy oder unsubstituiertes oder mit $C_1$-$C_6$-Alkyl oder $C_1$-$C_6$-Alkoxy substituiertes Phenyl, Phenyloxy, Benzyl oder Benzyloxy bedeuten; und

k für 0 oder 1 steht;

allein oder zusammen mit einem gespannten Cycloolefin und katalytische Mengen mindestens eines Einkomponentenkatalysators aus der Gruppe Molybdän-, Wolfram-, Niob- und Tantalverbindungen enthält, die (a) entweder mindestens zwei Methylgruppen oder zwei monosubstituierte Methylgruppen ohne α-Wasserstoffatome im Substituenten oder (b) wenigstens ein Halogen und nur eine Silylmethylgruppe am Metall gebunden enthalten.

(α) durch Bestrahlung polymerisiert, oder

(β) durch kurzzeitige Bestrahlung den Einkomponenten-Katalysator aktiviert und die Polymerisation durch Erwärmen bei Temperaturen von 30 bis 300°C beendet.

Die erhältlichen Polymerisate sind Polyacetylene mit Strukturelementen der Formel XIII

$$-CR_a=CR_b- \qquad \text{(XIII)},$$

worin $R_a$ und $R_b$ die zuvor angegebenen Bedeutungen haben können. Ein weiterer Gegenstand der Erfindung sind die neuen Polymere. Erfindungsgemäss können cis-Polymere, trans-Polymere oder Mischformen gebildet werden. Bei der Copolymerisation mit gespannten Cycloolefinen werden hauptsächlich Blockcopolymere oder direkt Legierungen aus beiden Polymeren erhalten. Die Bildung statistischer Polymere ist weniger ausgeprägt. Die Polymere können ein mittleres Molekulargewicht ($\overline{Mw}$) von z. B. 500 bis zu 2 Millionen Dalton, vorzugsweise 1000 bis 1 Million Dalton (bestimmt nach GPC durch Vergleich mit engverteilten Polystyrolstandards) aufweisen. Sofern die Cycloolefine mindestens 2 Doppelbindungen enthalten, können auch vernetzte Polymerisate gebildet werden.

Erwärmen kann eine Temperatur von über Raumtemperatur, zum Beispiel 30 bis 300°C, bevorzugt 40 bis 250°C, besonders bevorzugt 40 bis 200°C, und insbesondere bevorzugt 50 bis 150°C bedeuten. Die Polymerisationszeiten hängen im wesentlichen von der Katalysatoraktivität ab.

Es ist beim erfindungsgemässen Verfahren nicht notwendig, die Bestrahlung der Reaktionsmischung über die gesamte Reaktionsdauer aufrechtzuerhalten. Ist die Polymerisation einmal photochemisch initiiert, erfolgt der weitere Reaktionsverlauf selbst im Dunkeln selbstständig. Vorteilhafterweise wird die Bestrahlung mit Licht der Wellenlänge im Bereich von 50 nm bis 1000 nm, bevorzugt im Bereich von 200 nm bis 500 nm und ganz besonders bevorzugt im UV-Bereich durchgeführt. Die Bestrahlungsdauer ist von der Art der Lichtquelle abhängig. Als Bestrahlungsquellen eignen sich zum Beispiel Sonnenlicht, Laserstrahlung, Röntgenstrahlung und besonders UV-Strahlungsquellen. Vorzugsweise werden erfindungsgemäß UV-Laser oder UV-Lampen eingesetzt. Die Bestrahlung des Katalysators kann sowohl vor, während, als auch nach der Monomerenzugabe erfolgen.

Geeignete Bestrahlungszeiten sind von Sekunden bis zu mehreren Stunden, insbesondere Minuten bis zu Stunden. Die Reihenfolge der Zugabe von Monomeren und Katalysator ist unkritisch. Das Monomer kann sowohl vorgelegt als auch nach Einbringen des Katalysators zugegeben werden. Ebenso kann der Katalysator vorbestrahlt und anschliessend das Monomer zugegeben werden. Ferner kann auch die Katalysator- und Monomer-enthaltende Lösung bestrahlt werden.

Das erfindungsgemäße Verfahren wird bei ausschliesslicher Bestrahlung bevorzugt bei Raumtemperatur bis leicht erhöhter Temperatur durchgeführt. Eine Temperaturerhöhung dient der Erhöhung der Reaktionsgeschwindigkeit. Die verwendeten Katalysatoren initiieren nur in Ausnahmefällen bei den gewählten Temperaturen für sich eine thermische Metathesepolymerisation unter Vernetzung. Bei den zur Reaktionsbeschleunigung gewählten Temperaturen findet daher überwiegend eine Photopolymerisation statt. Es ist aber zu erwähnen, dass die Katalysatoren durch ausreichende Bestrahlung in thermoaktive Katalysatoren umgewandelt werden können.

Insbesondere wird das erfindungsgemäße Verfahren unter Bestrahlung bevorzugt bei Temperaturen von -20 bis +110°C, besonders bevorzugt 20 bis 80°C durchgeführt.

Die Bestrahlungsdauer hängt im wesentlichen von der gewünschten Reaktionsführung ab. Eine kurzzeitige Bestrahlung wird zum Beispiel dann gewählt, wenn man die Polymerisation nur durch Bestrahlung initiieren und durch Erhitzen beenden will. Kurzzeitig kann eine Bestrahlungszeit bis zu 60 Sekunden, bevorzugt 5 bis 60 Sekunden und besonders bevorzugt 10 bis 40 Sekunden bedeuten. Eine längere Bestrahlungszeit wird zum Beispiel dann gewählt, wenn man die Polymerisation überwiegend unter Bestrahlung durchführen und die endgültige Polymerisation nur durch Nachtempern beenden will.

Ein ganz besonderer und überraschender Vorteil des erfindungsgemässen Verfahrens besteht darin, dass die verwendeten Einkomponenten-Katalysatoren nach der Bestrahlung als thermische Katalysatoren wirken. Daraus ergibt sich die Möglichkeit, die Polymerisation nach einer kurzen Bestrahlungszeit durch Wärmezufuhr fortzusetzen und zu beenden, was in verschiedenen Bereichen der Herstellung von Formkörpern oder Beschichtungen wirtschaftliche und technische Vorteile bietet.

Die thermische Polymerisation wird bevorzugt bei Temperaturen von 40 bis 300°C, bevorzugter 50 bis 200°C und besonders bevorzugt 60 bis 150°C durchgeführt.

Mit dem erfindungsgemässen Verfahren können Werkstoffe zur spanabhebenden Herstellung von Formkörpern oder direkt Formkörper aller Art, sowie Beschichtungen und Reliefabbildungen hergestellt werden.

Je nach verwendetem Monomer können die erfindungsgemäßen Polymere sehr verschiedene Eigenschaften aufweisen. Einige zeichnen sich durch sehr hohe Gas- und besonders Sauerstoffpermeabilität, tiefe Dielektrizitätskonstanten, hohe Wärmebeständigkeit (hohe Glasumwandlungstemperaturen, gute Wärmestabilität und geringe Wasserabsorption aus.

Andere haben hervorragende optische Eigenschaften wie zum Beispiel hohe Transparenz und niedrige Brechungsindices. Ferner ist insbesondere der geringe Schrumpf hervorzuheben. Daher können sie in sehr unterschiedlichen technischen Gebieten Verwendung finden, zum Beispiel als optische Materialien und Kontaktlinsen, als gasdurchlässige Folien oder Membranen zur Trennung von Gasgemischen, als holographisches Aufzeichnungsmaterial und in der Elektroindustrie als Isolationsmaterialien. Ferner können die Polymere durch Behandlung mit Oxidationsmitteln in elektrisch leitende Werkstoffe umgewandelt werden, die als elektrische Leiter (zum Beispiel gedruckte Schaltungen) oder Elektroden Verwendung finden können. Es ist auch möglich, nur die elektrische Leitfähigkeit der Oberflächen von Formteilen aus diesen Polymeren mit der Behandlung mit Oxidationsmitteln nachträglich zu erhöhen.

Die erfindungsgemäßen Zusammensetzungen zeichnen sich als Schichten auf den Oberflächen von Trägermaterialien durch eine hohe Haftfestigkeit aus. Ferner zeichnen sich die beschichteten Materialien durch eine sehr hohe Oberflächenglätte und -glanz aus. Unter den guten mechanischen Eigenschaften ist insbesondere der geringe Schrumpf und die hohe Schlagzähigkeit hervorzuheben, aber auch die thermische Beständigkeit. Ferner ist die leichte Entformbarkeit bei der Verarbeitung in Formen und die hohe Lösungsmittelbeständigkeit zu erwähnen.

Diese Polymere eignen sich zur Herstellung von medizinischen Geräten, Implantaten oder Kontaktlinsen; zur Herstellung von elektronischen Bauteilen; als Bindemittel für Lacke; als photohärtbare Zusammensetzungen für den Modellbau oder als Klebstoffe zum Verkleben von Substraten mit niedrigen Oberflächenenergien (zum Beispiel Teflon, Polyethylen und Polypropylen), sowie als photopolymerisierbare Zusammensetzung in der Stereolithographie. Die erfindungsgemäßen Zusammensetzungen können auch zur Herstellung von Lacken durch Photopolymerisation verwendet werden, wobei einerseits klare (transparente) und sogar pigmentierte Zusammensetzungen verwendet werden können. Es können sowohl Weiss- als auch Buntpigmente verwendet werden.

Die erfindungsgemäßen photohärtbaren Zusammensetzungen eignen sich besonders zur Herstellung von Schutzschichten und Reliefabbildungen. Ein weiterer Gegenstand der Erfindung ist eine Variante des erfindungsgemäßen Verfahrens zur Herstellung von beschichteten Materialien oder Reliefabbildungen auf Trägermaterialien, bei dem man eine erfindungsgemässe Zusammensetzung und gegebenenfalls Lösungsmittel als Schicht auf einem Träger aufbringt, zum Beispiel durch Tauch-, Streich-, Giess-, Walz-, Rakel- oder Schleudergießverfahren, gegebenenfalls das Lösungsmittel entfernt, und die Schicht zur Polymerisation bestrahlt, oder die Schicht durch eine Photomaske bestrahlt, nach der Bestrahlung gegebenenfalls thermisch nachhärtet und anschließend die nichtbestrahlten Anteile mit einem Lösungsmittel entfernt. Danach kann sich noch eine Temperung anschliessen. Mit diesem Verfahren können Oberflächen von Trägermaterialen modifiziert oder geschützt werden, oder es können zum Beispiel gedruckte Schaltungen, Druckplatten oder Druckwalzen hergestellt werden. Bei der Herstellung von gedruckten Schaltungen können die erfindungsgemäßen Zusammensetzungen auch als Lötstopplacke eingesetzt werden. Weitere Anwendungsmöglichkeiten sind die Herstellung von Siebdruckmasken, die Verwendung als strahlungshärtbare Druckfarben für den Offset-, Sieb- und Flexodruck.

Gegenstand der vorliegenden Erfindung ist ferner ein beschichtetes Trägermaterial, das dadurch gekennzeichnet ist, daß auf einem Trägermaterial eine Schicht aus einer erfindungsgemässen Zusammensetzung aufgebracht ist.

Gegenstand der vorliegenden Erfindung ist ebenfalls ein beschichtetes Trägermaterial mit einer gehärteten Schicht aus einer erfindungsgemässen Zusammensetzung. Die ausserordentlich hohe Haftfestigkeit der Schichten sogar auf Metalloberflächen ist besonders hervorzuheben, selbst wenn es sich um reine Kohlenwasserstoffpolymerisate handelt.

Geeignete Trägermaterialien sind beispielsweise solche aus Glas, Mineralien, Keramiken, Kunststoffen, Holz, Halbmetallen, Metallen, Metalloxiden und Metallnitriden. Die Schichtdicken richten sich im wesentlichen nach der gewünschten Verwendung und können z.B. 0,1 bis 1000 µm, bevorzugt 0,5 bis 500 µm, besonders bevorzugt 1 bis 100 µm betragen. Die beschichteten Materialien zeichnen sich durch eine hohe Haftfestigkeit und gute thermische und mechanische Eigenschaften aus.

Die Herstellung der erfindungsgemässen beschichteten Materialen kann nach bekannten Methoden wie zum Beispiel Streichen, Rakeln, Giessverfahren wie Vorhanggiessen oder Schleudergiessen erfolgen.

Die erfindungsgemässen Zusammensetzungen eignen sich auch zur Herstellung von gummiartigen oder thermoplastischen Polymerisaten, die nach der Zugabe von zum Beispiel Radikalbildnern als Vernetzungsmittel noch weiter vernetzt werden können.

Die erfindungsgemässen Zusammensetzungen können auch als thermisch oder mittels Strahlung härtbare Klebstoffe zur festen Verbindung von unterschiedlichsten Materialien verwendet werden, wobei hervorragende Schälfestigkeiten erzielt werden können.

Die erfindungsgemässen Polymerisate zeichnen sich neben den hohen Haftfestigkeiten, der hervorragenden Verarbeitbarkeit, den guten Oberflächeneigenschaften (Glätte, Glanz), der hohen Vernetzungsdichte und der Beständigkeit gegen Lösungsmittel und andere Flüssigkeiten besonders noch durch sehr gute physikalisch-mechanische Eigenschaften wie zum Beispiel hohe Temperaturbeständigkeit, Bruch- und Biegefestigkeit und Schlagzähigkeit und hervorragende elektrische Eigenschaften wie zum Beispiel niedrige Oberflächenspannungen und -ladungen (sehr niedrige ε- und tan δ- Werte) aus. Ferner sind die hohe Sauerstoffpermeabilität und die geringe Wasseraufnahme zu erwähnen. Nur aus Kohlenstoff und Wasserstoff aufgebaute Polymere sind ökologisch besonders wertvoll, da sie zum Beispiel durch Pyrrolyse vollständig recyclisiert werden können.

Ein weiterer Gegenstand der Erfindung sind Formkörper aus Polymeren der erfindungsgemässen Zusammensetzungen.

Die nachfolgenden Beispiele erläutern die Erfindung näher.

A) Herstellung von Polymeren

Beispiele A1-A8:

In einem Schlenkgefäss wird der Katalysator mit oder ohne Lösungsmittel vorgelegt. Dann wird das Acetylen mit oder ohne Lösungsmittel zugegeben und das Gefäss verschlossen. Die Mischung wird unter Rühren bestrahlt. Nach etwa 15 Sekunden wird ein Viskositätsanstieg beobachtet. Direkt oder nach der Standzeit wird die Reaktion abgebrochen und das Reaktionsgemisch in 100 ml Ethanol gegossen. Das ausgefallene Polymer wird abfiltriert, mit Ethanol gewaschen und dann im Vakuum getrocknet. Das Polymer wird durch Gelpermeationschromatographie [GPC; Lösungsmittel Tetrahydrofuran, die Zahlen- ($M_n$) und Gewichtsmittelwerte ($M_w$) des Molekulargewichts werden relativ zu Polystyrol-Eichstandards bestimmt] und $^1$H-NMR (Bruker 300 MHz; Lösungsmittel $CDCl_3$) charakterisiert.

Ein identisches Experiment ohne Belichtung bei 45°C ergibt keinen Viskositätsanstieg und nach Zugabe von Ethanol fällt kein Polymer aus.

Als Katalysatoren werden eingesetzt: A = $W(NC_6H_5)[OC(CH_3)][CH_2Si(CH_3)_3]_2Cl$; B = $W(NC_6H_5)[OCCH_3(CF_3)_2]_2[CH_2Si(CH_3)_3]_2$; C = $W(N\text{-}2,6\text{-}(CH_3)_2\text{-}C_6H_3)(2,6\text{-}(CH_3)_2\text{-}C_6H_3O)[CH_2Si(CH_3)_3]_2Cl$; D = $[(CH_3)_3SiCH_2]_3Mo{\equiv}Mo[CH_2Si(CH_3)_3]_3$; E = $Ta[CH_2Si(CH_3)_3]_3Cl_2$

Als Acetylene werden eingesetzt: (45) = $H\text{-}C{\equiv}C\text{-}C(CH_3)_3$; (46) = $H_3C\text{-}C{\equiv}C\text{-}Si(CH_3)_3$; (47) = $H\text{-}C{\equiv}C\text{-}Si(CH_3)_3$.

Als Belichtungsquelle wird eine 200 W Quecksilberdampf-Mitteldruck-UV-Lampe (Osram HBO 200 W/2, Hersteller Spindler & Hoyer, Göttingen) verwendet.

Die Reaktionsbedingungen und Ergebnisse sind in Tabelle 1 angegeben:

Tabelle 1:

| Bsp. | Monomer Menge | Katalysator [mg] | LSM | Licht | Standzeit | Ausbeute [mg] | MG |
|---|---|---|---|---|---|---|---|
| 1 | 1,70 g (45) | 50 B | --- | 1 | --- | 1700 | --- |
| 2 | 1,38 g (45) | 50 B | 5 | 15 | 14/50 | 910 | 78/1000 |
| 3 | 0,30 g (45) | 6 A | 1 | 5 | 14/45 | 5 | vernetzt |
| 4 | 0,30 g (45) | 6C | 1 | 5 | 2/45; 48/25 | 15 | 65/1200 |
| 5 | 0,30 g (45) | 6 E | 1 | 5 | 14/25 | 15 | vernetzt |
| 6 | 0,41 g (46) | 20 D | 10 | 15 | 4/25 | 250 | 92/1900 |
| 7 | 5 ml (46) | 70 E | 15 | 20 | 14/25 | 350 | 1080/2010 |
| 8 | 5,00 g (47) | 80 B | --- | 10 | 24/25 | 280 | --- |

LSM: Lösungsmittel Toluol [ml]
Licht: Belichtungszeit bei 25°C [min]
Standzeit: vor Aufarbeitung [h]/Temperatur [°C]
MG: Molekulargewicht (GPC, g/mol) [$M_n$(k)/$M_w$(k)]

Beispiele A9-A17:

Analog zu Beispielen A1-A8 werden Beispiele A9-A17 durchgeführt, jedoch in Anwesenheit von Comonomeren. Als Comonomere werden eingesetzt Verbindungen (1), (27) und (31). Die Reaktionsbedingungen und Ergebnisse sind in Tabelle 2 angegeben:

Tabelle 2:

| Bsp. | Monomer Menge | Katalysator [mg] | LSM | Licht | Standzeit | Ausbeute [mg] | MG |
|---|---|---|---|---|---|---|---|
| 10 | 0,45 g (45) | | | | | | |
| | 0,42 g (1) | 50B | 5 | 10 | 24/25 | 400 | 8/570 |
| 11 | 0,25 g (45) | | | | | | |
| | 0,85 g (1) | 50 B | 5 | 10 | 24/25 | 1030 | 230/790 |
| 12 | 1 ml (45) | | | | | | |
| | 1 ml (31) | 20 B | 5 | 13 | 14/60 | 450 | 75/220 |
| 16 | 0,5 g (45) | | | | | | |
| | 2,0 g (31) | 300 B B | --- | 60 | 48/50 | 520 | 114/347 |
| 13 | 1 ml (45) | | | | | | |
| | 1 ml (27) | 20 B | 5 | 15 | 14/60 | 550 | 47/204 |
| 14 | 0,5 ml (45) | | | | | | |
| | 0,5 ml (27) | 10 B | 5 | 20 | 14/50 | 450 | 40/115 |
| 9 | 0,25 g (46) | | | | | | |
| | 0,25 g (1) | 20 E | 5 | 10 | 24/25 | 180 | 550/1860 |
| 17 | 0,5 g (46) | | | | | | |
| | 0,5 g (1) | 15 E | 5 | 30 | 14/25 | 490 | 310/730 |
| 15 | 0,75 g (46) | | | | | | |
| | 0,73 g (1) | 10 E | 10 | 30 | 14/25 | 150 | 535/1190 |

LSM: Lösungsmittel Toluol [ml]
Licht: Belichtungszeit bei 25°C [min]
Standzeit: vor Aufarbeitung [h]/Temperatur [°C]
MG: Molekulargewicht (GPC, g/mol) [$M_n$(k)/$M_w$(k)]

Beispiel A18:

20 mg Katalysator B werden in 1 ml Comonomer b vorgelegt und 1 min bestrahlt. Es bildet sich ein gelartiger Festkörper. Nun wird eine Mischung von 2 ml Monomer 1 und 1 ml Comonomer b zugegeben und 14 min bestrahlt. Die Reaktionsmischung wird 2 Tage bei Raumtemperatur gerührt und das gebildete Copolymer durch Zugabe von Methanol gefällt. Man trocknet 24 h bei Raumtemperatur im Hochvakuum. Mittels $^1$H-NMR ergibt sich die Zusammensetzung des Copolymers von Poly-1-Einheiten zu Poly-b-Einheiten im Verhältnis 10:1. $M_n$= 81k; $M_w$= 371k.

## Patentansprüche

1. Zusammensetzung aus mindestens einem nichtflüchtigen Acetylen der Formel I,

$$R_a\text{-C}\equiv\text{C-}R_b \qquad \text{(I)},$$

worin

$R_a$ unsubstituiertes oder mit Halogen, -OH, -CN, $-NH_2$, -NH($C_1$-$C_6$-Alkyl), -N($C_1$-$C_6$-Alkyl)$_2$, $C_1$-$C_6$-Alkyl, $C_1$-$C_6$-Alkyl-O-, $C_1$-$C_6$-Alkyl-S-, $C_1$-$C_6$-Alkyl-C(O)O-, $C_1$-$C_6$-Alkyl-OC(O)-, -C(O)-$NH_2$, $C_1$-$C_6$-Alkyl-C(O)NH- oder $C_1$-$C_6$-Alkyl-NHC(O)- substituiertes $C_1$-$C_{20}$-Alkyl, $C_3$-$C_{12}$-Cycloalkyl, ($C_3$-$C_{12}$-Cycloalkyl)-$C_1$-$C_{12}$-alkyl, $C_6$-$C_{18}$-Aryl, $C_7$-$C_{19}$-Aralkyl, $C_1$-$C_{20}$-Alkoxy, $C_3$-$C_{12}$-Cycloalkoxy, ($C_3$-$C_{12}$-Cycloalkyl)$C_1$-$C_{12}$-alkoxy, $C_6$-$C_{18}$-Aryloxy, $C_7$-$C_{19}$-Aralkyloxy, $C_3$-$C_9$-Heterocycloalkyl mit 1 bis 3 Heteroatomen ausgewählt aus der Gruppe O, N

und S, oder $C_3$-$C_{15}$-Heteroaryl mit 1 bis 3 Heteroatomen ausgewählt aus der Gruppe O, N und S darstellt, oder $R_a$ -$(O)_k$-$SiR_cR_dR_e$, $C_1$-$C_{18}$-Alkyl-OC(O)-, -C(O)-$NH_2$ oder $C_1$-$C_{18}$-Alkyl-NHC(O)- bedeutet;
$R_b$ für Wasserstoff steht oder unabhängig die Bedeutung von $R_a$ hat;
$R_c$, $R_d$ und $R_e$ unabhängig voneinander $C_1$-$C_{18}$-Alkyl, $C_1$-$C_{18}$-Alkoxy, $C_5$- oder $C_6$-Cycloalkyl, $C_5$- oder $C_6$-Cycloalkoxy oder unsubstituiertes oder mit $C_1$-$C_6$-Alkyl oder $C_1$-$C_6$-Alkoxy substituiertes Phenyl, Phenyloxy, Benzyl oder Benzyloxy bedeuten; und
k für 0 oder 1 steht;

alleine oder zusammen mit einem gespannten Cycloolefin und katalytischen Mengen eines Katalysators zur Metathesepolymerisation,
dadurch gekennzeichnet, dass sie mindestens einen Einkomponentenkatalysator aus der Gruppe Molybdän-, Wolfram-, Niob- und Tantalverbindungen enthält, die (a) entweder mindestens zwei Methylgruppen oder zwei monosubstituierte Methylgruppen ohne $\alpha$-Wasserstoffatome im Substituenten oder (b) wenigstens ein Halogen und nur eine Silylmethylgruppe am Metall gebunden enthalten.

**2.** Zusammensetzung gemäss Anspruch 1, dadurch gekennzeichnet, dass die Substituenten für $R_a$ und $R_b$ ausgewählt sind aus der Gruppe -OH, -F, -Cl, -CN, $C_1$-$C_4$-Alkyl und $C_1$-$C_4$-Alkoxy.

**3.** Zusammensetzung gemäss Anspruch 1, dadurch gekennzeichnet, dass $R_a$ und $R_b$ als Alkyl 1 bis 12 C-Atome enthalten.

**4.** Zusammensetzung gemäss Anspruch 1, dadurch gekennzeichnet, dass das Alkyl verzweigt ist.

**5.** Zusammensetzung gemäss Anspruch 1, dadurch gekennzeichnet, dass es sich bei $R_a$ und $R_b$ als Cycloalkyl um $C_5$-$C_8$-Cycloalkyl handelt.

**6.** Zusammensetzung gemäss Anspruch 1, dadurch gekennzeichnet, dass es sich bei $R_a$ und $R_b$ als Cycloalkyl-alkyl um $C_5$-$C_8$-Cycloalkyl-$CH_2$-, $C_5$-$C_8$-Cycloalkyl-$CH(CH_3)$- oder $C_5$-$C_8$-Cycloalkyl-$C(CH_3)_2$- handelt.

**7.** Zusammensetzung gemäss Anspruch 1, dadurch gekennzeichnet, dass $R_a$ und $R_b$ als Aryl 6 bis 14 C-Atome enthalten.

**8.** Zusammensetzung gemäss Anspruch 1, dadurch gekennzeichnet, dass $R_a$ und $R_b$ als Aralkyl 7 bis 12 C-Atome enthalten.

**9.** Zusammensetzung gemäss Anspruch 1, dadurch gekennzeichnet, dass $R_a$ und $R_b$ als Heterocycloalkyl 4 oder 5 C-Atome und ein oder zwei Heteroatome aus der Gruppe O, S und N enthalten.

**10.** Zusammensetzung gemäss Anspruch 1, dadurch gekennzeichnet, dass $R_a$ und $R_b$ als Heteroaryl 4 oder 5 C-Atome und ein oder zwei Heteroatome aus der Gruppe O, S und N enthalten.

**11.** Zusammensetzung gemäss Anspruch 1, dadurch gekennzeichnet, dass $R_c$, $R_d$ und $R_e$ als Alkyl oder Alkoxy linear oder verzweigt sind und 1 bis 12 C-Atome enthalten.

**12.** Zusammensetzung gemäss Anspruch 1, dadurch gekennzeichnet, dass $R_c$, $R_d$ und $R_e$ $C_1$-$C_4$-Alkyl, $C_1$-$C_4$-Alkoxy, Phenyl oder Benzyl bedeuten.

**13.** Zusammensetzung gemäss Anspruch 1, dadurch gekennzeichnet, dass in der Formel -$(O)_k$-$SiR_cR_dR_e$ k für 0 steht.

**14.** Zusammensetzung gemäss Anspruch 1, dadurch gekennzeichnet, dass $R_a$ -$Si(CH_3)_3$, -$Si(OC_6H_5)_3$, -$Si(CH_2$-$C_6H_5)_3$, -$Si(CH_3)_2(C_2H_5)$, -$Si(C_6H_5)(CH_3)_2$, -$Si(OCH_2$-$C_6H_5)_3$, -$Si(CH_3)_2[C(CH_3)_2CH(CH_3)_2]$, -$Si(n$-$C_3H_7)_3$, -$Si(n$-$C_4H_9)_3$, -$Si(CH_3)_2(n$-$C_{12}H_{25})$, -$Si(CH_3)_2(n$-$C_4H_9)$, -$Si(CH_3)_2(t$-$C_4H_9)$, -$Si(CH_3)_2(n$-$C_{18}H_{37})$, -$Si(CH_2$-$C_6H_5)(CH_3)_2$, -$Si(C_2H_5)_3$, -$Si(C_6H_5)_3$ oder -$Si(OCH_3)_3$ bedeutet.

**15.** Zusammensetzung gemäss Anspruch 14, dadurch gekennzeichnet, dass $R_a$ -$Si(CH_3)_3$ ist.

**16.** Zusammensetzung gemäss Anspruch 1, dadurch gekennzeichnet, dass eine der Gruppen $R_a$ und $R_b$ eine sterisch anspruchsvolle Gruppe darstellt.

**17.** Zusammensetzung gemäss Anspruch 1, dadurch gekennzeichnet, dass es sich bei den Acetylenen um $CH_3$-C≡CH, $CH_3$-C≡C-$CH_3$, $C_2H_5$-C≡CH, n- oder i-$C_3H_7$-C≡CH, n-, i- oder t-$C_4H_9$-C≡CH, t-$C_4H_9$-C≡C-$CH_3$, $C_4H_9$-C≡C-$C_4H_9$, $C_6H_{11}$-C≡CH, $C_6H_5$-C≡CH, $C_6H_5C$≡$CC_6H_5$, HC≡C-Si$(CH_3)_3$, $(H_3C)_3$Si-C≡C-Si$(CH_3)_3$, $CH_3$-C≡C-Si$(CH_3)_3$, t-$C_4H_9$O-C≡CH oder HC≡C-Si$(OCH_3)_3$ handelt.

**18.** Zusammensetzung gemäss Anspruch 17, dadurch gekennzeichnet, dass es sich bei den Acetylenen um t-Butylacetylen, Trimethylsilylacetylen oder Methyl-trimethylsilylacetylen handelt.

**19.** Zusammensetzung gemäss Anspruch 1, dadurch gekennzeichnet, dass sie zusätzlich nichtflüchtige gespannte Cycloolefine als Comonomere enthält.

**20.** Zusammensetzung gemäss Anspruch 19, dadurch gekennzeichnet, dass die Menge an Comonomeren von 0,1 bis 99 Gew.-% beträgt, bezogen auf die Gesamtmenge der Monomeren.

**21.** Zusammensetzung gemäss Anspruch 19, dadurch gekennzeichnet, dass die Menge an Comonomeren von 1 bis 95 Gew.-% beträgt.

**22.** Zusammensetzung gemäss Anspruch 19, dadurch gekennzeichnet, dass die Menge an Comonomeren von 5 bis 90 Gew.-% beträgt.

**23.** Zusammensetzung gemäss Anspruch 19, dadurch gekennzeichnet, dass die Menge an Comonomeren von 5 bis 75 Gew.-% beträgt.

**24.** Zusammensetzung gemäss Anspruch 19, dadurch gekennzeichnet, dass die Menge an Comonomeren von 5 bis 60 Gew.-% beträgt.

**25.** Zusammensetzung gemäss Anspruch 19, dadurch gekennzeichnet, dass es sich bei den cyclischen Olefinen um monocyclische oder polycyclische kondensierte, und/oder überbrückte und/oder direkt oder über eine Brückengruppe verbundene Ringsysteme mit zwei bis vier Ringen handelt, die unsubstituiert oder substituiert sind und Heteroatome aus der Gruppe O, S, N oder Si in einem oder mehreren Ringen und/oder kondensierte aromatische oder heteroaromatische Ringe enthalten.

**26.** Zusammensetzung gemäss Anspruch 25, dadurch gekennzeichnet, dass die einzelnen cyclischen Ringe 3 bis 16 Ringglieder enthalten.

**27.** Zusammensetzung gemäss Anspruch 25, dadurch gekennzeichnet, dass die einzelnen cyclischen Ringe 3 bis 12 Ringglieder enthalten.

**28.** Zusammensetzung gemäss Anspruch 25, dadurch gekennzeichnet, dass die einzelnen cyclischen Ringe 3 bis 8 Ringglieder enthalten.

**29.** Zusammensetzung gemäss Anspruch 19, dadurch gekennzeichnet, dass die Cycloolefine der Formel II entsprechen,

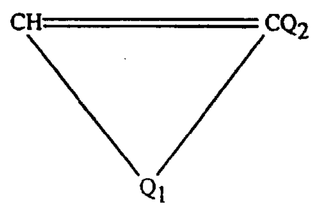

(II),

worin

$Q_1$ ein Rest mit mindestens einem Kohlenstoffatom ist, der zusammen mit der -CH=$CQ_2$-Gruppe einen mindestens 3-gliedrigen alicyclischen Ring bildet, welcher gegebenenfalls ein oder mehrere Heteroatome ausgewählt aus der Gruppe bestehend aus Silicium, Phosphor, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Hydroxyalkyl $C_1$-$C_{20}$-Halogenalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_4$-X- substituiert ist; oder bei dem zwei benachbarte C-Atome mit -CO-O-CO- oder $-CO-NR_5-$CO- substituiert sind; oder bei dem gegebenenfalls an benachbarten Kohlenstoffatomen des alicyclischen Rings ein alicyclischer, aromatischer oder heteroaromatischer Ring ankondensiert ist, welcher unsubstituiert oder mit Halogen, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{20}$-Alkyl, $C_1$-$C_{20}$-Halogenalkyl, $C_1$-$C_{20}$-Hydroxyalkyl, $C_1$-$C_6$-Cyanoalkyl, $C_3$-$C_8$-Cycloalkyl, $C_6$-$C_{16}$-Aryl, $C_7$-$C_{16}$-Aralkyl, $C_3$-$C_6$-Heterocycloalkyl, $C_3$-$C_{16}$-Heteroaryl, $C_4$-$C_{16}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_{12}$-Alkyl, $C_1$-$C_{12}$-Perfluoralkyl, Phenyl oder Benzyl bedeuten;

$R_4$ und $R_{13}$ unabhängig $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl, $C_7$-$C_{16}$-Aralkyl bedeuten;

$R_5$ und $R_{10}$ unabhängig voneinander Wasserstoff, $C_1$-$C_{12}$-Alkyl, Phenyl oder Benzyl bedeuten, wobei die Alkylgruppen ihrerseits unsubstituiert oder mit $C_1$-$C_{12}$-Alkoxy oder $C_3$-$C_8$-Cycloalkyl substituiert sind;

$R_6$, $R_7$ und $R_8$ unabhängig voneinander $C_1$-$C_{12}$-Alkyl, $C_1$-$C_{12}$-Perfluoralkyl, Phenyl oder Benzyl bedeuten;

M für ein Alkalimetall und $M_1$ für ein Erdalkalimetall stehen; und

u für 0 oder 1 steht;

wobei der mit $Q_1$ gebildete alicyclische Ring gegebenenfalls weitere nicht-aromatische Doppelbindungen enthält;

$Q_2$ Wasserstoff, $C_1$-$C_{20}$-Alkyl, $C_1$-$C_{20}$-Halogenalkyl, $C_1$-$C_{12}$-Alkoxy, Halogen, -CN, $R_{11}$-$X_2$- darstellt;

$R_{11}$ $C_1$-$C_{20}$-Alkyl, $C_1$-$C_{20}$-Halogenalkyl, $C_1$-$C_{20}$-Hydroxyalkyl, $C_3$-$C_8$-Cycloalkyl, $C_6$-$C_{16}$-Aryl oder $C_7$-$C_{16}$-Aralkyl bedeutet;

$X_2$ -C(O)-O- oder $-C(O)-NR_{12}-$ ist;

$R_{12}$ Wasserstoff, $C_1$-$C_{12}$-Alkyl, Phenyl oder Benzyl darstellt;

wobei die vorgenannten Cycloalkyl-, Heterocycloalkyl-, Aryl-, Heteroaryl-, Aralkyl- und Heteroaralkylgruppen unsubstituiert oder mit $C_1$-$C_{12}$-Alkyl, $C_1$-$C_{12}$-Alkoxy, $-NO_2$, -CN oder Halogen substituiert sind, und wobei die Heteroatome der vorgenannten Heterocycloalkyl-, Heteroaryl- und Heteroaralkylgruppen aus der Gruppe -O-, -S-, $-NR_9-$ und -N= ausgewählt sind; und

$R_9$ Wasserstoff, $C_1$-$C_{12}$-Alkyl, Phenyl oder Benzyl darstellt.

**30.** Zusammensetzung gemäss Anspruch 31, dadurch gekennzeichnet, dass in den Cycloolefinen der Formel II

$Q_1$ ein Rest mit mindestens einem Kohlenstoffatom ist, der zusammen mit der $-CH=CQ_2$-Gruppe einen 3- bis 20-gliedrigen alicyclischen Ring bildet, welcher gegebenenfalls ein oder mehrere Heteroatome ausgewählt aus der Gruppe Silicium, Sauerstoff, Stickstoff und Schwefel enthält; und der unsubstituiert oder mit Halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Hetcroaryl, $C_4$-$C_{12}$-Heteroarakyl oder $R_4$-X- substituiert ist; oder bei dem zwei benachbarte C-Atome in diesem Rest $Q_1$ mit -CO-O-CO- oder $-CO-NR_5-$CO- substituiert sind; oder bei dem gegebenenfalls an benachbarten Kohlenstoffatomen ein alicyclischer, aromatischer oder heteroaromatischer Ring ankondensiert ist, welcher unsubstituiert oder mit Halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1$-$C_{12}$-Alkyl, $C_1$-$C_{12}$-Halogenalkyl, $C_1$-$C_{12}$-Hydroxyalkyl, $C_1$-$C_4$-Cyanoalkyl, $C_3$-$C_6$-Cycloalkyl, $C_6$-$C_{12}$-Aryl, $C_7$-$C_{12}$-Aralkyl, $C_3$-$C_6$-Heterocycloalkyl, $C_3$-$C_{12}$-Heteroaryl, $C_4$-$C_{12}$-Heteroaralkyl oder $R_{13}$-$X_1$- substituiert ist;

X und $X_1$ unabhängig voneinander für -O-, -S-, -CO-, -SO-, $-SO_2-$, -O-C(O)-, -C(O)-O-, $-C(O)-NR_5-$, $-NR_{10}-C(O)-$, $-SO_2-O-$ oder $-O-SO_2-$ stehen;

$R_1$, $R_2$ und $R_3$ unabhängig voneinander $C_1$-$C_6$-Alkyl, $C_1$-$C_6$-Perfluoralkyl, Phenyl oder Benzyl bedeuten;

| | |
|---|---|
| M | für ein Alkalimetall und $M_1$ für ein Erdalkalimetall stehen; |
| $R_4$ und $R_{13}$ | unabhängig voneinander $C_1$-$C_{12}$-Alkyl, $C_1$-$C_{12}$-Halogenalkyl, $C_1$-$C_{12}$-Hydroxyalkyl, $C_3$-$C_8$-Cycloalkyl, $C_6$-$C_{12}$-Aryl, $C_7$-$C_{12}$-Aralkyl bedeuten; |
| $R_5$ und $R_{10}$ | unabhängig voneinander Wasserstoff, $C_1$-$C_6$-Alkyl, Phenyl oder Benzyl bedeutet, wobei die Alkylgruppen ihrerseits unsubstituiert oder mit $C_1$-$C_6$-Alkoxy oder $C_3$-$C_6$-Cycloalkyl substituiert sind; |
| $R_6$, $R_7$ und $R_8$ | unabhängig voneinander $C_1$-$C_6$-Alkyl, $C_1$-$C_6$-Perfluoralkyl, Phenyl oder Benzyl darstellen; |
| u | für 0 oder 1 steht; |

wobei der mit $Q_1$ gebildete alicyclische Ring gegebenenfalls weitere nichtaromatische Doppelbindungen enthält;

| | |
|---|---|
| $Q_2$ | Wasserstoff, $C_1$-$C_{12}$-Alkyl, $C_1$-$C_{12}$-Halogcnalkyl, $C_1$-$C_6$-Alkoxy, Halogen, -CN, $R_{11}$-$X_2$- bedeutet; |
| $R_{11}$ | $C_1$-$C_{12}$-Alkyl, $C_1$-$C_{12}$-Halogenalkyl, $C_1$-$C_{12}$-Hydroxyalkyl, $C_3$-$C_6$-Cycloalkyl, $C_6$-$C_{12}$-Aryl oder $C_7$-$C_{12}$-Aralkyl darstellt; |
| $X_2$ | -C(O)-O- oder -C(O)-$NR_{12}$- ist; und |
| $R_{12}$ | Wasserstoff, $C_1$-$C_6$-Alkyl, Phenyl oder Benzyl bedeutet; |

wobei die Cycloalkyl-, Heterocycloalkyl-, Aryl-, Heteroaryl-, Aralkyl- und Heteroaralkylgruppen unsubstituiert oder mit $C_1$-$C_6$-Alkyl, $C_1$-$C_6$-Alkoxy, -$NO_2$, -CN oder Halogen substituiert sind, und wobei die Heteroatome der Heterocycloalkyl-, Heteroaryl- und Heteroaralkylgruppen aus der Gruppe -O-, -S-, -$NR_9$- und -N= ausgewählt sind; und

| | |
|---|---|
| $R_9$ | Wasserstoff, $C_1$-$C_6$-Alkyl, Phenyl oder Benzyl bedeutet. |

**31.** Zusammensetzung gemäss Anspruch 29, dadurch gekennzeichnet, dass in den Cycloolefinen der Formel II

| | |
|---|---|
| $Q_1$ | ein Rest mit mindestens einem Kohlenstoffatom ist, der zusammen mit der -CH=$CQ_2$-Gruppe einen 3- bis 10-gliedrigen alicyclischen Ring bildet, der gegebenenfalls ein Heteroatom ausgewählt aus der Gruppe Silicium, Sauerstoff, Stickstoff und Schwefel enthält, und der unsubstituiert oder mit Halogen, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_4$-X- substituiert ist; oder bei dem an benachbarten Kohlenstoffatomen gegebenenfalls ein alicyclischer, aromatischer oder heteroaromatischer Ring ankondensiert ist, welcher unsubstituiert oder durch Halogen, -CN, -$NO_2$, $R_6R_7R_8$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$-Alkyl, $C_1$-$C_6$-Halogenalkyl, $C_1$-$C_6$-Hydroxyalkyl, $C_1$-$C_4$-Cyanoalkyl, $C_3$-$C_6$-Cycloalkyl, Phenyl, Benzyl oder $R_{13}$-$X_1$- substituiert ist; |
| $R_1$, $R_2$ und $R_3$ | unabhängig voneinander $C_1$-$C_4$-Alkyl, $C_1$-$C_4$-Perfluoralkyl, Phenyl oder Benzyl bedeuten; |
| M | für ein Alkalimetall und $M_1$ für ein Erdalkalimetall stehen; |
| $R_4$ und $R_{13}$ | unabhängig voneinander $C_1$-$C_6$-Alkyl, $C_1$-$C_6$-Halogenalkyl, $C_1$-$C_6$-Hydroxyalkyl oder $C_3$-$C_6$-Cycloalkyl bedeuten; |
| X und $X_1$ | unabhängig voneinander für -O-, -S-, -CO-, -SO- oder -$SO_2$- stehen; |
| $R_6$, $R_7$ und $R_8$ | unabhängig voneinander $C_1$-$C_4$-Alkyl, $C_1$-$C_4$-Perfluoralkyl, Phenyl oder Benzyl darstellen; |
| und $Q_2$ | Wasserstoff bedeutet. |

**32.** Zusammensetzung gemäss Anspruch 29, dadurch gekennzeichnet, dass es sich bei den Verbindungen der Formel II um Norbornen und Norbronenderivate handelt.

**33.** Zusammensetzung gemäss Anspruch 19, dadurch gekennzeichnet, dass die gespannten Cycloolefine nur aus Kohlenstoff und Wasserstoff aufgebaut sind.

**34.** Zusammensetzung gemäss Anspruch 19, dadurch gekennzeichnet, dass die Comonomere ausgewählt sind aus der Gruppe bestehend aus Norbornen, Cyclopenten, Cyclohepten und Cycloocten.

**35.** Zusammensetzung gemäss Anspruch 1, dadurch gekennzeichnet, dass die Methylgruppe und die substituierte Methylgruppe der Formel VII entspricht,

$$-CH_2-R \quad (VII),$$

worin

R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituertes $C_6$-$C_{16}$-Aryl oder $C_4$-$C_{15}$-Heteroaryl mit 1 bis 3 Heteroatomen aus der Gruppe O, S und N darstellt; und $R_{26}$, $R_{27}$ und $R_{29}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy substituiert ist; und

$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

**36.** Zusammensetzung gemäss Anspruch 365 dadurch gekennzeichnet, dass die Gruppe R in Formel VII für H, $-C(CH_3)_3$, $-C(CH_3)_2C_6H_5$, unsubstituiertes oder mit Methyl, Ethyl, Methoxy oder Ethoxy substituiertes Phenyl, $-CF_3$ oder $-Si(CH_3)_3$ steht.

**37.** Zusammensetzung gemäss Anspruch 1, dadurch gekennzeichnet, dass die Silylmethylgruppe der Formel VIIa entspricht,

$$-CH_2-SiR_{29}R_{30}R_{31} \quad (VIIa),$$

worin

$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten.

**38.** Zusammensetzung gemäss Anspruch 37, dadurch gekennzeichnet, dass in der Gruppe der Formel VIIa $R_{23}$ bis $R_{31}$ $C_1$-$C_4$-Alkyl, Phenyl oder Benzyl darstellen.

**39.** Zusammensetzung gemäss Anspruch 37, dadurch gekennzeichnet, dass die Gruppe der Formel VIIa aus $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si(C_6H_5)_3$, $-CH_2-Si(CH_3)_2[C(CH_3)_2CH(CH_3)_2]$, $-CH_2-Si(CH_3)_2(n-C_{12}H_{25})$, $-CH_2-Si(CH_2-C_6H_5)_3$, $-CH_2-Si(CH_3)_2(n-C_{18}H_{37})$, $-CH_2-Si(C_6H_5)(CH_3)_2$ und $-CH_2-Si(CH_2-C_6H_5)(CH_3)_2$ besteht.

**40.** Zusammensetzung gemäss Anspruch 1, dadurch gekennzeichnet, dass die Silylmethylgruppe $-CH_2-Si(CH_3)_3$ ist.

**41.** Zusammensetzung gemäss Anspruch 1, dadurch gekennzeichnet, dass die übrigen Valenzen der Mo(VI)-, W(VI)-, Nb(V)- und Ta(V)-Atome mit gleichen oder verschiedenen Liganden aus der Gruppe =O, $=N-R_{33}$, sekundäre Amine mit 2 bis 18 C-Atomen, $R_{32}O$- oder $R_{32}S$-, Halogen, Cyclopentadienyl oder überbrücktem Biscyclopentadienyl, Indenyl, Bisphenolaten, tridentaten monoanionischen Liganden, oder Neutralliganden aus der Gruppe Ether, Nitrile, CO und tertiäre Phosphinen und tertiäre Amine abgesättigt sind, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl oder Halogen substituiertes Benzyl oder Phenylethyl darstellen; und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl, oder Halogen substituiertes Phenyl, oder unsubstituiertes oder mit $C_1$-$C_6$-Alkyl, $C_1$-$C_6$-Alkoxy, $C_1$-$C_6$-Alkoxymethyl-, $C_1$-$C_6$-Alkoxyethyl- oder Halogen substituiertes Benzyl oder Phenylethyl bedeutet.

**42.** Zusammensetzung gemäss Anspruch 41, dadurch gekennzeichnet, dass die Molybdän-, Wolfram-, Niob- und Tantalverbindungen einer der Formeln VIII bis VIIId entsprechen,

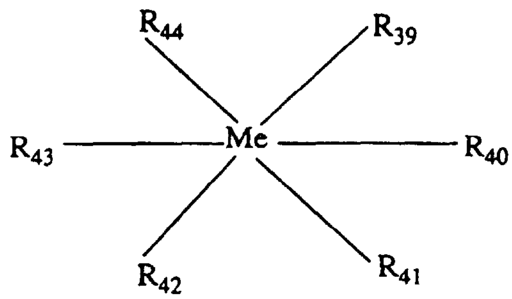

(VIII),

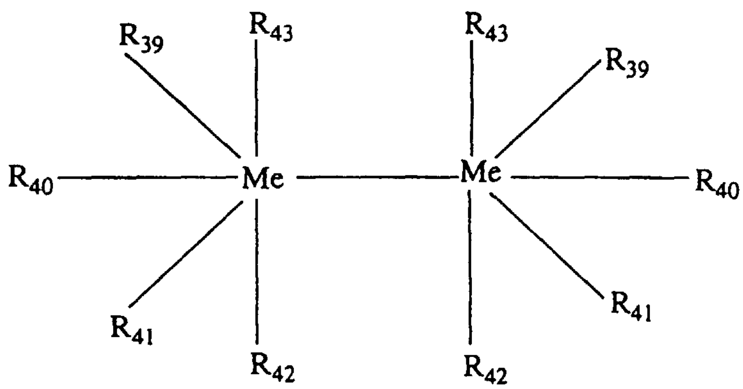

(VIIIa),

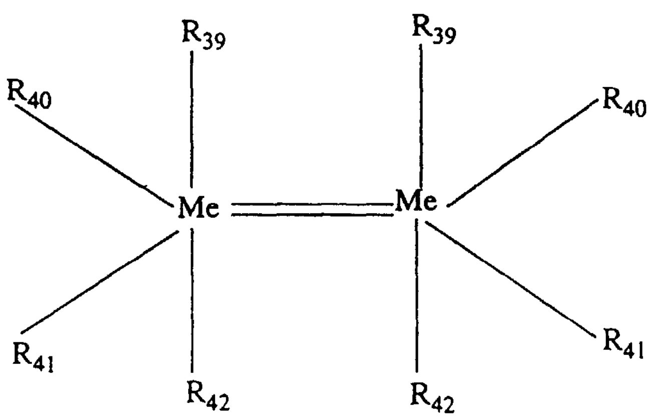

(VIIIb),

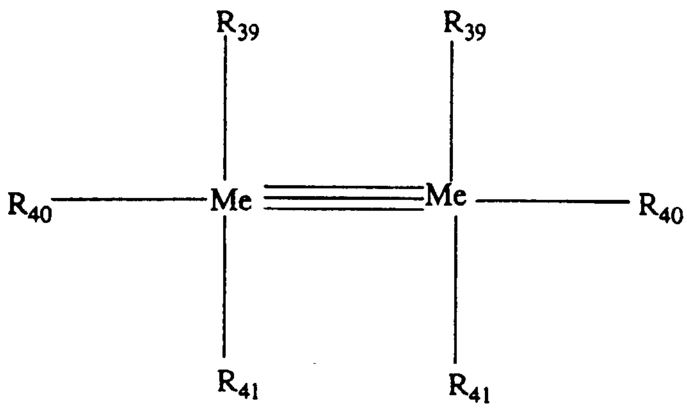

(VIIIc),

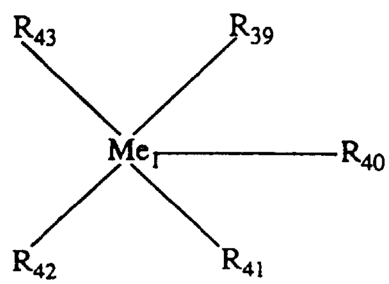

(VIIId),

worin

Me für Mo(VI) oder W(VI) steht,
$Me_1$ für Nb(V) oder Ta(V) steht,
mindestens zwei der Reste $R_{39}$ bis $R_{43}$ einen Rest $-CH_2-R$ der Formel VII bedeuten, R H, $-CF_3$, $-CR_{26}R_{27}R_{28}$, $-SiR_{29}R_{30}R_{31}$, unsubstituiertes oder mit $C_1$-$C_6$-Alkyl oder $C_1$-$C_6$-Alkoxy substituiertes $C_6$-$C_{16}$-Aryl oder $C_4$-$C_{15}$-Heteroaryl mit 1 bis 3 Heteroatomen aus der Gruppe O, S und N darstellt;
$R_{26}$, $R_{27}$ und $R_{29}$ unabhängig voneinander $C_1$-$C_{10}$- Alkyl bedeuten, das unsubstituiert oder mit $C_1$-$C_{10}$-Alkoxy substituiert ist, oder $R_{26}$ und $R_{27}$ diese Bedeutung haben und $R_{28}$ $C_6$-$C_{10}$-Aryl oder $C_4$-$C_9$-Heteroaryl ist, das unsubstituiert oder mit $C_1$-$C_6$-Alkyl oder $C_1$-$C_6$-Alkoxy substituiert ist; und
$R_{29}$, $R_{30}$ und $R_{31}$ unabhängig voneinander $C_1$-$C_{18}$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;
je zwei der übrigen Reste von $R_{39}$ bis $R_{43}$ =O oder $=N-R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt; und/oder
die übrigen Reste von $R_{39}$ bis $R_{43}$ Sekundäramino mit 2 bis 18 C-Atomen, $R_{32}O$- oder $R_{32}S$-, Halogen, Indenyl, Cyclopentadienyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl) amino, Di($C_1$-$C_6$-alkyl)amino-$C_1$-$C_3$-alkyl oder Halogen substituiertes Benzyl oder Phenylethyl darstellen.

**43.** Zusammensetzung gemäss Anspruch 42, dadurch gekennzeichnet, dass die Molybdän- und Wolframverbindungen der Formel VIII entsprechen, worin

a) $R_{39}$ bis $R_{44}$ einen Rest der Formel VII $-CH_2-R$ bedeuten, oder

b) $R_{39}$ und $R_{40}$ einen Rest der Formel VII $-CH_2-R$ darstellen, $R_{41}$ und $R_{42}$ zusammen den Rest $=N-R_{33}$ bedeuten, und $R_{43}$ und $R_{44}$ zusammen unabhängig voneinander $R_{32}-O-$ oder Halogen darstellen, oder

c) $R_{43}$ und $R_{44}$ zusammen und $R_{41}$ und $R_{42}$ zusammen den Rest $=N-R_{33}$ bedeuten, und $R_{39}$ und $R_{40}$ einen Rest der Formel VII $-CH_2-R$ darstellen.

**44.** Zusammensetzung gemäss Anspruch 42, dadurch gekennzeichnet, dass die Molybdän- und Wolframverbindungen den Formeln IX, IXa oder IXb entsprechen,

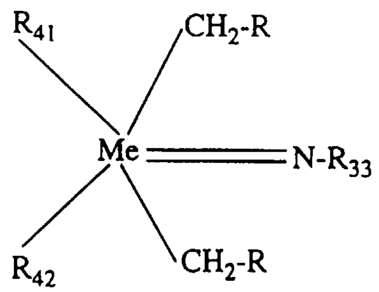

(IX),

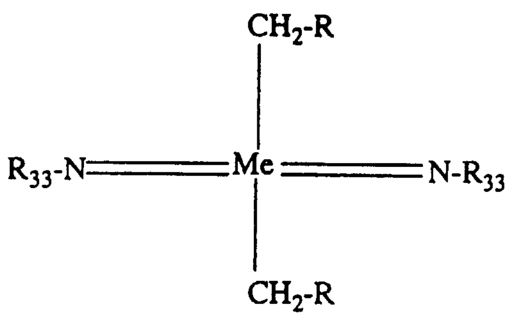

(IXa),

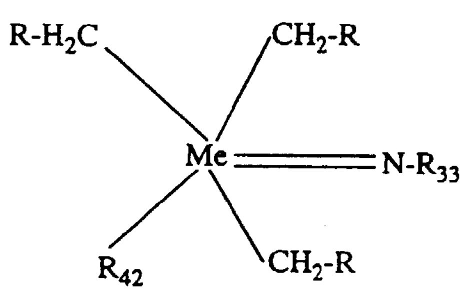

(IXb),

worin

Me für Mo(VI) oder W(VI) steht,
R H, $-C(CH_3)_3$, $-C(CH_3)_2-C_6H_5$, $-C_6H_5$ oder $-Si(C_1-C_4\text{-Alkyl})_3$ darstellt,
$R_{33}$ Phenyl oder mit 1 bis 3 $C_1-C_4$-Alkyl oder $C_1-C_4$-Alkoxy substituiertes Phenyl bedeutet,
$R_{41}$ unsubstituiertes oder mit Fluor substituiertes lineares oder verzweigtes $C_1-C_4$-Alkoxy darstellt, und
$R_{42}$ die gleiche Bedeutung wie $R_{41}$ hat oder für F, Cl oder Br steht.

**45.** Zusammensetzung gemäss Anspruch 42, dadurch gekennzeichnet, dass sie Niob- oder Tantalverbindungen der

Formel VIIId enthält, worin

a) $R_{39}$ bis $R_{43}$ einen Rest der Formel VII $-CH_2-R$ bedeuten, oder

b) $R_{39}$ und $R_{40}$ einen Rest der Formel VII $-CH_2-R$ darstellen, $R_{41}$ und $R_{42}$ zusammen den Rest $=N-R_{33}$ bedeuten, und $R_{43}$ unsubstituiertes oder substituiertes Indenyl, Cyclopentadienyl, $R_{32}$-O- oder Halogen darstellen, oder

c) $R_{39}$, $R_{40}$ und $R_{41}$ einen Rest der Formel VII $-CH_2-R$ darstellen, und $R_{42}$ und $R_{43}$ zusammen den Rest $=N-R_{33}$ bedeuten, oder

$R_{39}$, $R_{40}$, $R_{41}$ und $R_{42}$ einen Rest der Formel VII $-CH_2-R$ darstellen, und $R_{43}$ unsubstituiertes oder substituiertes Cyclopentadienyl, Indenyl, $R_{32}$-O- oder Halogen bedeutet.

**46.** Zusammensetzung gemäss Anspruch 42, dadurch gekennzeichnet, dass sie Niob- oder Tantalverbindungen der Formel IXc, IXd oder IXe enthält,

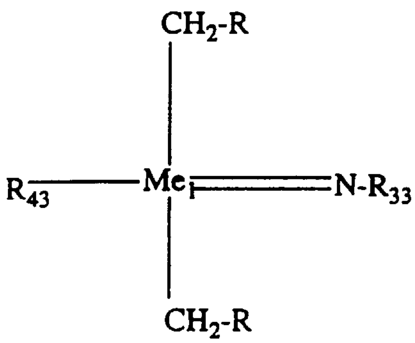

(IXc),

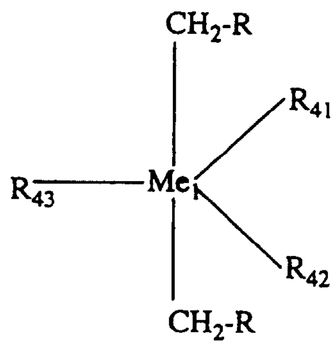

(IXd),

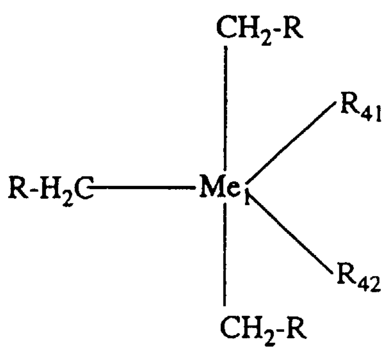

(IXe),

worin

$Me_1$ für Nb(V) oder Ta(V) steht,

R H, $-C(CH_3)_3$, $-C(CH_3)_2-C_6H_5$, $-C_6H_5$ oder $-Si(C_1-C_4\text{-Alkyl})_3$ darstellt,

$R_{33}$ Phenyl oder mit 1 bis 3 $C_1$-$C_4$-Alkyl oder $C_1$-$C_4$-Alkoxy substituiertes Phenyl bedeutet,

$R_{43}$ in Formel IXc die Gruppe $-CH_2-R$ oder F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellt;

$R_{41}$, $R_{42}$ und $R_{43}$ in Formel IXd unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder In-

denyl bedeuten; und

$R_{41}$ und $R_{42}$ in Formel IXe unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellen.

**47.** Zusammensetzung gemäss Anspruch 1, dadurch gekennzeichnet, dass sie Niob-, Tantal-, Molybdän- oder Wolframverbindungen der Formel X oder Xa enthält,

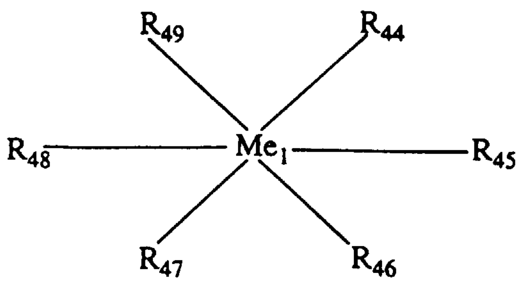

(X),

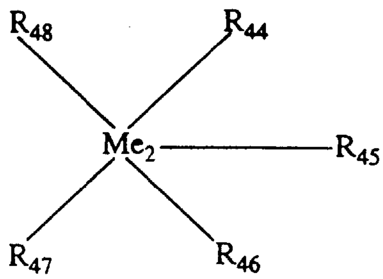

(Xa),

worin

$Me_1$ für Mo(VI) oder W(VI) steht;

$Me_2$ für Nb(V) oder Ta(V) steht;

einer der Reste $R_{44}$ bis $R_{49}$ einen Rest $-CH_2-SiR_{29}R_{30}R_{31}$ der Formel VIIa bedeutet; wenigstens einer der Reste $R_{44}$ bis $R_{49}$ F, Cl oder Br darstellt;

$R_{29}$, $R_{30}$ und $R_{31}$ unabhängig voneinander $C_1$-$C_6$-Alkyl, $C_5$- oder $C_6$-Cycloalkyl, oder unsubstituiertes oder mit $C_1$-$C_6$-Alkyl oder $C_1$-$C_6$-Alkoxy substituiertes Phenyl oder Benzyl bedeuten;

in Formel X zwei oder jeweils zwei und in Formel Xa zwei der übrigen Reste von $R_{44}$ bis $R_{49}$ je zusammen =O oder =N-$R_{33}$ bedeuten, und $R_{33}$ unsubstituiertes oder mit $C_1$-$C_6$-Alkoxy substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellt, und

die übrigen Reste $R_{44}$ bis $R_{48}$ Sekundäramino mit 2 bis 18 C-Atomen, $R_{32}O$- oder $R_{32}S$-, Halogen, unsubstituiertes oder substituiertes Cyclopentadienyl, Indenyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen; oder in

den Formeln X und Xa die übrigen Reste von $R_{44}$ bis $R_{49}$ unabhängig voneinander Sekundäramino mit 2 bis

18 C-Atomen, $R_{32}O$- oder $R_{32}S$-, Halogen, unsubstituiertes oder substituiertes Cyclopentadienyl, Indenyl oder überbrücktes Biscyclopentadienyl oder einen Neutralliganden bedeuten, worin die $R_{32}$ unabhängig voneinander unsubstituiertes oder mit $C_1$-$C_6$-Alkoxy oder Halogen substituiertes lineares oder verzweigtes $C_1$-$C_{18}$-Alkyl, unsubstituiertes oder mit $C_1$-$C_6$-Alkyl, $C_1$-$C_6$-Alkoxy oder Halogen substituiertes $C_5$- oder $C_6$-Cycloalkyl, unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Phenyl, oder unsubstituiertes oder mit $C_1$-$C_6$-Alkyl, $C_1$-$C_6$-Alkoxy, $C_1$-$C_6$-Alkoxymethyl, $C_1$-$C_6$-Alkoxyethyl, Di($C_1$-$C_6$-alkyl)amino, Di($C_1$-$C_6$-alkyl)amino-$C_1$-$C_3$-alkyl oder Halogen substituiertes Benzyl oder Phenylethyl darstellen.

**48.** Zusammensetzung gemäss Anspruch 47, dadurch gekennzeichnet, dass sie Niob-, Tantal-, Molybdän- oder Wolframverbindungen der Formel X oder Xa enthält, worin $R_{44}$ einen Rest der Formel VIIa $-CH_2-Si(R_{29}R_{30}R_{31})_3$ und $R_{45}$ F, Cl oder Br darstellen; und

(a) in Formel X $R_{46}$ und $R_{47}$ sowie $R_{48}$ und $R_{49}$ jeweils zusammen den Rest $=N-R_{33}$ bedeuten, oder $R_{46}$ und $R_{47}$ zusammen den Rest $=N-R_{33}$ bedeuten, und $R_{48}$ und $R_{49}$ unabhängig voneinander unsubstituiertes oder substituiertes Cyclopentadienyl, Indenyl $R_{32}$-O- oder Halogen darstellen, oder
b) in Formel Xa $R_{46}$ und $R_{47}$ zusammen den Rest $=N-R_{33}$ bedeuten, und $R_{48}$ unsubstituiertes oder substituiertes Cyclopentadienyl, Indenyl, $R_{32}$-O- oder Halogen bedeuten, oder in Formel Xa $R_{46}$, $R_{47}$ und $R_{48}$ unabhängig voneinander unsubstituiertes oder substituiertes Cyclopentadienyl, Indenyl, $R_{32}$-O- oder Halogen bedeuten.

**49.** Zusammensetzung gemäss Anspruch 47, dadurch gekennzeichnet, dass sie Niob-, Tantal-, Molybdän- oder Wolframverbindungen der Formel XI, XIa, XIb oder XIc enthält,

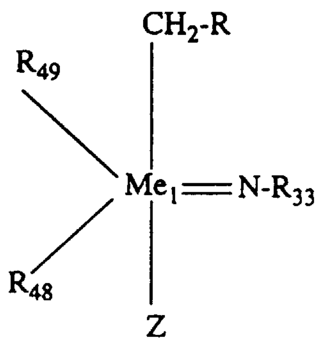 (XI), 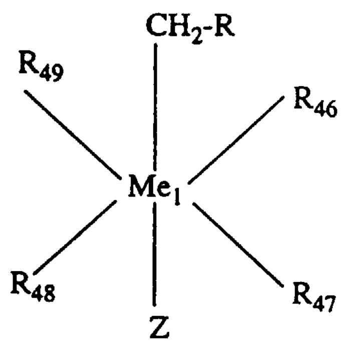 (XIa)

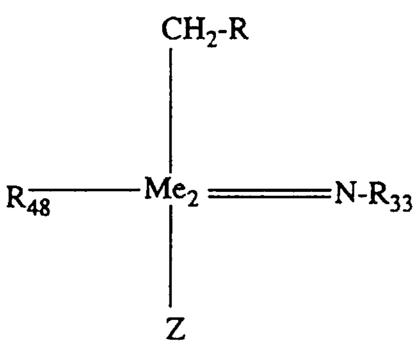 (XIb), 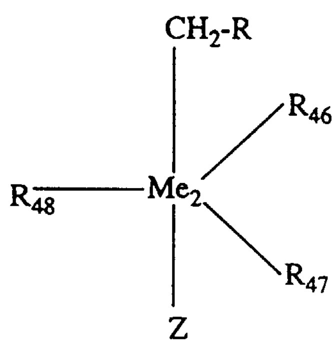 (XIc),

worin

$Me_1$ für Mo(VI) oder W(VI) steht;
$Me_2$ für Nb(V) oder Ta(V) steht;
R $-Si(C_1-C_4\text{-Alkyl})_3$ darstellt;
Z für F, Cl oder Br steht;

$R_{33}$ Phenyl oder mit 1 bis 3 $C_1$-$C_4$-Alkyl oder $C_1$-$C_4$-Alkoxy substituiertes Phenyl bedeutet,

(a) $R_{48}$ und $R_{49}$ in Formel XI zusammen die Gruppe $=NR_{33}$ oder einzeln unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder $R_{41}$, $R_{42}$, $R_{43}$ und $R_{44}$ unsubstituiertes oder mit $C_1$-$C_4$-Alkyl substituiertes Cyclopentadienyl darstellen;
(b) $R_{46}$, $R_{47}$ und $R_{48}$ und $R_{49}$ in Formel XIa unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl bedeuten;
(c) $R_{48}$ in Formel XIb F, Cl, Br, unsubstituiertes oder mit Fluor substituiertes lineares oder verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellt; und
(d) $R_{46}$, $R_{47}$ und $R_{48}$ in Formel XIc unabhängig voneinander F, Cl, Br, unsubstituiertes oder mit Fluor substituiertes lineares oder besonders verzweigtes $C_1$-$C_4$-Alkoxy, unsubstituiertes oder mit $C_1$-$C_4$-Alkyl oder $C_1$-$C_4$-Alkoxy substituiertes Phenyloxy oder unsubstituiertes oder mit $C_1$-$C_4$-Alkyl substituiertes Cyclopentadienyl oder Indenyl darstellen.

**50.** Zusammensetzung gemäss Anspruch 47, dadurch gekennzeichnet, dass sie Verbindungen der Formel XII, XIIa, XIIb oder XIIc enthält,

$$(R_{33}\text{-}N{=})_2Me_1X_aCH_2Si(CH_3)_3 \qquad \text{(XII)},$$

$$(R_{33}\text{-}N{=})R_{46}Me_1X_a(OR_{32})CH_2Si(CH_3)_3 \qquad \text{(XIIa)},$$

$$R_{46}R_{47}Me_2X_a(OR_{32})CH_2Si(CH_3)_3 \qquad \text{(XIIb)},$$

$$R_{33}\text{-}N{=}Me_2X_a(OR_{32})CH_2Si(CH_3)_3 \qquad \text{(XIIc)},$$

worin

$Me_1$ für Mo(VI) oder W(VI);
$Me_2$ für Nb(V) oder Ta(V); und
$X_a$ für F, Cl oder Br stehen;
$R_{32}$ verzweigtes gegebenenfalls teilweise oder vollständig mit Fluor substituiertes $C_3$-oder $C_4$-Alkyl oder Phenyloxy oder mit 1 bis 3 Methyl- oder Ethylgruppen substituiertes Phenyloxy darstellt;
$R_{33}$ Phenyl oder mit 1 oder 2 $C_1$-$C_4$-Alkylgruppen substituiertes Phenyl bedeutet; $R_{46}$ und $R_{47}$ unabhängig voneinander unsubstituiertes oder mit 1 bis 5 Methylgruppen substituiertes Cyclopentadienyl, Indenyl, $X_a$ oder $R_{32}O$- bedeuten; und
$R_{48}$ unsubstituiertes oder mit 1 bis 5 Methylgruppen substituiertes Cyclopentadienyl, $X_a$ oder $R_{32}O$- darstellt.

**51.** Zusammensetzung gemäss Anspruch 1, dadurch gekennzeichnet, dass sie den Einkomponenten-Katalysator in einer Menge von 0,001 bis 20 Mol-% enthält, bezogen auf die Menge der Monomeren.

**52.** Zusammensetzung gemäss Anspruch 51, dadurch gekennzeichnet, dass sie den Einkomponenten-Katalysator in einer Menge von 0,01 bis 15 Mol-% enthält.

**53.** Zusammensetzung gemäss Anspruch 51, dadurch gekennzeichnet, dass sie den Einkomponenten-Katalysator in einer Menge von 0,01 bis 10 Mol-% enthält.

**54.** Zusammensetzung gemäss Anspruch 51, dadurch gekennzeichnet, dass sie den Einkomponenten-Katalysator in einer Menge von 0,01 bis 5 Mol-% enthält.

**55.** Zusammensetzung gemäss Anspruch 1, dadurch gekennzeichnet, dass sie Formulierungshilfstoffe enthält.

**56.** Verfahren zur Herstellung von Polymeren aus Acetylenen durch Photometathesepolymerisation, dadurch gekennzeichnet, dass man eine Zusammensetzung, die mindestens ein nichtflüchtiges Acetylen der Formel I,

$$R_a\text{-}C{\equiv}C\text{-}R_b \qquad (I)$$

worin

$R_a$ unsubstituiertes oder mit Halogen, -OH, -CN, $-NH_2$, $-NH(C_1\text{-}C_6\text{-Alkyl})$,$-N(C_1\text{-}C_6\text{-Alkyl})_2$, $C_1$-$C_6$-Alkyl, $C_1$-$C_6$-Alkyl-O-, $C_1$-$C_6$-Alkyl-S-, $C_1$-$C_6$-Alkyl- C(O)O-, $C_1$-$C_6$-Alkyl-OC(O)-, -C(O)-$NH_2$, $C_1$-$C_6$-Alkyl-C(O)NH- oder $C_1$-$C_6$-Alkyl-NHC(O)- substituiertes $C_1$-$C_{20}$-Alkyl, $C_3$-$C_{12}$-Cycloalkyl, ($C_3$-$C_{12}$-Cycloalkyl)-$C_1$-$C_{12}$-alkyl, $C_6$-$C_{18}$-Aryl, $C_7$-$C_{19}$-Aralkyl, $C_1$-$C_{20}$-Alkoxy, $C_3$-$C_{12}$-Cycloalkoxy, ($C_3$-$C_{12}$-Cycloalkyl)-$C_1$-$C_{12}$-alkoxy, $C_6$-$C_{18}$-Aryloxy, $C_7$-$C_{19}$-Aralkyloxy, $C_3$-$C_8$-Heterocycloalkyl mit 1 bis 3 Heteroatomen ausgewählt aus der Gruppe O, N und S, oder $C_3$-$C_{15}$-Heteroaryl mit 1 bis 3 Heteroatomen ausgewählt aus der Gruppe O, N und S darstellt, oder $R_a$ -$(O)_k$-$SiR_cR_dR_e$, $C_1$-$C_{18}$-Alkyl-OC(O)-, -C(O)-$NH_2$ oder $C_1$-$C_{18}$-Alkyl-NHC(O)- bedeutet;

$R_b$ für Wasserstoff steht oder unabhängig die Bedeutung von $R_a$ hat;

$R_c$, $R_d$ und $R_e$ unabhängig voneinander $C_1$-$C_{18}$-Alkyl, $C_1$-$C_{18}$-Alkoxy, $C_5$- oder $C_6$-Cycloalkyl, $C_5$- oder $C_6$-Cycloalkoxy oder unsubstituiertes oder mit $C_1$-$C_6$-Alkyl oder $C_1$-$C_6$-Alkoxy substituiertes Phenyl, Phenyloxy, Benzyl oder Benzyloxy bedeuten; und

k für 0 oder 1 steht;

allein oder zusammen mit einem gespannten Cycloolefin und katalytische Mengen mindestens eines Einkomponentenkatalysators aus der Gruppe Molybdän-, Wolfram-, Niob- und Tantalverbindungen enthält, die (a) entweder mindestens zwei Methylgruppen oder zwei monosubstituierte Methylgruppen ohne $\alpha$-Wasserstoffatome im Substituenten oder (b) wenigstens ein Halogen und nur eine Silylmethylgruppe am Metall gebunden enthalten.

($\alpha$) durch Bestrahlung polymerisiert, oder

($\beta$) durch kurzzeitige Bestrahlung den Einkomponenten-Katalysator aktiviert und die Polymerisation durch Erwärmen bei Temperaturen von 30 bis 300°C beendet.

**57.** Verfahren zur Herstellung von beschichteten Materialien oder Reliefabbildungen auf Trägermaterialien, bei dem man eine Zusammensetzung gemäss Anspruch 1 und gegebenenfalls Lösungsmittel als Schicht auf einem Träger aufbringt, gegebenenfalls das Lösungsmittel entfernt, und die Schicht zur Polymerisation bestrahlt, oder die Schicht durch eine Photomaske bestrahlt, nach der Bestrahlung gegebenenfalls thermisch nachhärtet, und anschliessend die nichtbestrahlten Anteile mit einem Lösungsmittel entfernt.

**58.** Beschichtetes Trägermaterial, dadurch gekennzeichnet, dass auf dem Trägermaterial eine Schicht aus einer Zusammensetzung gemäss Anspruch 1 aufgebracht ist.

**59.** Trägermaterial, dadurch gekennzeichnet, dass auf dem Trägermaterial eine polymerisierte Schicht aus einer Zusammensetzung gemäss Anspruch 1 aufgebracht ist.

## Claims

**1.** Composition comprising at least one nonvolatile acetylene of the formula I

$$R_a\text{-}C{\equiv}C\text{-}R_b \qquad (I),$$

in which

$R_a$ is $C_1$-$C_{20}$alkyl which is unsubstituted or substituted by halogen, -OH, -CN, $-NH_2$, -NH($C_1$-$C_6$alkyl), -N($C_1$-$C_6$alkyl)$_2$, $C_1$-$C_6$alkyl, $C_1$-$C_6$alkyl-O-, $C_1$-$C_6$alkyl-S-, $C_1$-$C_6$alkyl-C(O)O-, $C_1$-$C_6$alkyl-OC(O)-, -C(O)-$NH_2$, $C_1$-$C_6$alkyl-C(O)NH- or $C_1$-$C_6$alkyl- NHC(O)-, or is $C_3$-$C_{12}$cycloalkyl, ($C_3$-$C_{12}$cycloalkyl)-$C_1$-$C_{12}$alkyl, $C_6$-$C_{18}$aryl, $C_7$-$C_{19}$aralkyl, $C_1$-$C_{20}$alkoxy, $C_3$-$C_{12}$-cycloalkoxy, ($C_3$-$C_{12}$cycloalkyl)-$C_1$-$C_{12}$alkoxy, $C_6$-$C_{18}$aryloxy, $C_7$-$C_{19}$aralkyloxy, $C_3$-$C_9$heterocycloalkyl having 1 to 3 heteroatoms selected from the group O, N and S, or $C_3$-$C_{15}$heteroaryl having 1 to 3 heteroatoms selected from the group O, N and S, or $R_a$ is -(O)k-Si$R_cR_dR_e$, $C_1$-$C_{18}$alkyl-OC(O)-, -C(O)-$NH_2$ or $C_1$-$C_{18}$alkyl-NHC(O)-;
$R_b$ is hydrogen or, independently, has the meaning of $R_a$;
$R_c$, $R_d$ and $R_e$ independently of one another are $C_1$-$C_{18}$alkyl, $C_1$-$C_{18}$alkoxy $C_5$- or $C_6$cycloalkyl, $C_5$- or $C_6$cycloalkoxy or unsubstituted or $C_1$-$C_6$alkyl- or $C_1$-$C_6$alkoxy-substituted phenyl, phenyloxy, benzyl or benzyloxy; and
k is 0 or 1;

alone or together with a strained cycloolefin and catalytic amounts of a catalyst for metathesis polymerization, characterized in that it comprises at least one one-component catalyst from the group of molybdenum compounds, tungsten compounds, niobium compounds and tantalum compounds which comprise (a) either at least two methyl groups or two monosubstituted methyl groups without a hydrogen atoms in the substituent or (b) at least one halogen and only one silylmethyl group attached to the metal.

**2.** Composition according to claim 1, characterized in that the substituents for $R_a$ and $R_b$ are selected from the group -OH, -F, -Cl, -CN, $C_1$-$C_4$alkyl and $C_1$-$C_4$alkoxy.

**3.** Composition according to claim 1, characterized in that $R_a$ and $R_b$ as alkyl contain 1 to 12 C atoms.

**4.** Composition according to claim 1, characterized in that the alkyl is branched.

**5.** Composition according to claim 1, characterized in that $R_a$ and $R_b$ as cycloalkyl are $C_5$-$C_8$cycloalkyl.

**6.** Composition according to claim 1, characterized in that $R_a$ and $R_b$ as cycloalkylalkyl are $C_5$-$C_8$cycloalkyl-$CH_2$-, $C_5$-$C_8$cycloalkyl-CH($CH_3$)- or $C_5$-$C_8$cycloalkyl-C($CH_3$)$_2$-.

**7.** Composition according to claim 1, characterized in that $R_a$ and $R_b$ as aryl contain 6 to 14 C atoms.

**8.** Composition according to claim 1, characterized in that $R_a$ and $R_b$ as aralkyl contain 7 to 12 C atoms.

**9.** Composition according to claim 1, characterized in that $R_a$ and $R_b$ as heterocycloalkyl contain 4 or 5 C atoms and one or two heteroatoms from the group O, S and N.

**10.** Composition according to claim 1, characterized in that $R_a$ and $R_b$ as heteroaryl contain 4 or 5 C atoms and one or two heteroatoms from the group O, S and N.

**11.** Composition according to claim 1, characterized in that $R_c$, $R_d$ and $R_e$ as alkyl or alkoxy are linear or branched and contain 1 to 12 C atoms.

**12.** Composition according to claim 1, characterized in that $R_c$, $R_d$ and $R_e$ are $C_1$-$C_4$alkyl, $C_1$-$C_4$alkoxy, phenyl or benzyl.

**13.** Composition according to claim 1, characterized in that in the formula -(O)k-Si$R_cR_dR_e$ k is 0.

**14.** Composition according to claim 1, characterized in that $R_a$ is -Si($CH_3$)$_3$, -Si($OC_OH_5$)$_3$, -Si($CH_2$-$C_6H_5$)$_3$, -Si($CH_3$)$_2$($C_2H_5$), -Si($C_6H_5$)($CH_3$)$_2$, -Si($OCH_2$-$C_6H_5$)$_3$, -Si($CH_3$)$_2$[C($CH_3$)$_2$CH($CH_3$)$_2$], -Si(n-$C_3H_7$)$_3$, -Si(n-$C_4H_9$)$_3$, -Si($CH_3$)$_2$(n-$C_{12}H_{25}$), -Si($CH_3$)$_2$(n-$C_4H_9$), -Si($CH_3$)$_2$(t-$C_4H_9$), -Si($CH_3$)$_2$(n-$C_{18}H_{37}$), -Si($CH_2$-$C_6H_5$)($CH_3$)$_2$, -Si($C_2H_5$)$_3$, -Si($C_6H_5$)$_3$ or -Si($OCH_3$)$_3$ .

**15.** Composition according to claim 14, characterized in that $R_a$ is -Si($CH_3$)$_3$.

**16.** Composition according to claim 1, characterized in that one of the groups $R_a$ and $R_b$ is a sterically bulky group.

**17.** Composition according to claim 1, characterized in that the acetylenes are $CH_3$-C≡CH, $CH_3$-C≡C-$CH_3$, $C_2H_5$-C≡CH, n- or i-$C_3H_7$C≡CH, n-, i- or t-$C_4H_9$-C≡CH, t-$C_4H_9$-C≡C-$CH_3$, $C_4H_9$-C≡C-$C_4H_9$, $C_6H_{11}$-C≡CH, $C_6H_5$-C≡CH, $C_6H_5$C≡C$C_6H_5$, HC≡C-Si$(CH_3)_3$, $(H_3C)_3$Si-C≡C-Si$(CH_3)_3$, $CH_3$-C≡C-Si$(CH_3)_3$, t-$C_4H_9$O-C≡CH or HC≡C-Si$(OCH_3)_3$.

**18.** Composition according to claim 17, characterized in that the acetylenes are t-butylacetylene, trimethylsilylacetylene or methyl-trimethylsilylacetylene.

**19.** Composition according to claim 1, characterized in that it additionally comprises nonvolatile strained cycloolefins as comonomers.

**20.** Composition according to claim 19, characterized in that the amount of comonomers is from 0.1 to 99% by weight, based on the overall amount of the monomers.

**21.** Composition according to claim 19, characterized in that the amount of comonomers is from 1 to 95% by weight.

**22.** Composition according to claim 19, characterized in that the amount of comonomers is from 5 to 90% by weight.

**23.** Composition according to claim 19, characterized in that the amount of comonomers is from 5 to 75% by weight.

**24.** Composition according to claim 19, characterized in that the amount of comonomers is from 5 to 60% by weight.

**25.** Composition according to claim 19, characterized in that the cyclic olefins are monocyclic or polycyclic fused, and/or bridged ring systems and/or ring systems connected directly or via a bridge group and having from two to four rings, which are unsubstituted or substituted and contain heteroatoms from the group O, S, N or Si in one or more rings and/or fused aromatic or heteroaromatic rings.

**26.** Composition according to claim 25, characterized in that the individual cyclic rings contain 3 to 16 ring members.

**27.** Composition according to claim 25, characterized in that the individual cyclic rings contain 3 to 12 ring members.

**28.** Composition according to claim 25, characterized in that the individual cyclic rings contain 3 to 8 ring members.

**29.** Composition according to claim 19, characterized in that the cycloolefins correspond to the formula II

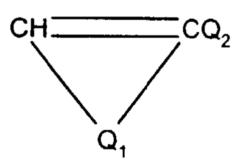

(II),

in which

$Q_1$ is a radical which has at least one carbon atom and which, together with the -CH=$CQ_2$- group, forms an at least 3-membered alicyclic ring containing, if desired, one or more heteroatoms selected from the group consisting of silicon, phosphorus, oxygen, nitrogen and sulfur; and which is unsubstituted or is substituted by halogen, =O, -CN, -$NO_2$, $R_1R_2R_3$Si-$(O)_u$-, -COOM, -$SO_3$M, -$PO_3$M, -COO$(M_1)_{1/2}$, -$SO_3(M_1)_{1/2}$, -$PO_3(M_1)_{1/2}$, $C_1$-$C_{20}$alkyl, $C_1$-$C_{20}$hydroxyalkyl $C_1$-$C_{20}$haloalkyl, $C_1$-$C_6$cyanoalkyl, $C_3$-$C_8$cycloalkyl, $C_6$-$C_{16}$aryl, $C_7$-$C_{16}$aralkyl, $C_3$-$C_6$heterocycloalkyl, $C_3$-$C_{16}$heteroaryl, $C_4$-$C_{16}$heteroaralkyl or $R_4$-X-; or in which two adjacent C atoms are substituted by -CO-O-CO- or -CO-$NR_5$-CO-; or in which, if desired, an alicyclic, aromatic or heteroaromatic ring is fused onto adjacent carbon atoms of the alicyclic ring and is unsubstituted or substituted by halogen, -CN, -$NO_2$, $R_6R_7R_8$Si-$(O)_u$-, -COOM, -$SO_3$M, -$PO_3$M,-COO$(M_1)_{1/2}$, -$SO_3(M_1)_{1/2}$, -$PO_3(M_1)_{1/2}$, $C_1$-$C_{20}$alkyl, $C_1$-$C_{20}$haloalkyl, $C_1$-$C_{20}$hydroxyalkyl, $C_1$-$C_6$cyanoalkyl, $C_3$-$C_8$cycloalkyl, $C_6$-$C_{16}$aryl, $C_7C_{16}$aralkyl, $C_3$-$C_6$heterocycloalkyl, $C_3$-$C_{16}$heteroaryl, $C_4$-$C_{16}$heteroaralkyl or $R_{13}$-$X_1$-;

| | |
|---|---|
| X and $X_1$ | independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$; |
| $R_1$, $R_2$ and $R_3$ | independently of one another are $C_1-C_{12}$alkyl, $C_1-C_{12}$perfluoroalkyl, phenyl or benzyl; |
| $R_4$ and $R_{13}$ | independently are $C_1-C_{20}$alkyl, $C_1-C_{20}$haloalkyl, $C_1-C_{20}$hydroxyalkyl, $C_3-C_8$cycloalkyl, $C_6-C_{16}$aryl, $C_7-C_{16}$aralkyl; |
| $R_5$ and $R_{10}$ | independently of one another are hydrogen, $C_1-C_{12}$alkyl, phenyl or benzyl, the alkyl groups in turn being unsubstituted or substituted by $C_1-C_{12}$alkoxy or $C_3-C_8$cycloalkyl; |
| $R_6$, $R_7$ and $R_8$ | independently of one another are $C_1-C_{12}$alkyl, $C_1-C_{12}$perfluoroalkyl, phenyl or benzyl; |
| M | is an alkali metal and $M_1$ is an alkaline earth metal; and |
| u | is 0 or 1 ; |

where the alicyclic ring formed with $Q_1$ may contain further nonaromatic double bonds;

| | |
|---|---|
| $Q_2$ | is hydrogen, $C_1-C_{20}$alkyl, $C_1-C_{20}$haloalkyl, $C_1-C_{12}$alkoxy, halogen, -CN, $R_{11}-X_2-$ |
| $R_{11}$ | is $C_1-C_{20}$alkyl, $C_1-C_{20}$haloalkyl, $C_1-C_{20}$hydroxyalkyl, $C_3-C_8$cycloalkyl, $C_6-C_{16}$aryl or $C_7-C_{16}$aralkyl; |
| $X_2$ | is -C(O)-O- or $-C(O)-NR_{12}-$; |
| $R_{12}$ | is hydrogen, $C_1-C_{12}$alkyl, phenyl or benzyl; |

where the abovementioned cycloalkyl, heterocycloalkyl, aryl, heteroaryl, aralkyl and heteroaralkyl groups are unsubstituted or substituted by $C_1-C_{12}$alkyl, $C_1-C_{12}$alkoxy, $-NO_2$, -CN or halogen, and where the heteroatoms of the abovementioned heterocycloalkyl, heteroaryl and heteroaralkyl groups are selected from the group -O-, -S-, $-NR_9-$ and -N=; and

$R_9$ is hydrogen, $C_1-C_{12}$alkyl, phenyl or benzyl.

**30.** Composition according to claim 29, characterized in that in the cycloolefins of the formula II

| | |
|---|---|
| $Q_1$ | is a radical having at least one carbon atom which together with the $-CH=CQ_2-$ group forms a 3- to 20-membered alicyclic ring which may contain one or more heteroatoms selected from the group silicon, oxygen, nitrogen and sulfur, and which is unsubstituted or substituted by halogen, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, $C_1-C_{12}$alkyl, $C_1-C_{12}$haloalkyl, $C_1-C_{12}$hydroxyalkyl, $C_1-C_4$cyanoalkyl, $C_3-C_6$cycloalkyl, $C_6-C_{12}$aryl, $C_7-C_{12}$aralkyl, $C_3-C_6$heterocycloalkyl, $C_3-C_{12}$heteroaryl, $C_4-C_{12}$heteroaralkyl or $R_4-X-$; or in which two adjacent C atoms in this radical $Q_1$ are substituted by -CO-O-CO- or $-CO-NR_5-CO-$; or in which an alicyclic, aromatic or heteroaromatic ring may be fused onto adjacent carbon atoms and is unsubstituted or substituted by halogen, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, $C_1-C_{12}$alkyl, $C_1-C_{12}$haloalkyl, $C_1-C_{12}$hydroxyalkyl, $C_1-C_4$cyanoalkyl, $C_3-C_6$cycloalkyl, $C_6-C_{12}$aryl, $C_7-C_{12}$aralkyl, $C_3-C_6$heterocycloalkyl, $C_3-C_{12}$heteroaryl, $C_4-C_{12}$heteroaralkyl or $R_{13}-X_1-$; |
| X and $X_1$ | independently of one another are -O-, -S-, -CO-, -SO-, $-SO_2-$, -O-C(O)-, -C(O)-O-, $-C(O)-NR_5-$, $-NR_{10}-C(O)-$, $-SO_2-O-$ or $-O-SO_2-$; |
| $R_1$, $R_2$ and $R_3$ | independently of one another are $C_1-C_6$alkyl, $C_1-C_6$perfluoroalkyl, phenyl or benzyl; |
| M | is an alkali metal and $M_1$ is an alkaline earth metal; |
| $R_4$ and $R_{13}$ | independently of one another are $C_1-C_{12}$alkyl, $C_1-C_{12}$haloalkyl, $C_1-C_{12}$hydroxyalkyl, $C_3-C_8$cycloalkyl, $C_6-C_{12}$aryl, $C_7-C_{12}$aralkyl; |
| $R_5$ and $R_{10}$ | independently of one another are hydrogen, $C_1-C_6$alkyl, phenyl or benzyl, the alkyl groups in turn being unsubstituted or substituted by $C_1-C_6$alkoxy or $C_3-C_6$cycloalkyl; |
| $R_6$, $R_7$ and $R_8$ | independently of one another are $C_1-C_6$alkyl, $C_1-C_6$perfluoroalkyl, phenyl or benzyl; |
| u | is 0 or 1 ; |

where the alicyclic ring formed with $Q_1$ may contain further nonaromatic double bonds;

| | |
|---|---|
| $Q_2$ | is hydrogen, $C_1-C_{12}$alkyl, $C_1-C_{12}$haloalkyl, $C_1-C_6$alkoxy, halogen, -CN, $R_{11}-X_2-$; |
| $R_{11}$ | is $C_1-C_{12}$alkyl, $C_1-C_{12}$haloalkyl, $C_1-C_{12}$hydroxyalkyl, $C_3-C_6$cycloalkyl, $C_6-C_{12}$aryl or $C_7-C_{12}$aralkyl; |
| $X_2$ | is -C(O)-O- or $-C(O)-NR_{12}-$; and |
| $R_{12}$ | is hydrogen, $C_1-C_6$alkyl, phenyl or benzyl; |

where the cycloalkyl, heterocycloalkyl, aryl, heteroaryl, aralkyl and heteroaralkyl groups are unsubstituted or sub-

stituted by $C_1$-$C_6$alkyl, $C_1$-$C_6$alkoxy, -$NO_2$, -CN or halogen, and where the heteroatoms of the heterocycloalkyl, heteroaryl and heteroaralkyl groups are selected from the group -O-, -S-, -$NR_9$- and -N=; and

$R_9$ is hydrogen, $C_1$-$C_6$alkyl, phenyl or benzyl.

**31.** Composition according to claim 29, characterized in that in the cycloolefins of the formula II

| | |
|---|---|
| $Q_1$ | is a radical having at least one carbon atom which together with the -CH=$CQ_2$- group forms a 3- to 10-membered alicyclic ring which may contain a heteroatom selected from the group silicon, oxygen, nitrogen and sulfur and which is unsubstituted or substituted by halogen, -CN, -$NO_2$, $R_1R_2R_3$Si-, -COOM, -$SO_3$M, -$PO_3$M, -COO$(M_1)_{1/2}$, -$SO_3(M_1)_{1/2}$, -$PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_4$-X-; or in which an alicyclic, aromatic or heteroaromatic ring may be fused onto adjacent carbon atoms and is unsubstituted or substituted by halogen, -CN, -$NO_2$, $R_6R_7R_8$Si-, -COOM, -$SO_3$M, -$PO_3$M, -COO$(M_1)_{1/2}$, -$SO_3(M_1)$1/2,-$PO_3(M_1)_{1/2}$, $C_1$-$C_6$alkyl, $C_1$-$C_6$haloalkyl, $C_1$-$C_6$hydroxyalkyl, $C_1$-$C_4$cyanoalkyl, $C_3$-$C_6$cycloalkyl, phenyl, benzyl or $R_{13}$-$X_1$-; |
| $R_1$, $R_2$ and $R_3$ | independently of one another are $C_1$-$C_4$alkyl, $C_1$-$C_4$perfluoroalkyl, phenyl or benzyl; |
| M | is an alkali metal and $M_1$ is an alkaline earth metal;; |
| $R_4$ and $R_{13}$ | independently of one another are $C_1$-$C_6$alkyl, $C_1$-$C_6$haloalkyl, $C_1$-$C_6$hydroxyalkyl or $C_3$-$C_6$cycloalkyl; |
| X and $X_1$ | independently of one another are -O-, -S-, -CO-, -SO- oder -$SO_2$-; |
| $R_6$, $R_7$ and $R_8$ | independently of one another are $C_1$-$C_4$alkyl, $C_1$-$C_4$perfluoroalkyl, phenyl or benzyl; |
| and $Q_2$ | is hydrogen. |

**32.** Composition according to claim 29, characterized in that the compounds of the formula II are norbornene and norbornene derivatives.

**33.** Composition according to claim 19, characterized in that the strained cycloolefins are composed only of carbon and hydrogen.

**34.** Composition according to claim 19, characterized in that the comonomers are selected from the group consisting of norbornene, cyclopentene, cycloheptene and cyclooctene.

**35.** Composition according to claim 1, characterized in that the methyl group and the substituted methyl group correspond to the formula VII

$$-CH_2-R \qquad (VII),$$

R is H, -$CF_3$, -$CR_{26}R_{27}R_{28}$, -$SiR_{29}R_{30}R_{31}$, unsubsituted or $C_1$-$C_6$alkyl- or $C_1$-$C_6$alkoxy-substituted $C_6$-$C_{16}$aryl or $C_4$-$C_{15}$heteroaryl having 1 to 3 heteroatoms from the group O, S and N; and

$R_{26}$, $R_{27}$ and $R_{28}$ independently of one another are $C_1$-$C_{10}$alkyl which is unsubstituted or substituted by $C_1$-$C_{10}$alkoxy, or $R_{26}$ and $R_{27}$ have this meaning and $R_{28}$ is $C_6$-$C_{10}$aryl or $C_4$-$C_9$heteroaryl which is unsubstituted or substituted by $C_1$-$C_6$alkyl or $C_1$-$C_6$alkoxy; and

$R_{29}$, $R_{30}$ and $R_{31}$ independently of one another are $C_1$-$C_{18}$alkyl, $C_5$- or $C_6$cycloalkyl, or unsubstituted or $C_1$-$C_6$alkyl- or $C_1$-$C_6$alkoxy-substituted phenyl or benzyl.

**36.** Composition according to claim 35, characterized in that the group R in formula VII is H, -$C(CH_3)_3$, -$C(CH_3)_2C_6H_5$, phenyl which is unsubstituted or is substituted by methyl, ethyl, methoxy or ethoxy, or is -$CF_3$ or -$Si(CH_3)_3$.

**37.** Composition according to claim 1, characterized in that the silylmethyl group corresponds to the formula VIIa

$$-CH_2-SiR_{29}R_{30}R_{31} \qquad (VIIa),$$

in which

$R_{29}$, $R_{30}$ and $R_{31}$ independently of one another are $C_1$-$C_{18}$alkyl, $C_5$- or $C_6$cycloalkyl, or are unsubstituted or $C_1$-$C_6$alkyl- or $C_1$-$C_6$alkoxy-substituted phenyl or benzyl.

**38.** Composition according to claim 37, characterized in that in the group of the formula VIIa $R_{29}$ to $R_{31}$ are $C_1$-$C_4$alkyl, phenyl or benzyl.

**39.** Composition according to claim 37, characterized in that the group of the formula VIIa consists of $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si(C_6H_5)_3$, $-CH_2-Si(CH_3)_2[C(CH_3)_2CH(CH_3)_2]$, $-CH_2-Si(CH_3)_2(n-C_{12}H_{25})$, $-CH_2-Si(CH_2-C_6H_5)_3$, $-CH_2-Si(CH_3)_2(n-C_{18}H_{37})$, $-CH_2-Si(C_6H_5)(CH_3)_2$ and $-CH_2-Si(CH_2-C_6H_5)(CH_3)_2$.

**40.** Composition according to claim 1, characterized in that the silylmethyl group is $-CH_2-Si(CH_3)_3$.

**41.** Composition according to claim 1, characterized in that the remaining valences of the Mo(VI)-, W(VI)-, Nb(V)- and Ta(V) atoms are satisfied by identical or different ligands from the group =O, $=N-R_{33}$, secondary amines having 2 to 18 C atoms, $R_{32}O$- or $R_{32}S$-, halogen, cyclopentadienyl or bridged biscyclopentadienyl, indenyl, bisphenolates, tridentate monoanionic ligands, or neutral ligands from the group ethers, nitriles, CO and tertiary phosphines and tertiary amines, in which the $R_{32}$s independently of one another are unsubstituted or $C_1$-$C_6$alkoxy- or halo-substituted linear or branched $C_1$-$C_{18}$alkyl, unsubstituted or $C_1$-$C_6$alkyl-, $C_1$-$C_6$alkoxy- or halo-substituted $C_5$- or $C_6$cycloalkyl, unsubstituted or $C_1$-$C_6$alkyl-, $C_1$-$C_6$alkoxy-, $C_1$-$C_6$alkoxymethyl-, $C_1$-$C_6$alkoxyethyl- or halo-substituted phenyl, or unsubstituted or $C_1$-$C_6$alkyl-, $C_1$-$C_6$alkoxy-, $C_1$-$C_6$alkoxymethyl-, $C_1$-$C_6$alkoxyethyl- or halo-substituted benzyl or phenylethyl; and $R_{33}$ is unsubstituted or $C_1$-$C_6$alkoxy-substituted linear or branched $C_1$-$C_{18}$alkyl, unsubstituted or $C_1$-$C_6$alkyl-, $C_1$-$C_6$alkoxy- or halo-substituted $C_5$- or $C_6$cycloalkyl, phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl, or halogen, or is unsubstituted or $C_1$-$C_6$alkyl-, $C_1$-$C_6$alkoxy-, $C_1$-$C_6$alkoxymethyl-, $C_1$-$C_6$alkoxyethyl- or halo-substituted benzyl or phenylethyl.

**42.** Composition according to claim 41, characterized in that the molybdenum compounds, tungsten compounds, niobium compounds and tantalum compounds correspond to one of the formulae VIII to VIIId,

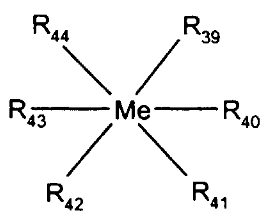

(VIII),

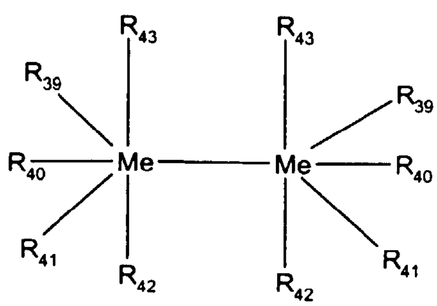

(VIIIa),

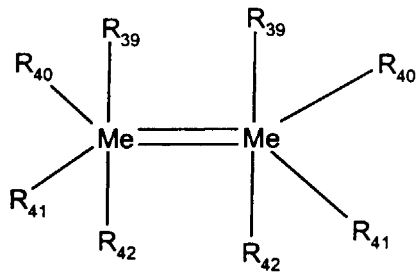

(VIIIb),

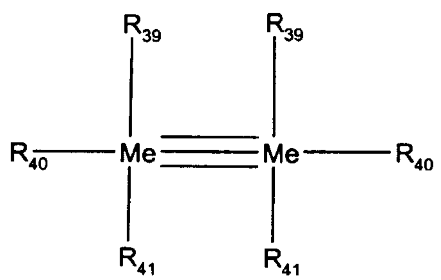

(VIIIc),

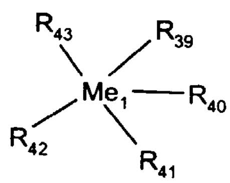

(VIIId),

in which

Me is Mo(VI) or W(VI),
$Me_1$ is Nb(V) or Ta(V),
at least two of the radicals $R_{39}$ to $R_{43}$ are a radical $-CH_2-R$ of the formula VII, R is H, $-CF_3$, $-CR_{26}R_{27}R_{28}$, $-SiR_{29}R_{30}R_{31}$, unsubstituted or $C_1$-$C_6$alkyl- or $C_1$-$C_6$alkoxy-substituted $C_6$-$C_{16}$aryl or $C_4$-$C_{15}$heteroaryl having 1 to 3 heteroatoms from the group O, S and N;
$R_{26}$, $R_{27}$ and $R_{28}$ independently of one another are $C_1$-$C_{10}$alkyl which is unsubstituted or substituted by $C_1$-$C_{10}$alkoxy, or $R_{26}$ and $R_{27}$ have this meaning and $R_{28}$ is $C_6$-$C_{10}$aryl or $C_4$-$C_9$heteroaryl which is unsubstituted or substituted by $C_1$-$C_6$alkyl or $C_1$-$C_6$alkoxy; and
$R_{29}$, $R_{30}$ and $R_{31}$ independently of one another are $C_1$-$C_{18}$alkyl, $C_5$- or $C_6$cycloalkyl, or are unsubstituted or $C_1$-$C_6$alkyl- or $C_1$-$C_6$alkoxy-substituted phenyl or benzyl; pairs of the remaining radicals from $R_{39}$ to $R_{43}$ are =O or $=N-R_{33}$, and $R_{33}$ is linear or branched $C_1$-$C_{18}$alkyl which is unsubstituted or substituted by $C_1$-$C_6$alkoxy, or is $C_5$- or $C_6$cycloalkyl which is unsubstituted or substituted by $C_1$-$C_6$alkyl, $C_1$-$C_6$alkoxy or halogen, or is phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or is phenylethyl or benzyl which is unsubstituted or substituted by $C_1$-$C_6$alkyl, $C_1$-$C_6$alkoxy, $C_1$-$C_6$alkoxymethyl, $C_1$-$C_6$alkoxyethyl, di ($C_1$-$C_6$alkyl)amino, di($C_1$-$C_6$alkyl)amino-$C_1$-$C_3$alkyl or halogen; and/or
the remaining radicals from $R_{39}$ to $R_{43}$ are secondary amino having 2 to 18 C atoms, $R_{32}O$- or $R_{32}S$-, halogen, indenyl, cyclopentadienyl or bridged biscyclopentadienyl or a neutral ligand, in which the $R_{32}$s independently of one another are linear or branched $C_1$-$C_{18}$alkyl which is unsubstituted or substituted by $C_1$-$C_6$alkoxy or halogen, or are $C_5$- or $C_6$cycloalkyl which is unsubstituted or substituted by $C_1$-$C_6$alkyl, $C_1$-$C_6$alkoxy or halogen, or are phenyl which is unsubstituted or substituted by $C_1$-$C_6$alkyl, $C_1$-$C_6$alkoxy, $C_1$-$C_6$alkoxymethyl, $C_1$-

$C_6$alkoxyethyl, di($C_1$-$C_6$alkyl)amino, di($C_1$-$C_6$alkyl)amino-$C_1$-$C_3$alkyl or halogen, or are phenylethyl or benzyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen.

**43.** Composition according to claim 42, characterized in that the molybdenum compounds and tungsten compounds correspond to the formula VIII in which

a) $R_{39}$ to $R_{44}$ are a radical of the formula VII $-CH_2-R$, or
b) $R_{39}$ and $R_{40}$ are a radical of the formula VII $-CH_2-R$, $R_{41}$ and $R_{42}$ together are the radical $=N-R_{33}$, and $R_{43}$ and $R_{44}$ together, independently of one another, are $R_{32}$-O- or halogen, or
c) $R_{43}$ and $R_{44}$ together and $R_{41}$ and $R_{42}$ together are the radical $=N-R_{33}$, and $R_{39}$ and $R_{40}$ are a radical of the formula VII $-CH_2-R$.

**44.** Composition according to claim 42, characterized in that the molybdenum compounds and tungsten compounds correspond to the formula IX, IXa or IXb

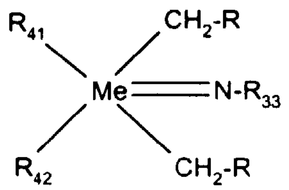

(IX),

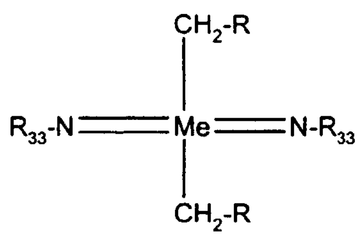

(IXa),

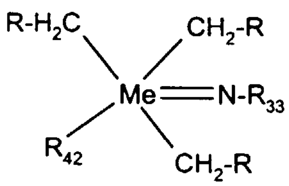

(IXb),

in which

Me is Mo(VI) or W(VI),
R is H, $-C(CH_3)_3$, $-C(CH_3)_2-C_6H_5$, $-C_6H_5$ or $-Si(C_1-C_4alkyl)_3$,
$R_{33}$ is phenyl or phenyl substituted from 1 to 3 times by $C_1$-$C_4$alkyl or $C_1$-$C_4$alkoxy, $R_{41}$ is unsubstituted or fluorine-substituted, linear or - in particular - branched
$C_1$-$C_4$alkoxy, and
$R_{42}$ has the same meaning as $R_{41}$ or is F, Cl or Br.

**45.** Composition according to claim 42, characterized in that it comprises niobium compounds or tantalum compounds of the formula VIIId in which

a) $R_{39}$ to $R_{43}$ are a radical of the formula VII $-CH_2-R$, or
b) $R_{39}$ and $R_{40}$ are a radical of the formula VII $-CH_2-R$, $R_{41}$ and $R_{42}$ together are the radical $=N-R_{33}$, and $R_{43}$ is unsubstituted or substituted cyclopentadienyl, indenyl, $R_{32}$-O- or halogen, or
c) $R_{39}$, $R_{40}$ and $R_{41}$ are a radical of the formula VII $-CH_2-R$, and $R_{42}$ and $R_{43}$ together are the radical $=N-R_{33}$, or

$R_{39}$, $R_{40}$, $R_{41}$ and $R_{42}$ are a radical of the formula VII $-CH_2-R$, and $R_{43}$ is unsubstituted or substituted cyclopentadienyl or indenyl, $R_{32}$-O- or halogen.

**46.** Composition according to claim 42, characterized in that it comprises niobium compounds or tantalum compounds of the formula IXc, IXd or IXe

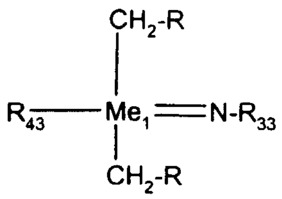
(IXc),

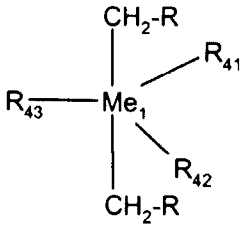
(IXd),

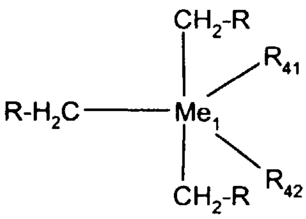
(IXe),

in which

$Me_1$ is Nb(V) or Ta(V),
R is H, $-C(CH_3)_3$, $-C(CH_3)_2-C_6H_5$, $-C_6H_5$ or $-Si(C_1-C_4alkyl)_3$,
$R_{33}$ is phenyl or phenyl substituted from 1 to 3 times by $C_1$-$C_4$alkyl or $C_1$-$C_4$alkoxy, $R_{43}$ in formula IXc is the group $-CH_2-R$ or F, Cl, Br, unsubstituted or fluorine-substituted, linear or - in particular - branched $C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl;
$R_{41}$, $R_{42}$ and $R_{43}$ in formula IXd independently of one another are F, Cl, Br, unsubstituted or fluorine-substituted linear or - in particular - branched $C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl; and
$R_{41}$ and $R_{42}$ in formula IXe independently of one another are F, Cl, Br, unsubstituted or fluorine-substituted linear or - in particular - branched
$C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl.

**47.** Composition according to claim 1, characterized in that it comprises niobium compounds, tantalum compounds, molybdenum compounds or tungsten compounds of the formula X or Xa

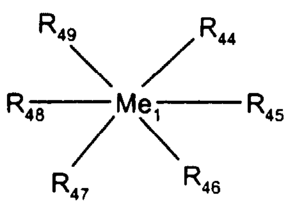
(X),

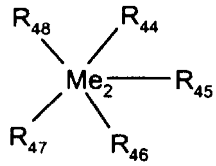

(Xa),

in which

$Me_1$ is Mo(VI) or W(VI);
$Me_2$ is Nb(V) or Ta(V);
one of the radicals $R_{44}$ to $R_{49}$ is a radical $-CH_2-SiR_{29}R_{30}R_{31}$ of the formula VIIa; at least one of the radicals $R_{44}$ to $R_{49}$ is F, Cl or Br;
$R_{29}$, $R_{30}$ and $R_{31}$ independently of one another are $C_1$-$C_6$alkyl, $C_5$- or $C_6$cycloalkyl, or unsubstituted or $C_1$-$C_6$alkyl- or $C_1$-$C_6$alkoxy-substituted phenyl or benzyl;
in formula X two or pairs, and in formula Xa two, of the remaining radicals from $R_{44}$ to $R_{49}$, in each case together, are =O or $=N-R_{33}$, and $R_{33}$ is linear or branched $C_1$-$C_{18}$alkyl which is unsubstituted or substituted by $C_1$-$C_6$alkoxy, or is $C_5$- or $C_6$cycloalkyl which is unsubstituted or substituted by $C_1$-$C_6$alkyl, $C_1$-$C_6$alkoxy or halogen, or is phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or is phenylethyl or benzyl which is unsubstituted or substituted by $C_1$-$C_6$alkyl, $C_1$-$C_6$alkoxy, $C_1$-$C_6$alkoxymethyl, $C_1$-$C_6$alkoxyethyl, di ($C_1$-$C_6$alkyl)amino, di($C_1$-$C_6$alkyl)amino-$C_1$-$C_3$alkyl or halogen, and
the remaining radicals $R_{44}$ to $R_{48}$ are secondary amino having 2 to 18 C atoms, $R_{32}O$- or $R_{32}S$-, halogen, unsubstituted or substituted cyclopentadienyl, indenyl or bridged biscyclopentadienyl or a neutral ligand in which the $R_{32}$s independently of one another are linear or branched $C_1$-$C_{18}$alkyl which is unsubstituted or substituted by $C_1$-$C_6$alkoxy or halogen, or are $C_5$- or $C_6$cycloalkyl which is unsubstituted or substituted by $C_1$-$C_6$alkyl, $C_1$-$C_6$alkoxy or halogen, or are phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_i$-$C_6$alkyl)amino, di($C_1$-$C_6$alkyl)amino-$C_1$-$C_3$alkyl or halogen, or are phenylethyl or benzyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen; or in the formulae X and Xa the remaining radicals of $R_{44}$ to $R_{49}$ independently of one another are secondary amino having 2 to 18 C atoms, $R_{32}O$- or $R_{32}S$-, halogen, unsubstituted or substituted cyclopentadienyl, indenyl or bridged biscyclopentadienyl or a neutral ligand, in which the $R_{32}$s independently of one another are linear or branched $C_1$-$C_{18}$alkyl which is unsubstituted or substituted by $C_1$-$C_6$alkoxy or halogen, or are $C_5$- or $C_6$cycloalkyl which is unsubstituted or substituted by $C_1$-$C_6$alkyl, $C_1$-$C_6$alkoxy or halogen, or are phenyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen, or are phenylethyl or benzyl which is unsubstituted or substituted by $C_1$-$C_6$alkyl, $C_1$-$C_6$alkoxy, $C_1$-$C_6$alkoxymethyl, $C_1$-$C_6$alkoxyethyl, di($C_1$-$C_6$alkyl)amino, di($C_1$-$C_6$alkyl)amino-$C_1$-$C_3$alkyl or halogen.

**48.** Composition according to claim 47, characterized in that it comprises niobium compounds, tantalum compounds, molybdenum compounds or tungsten compounds of the formula X or Xa in which
$R_{44}$ is a radical of the formula VIIa $-CH_2-Si(R_{29}R_{30}R_{31})_3$ and $R_{45}$ is F, Cl or Br; and

(a) in formula X $R_{46}$ and $R_{47}$ and also $R_{48}$ and $R_{49}$, in each case together, are the radical $=N-R_{33}$, or $R_{46}$ and $R_{47}$ together are the radical $=N-R_{33}$, and $R_{48}$ and $R_{49}$ independently of one another are unsubstituted or substituted cyclopentadienyl, indenyl, $R_{32}$-O- or halogen, or
b) in formula Xa $R_{46}$ and $R_{47}$ together are the radical $=N-R_{33}$, and $R_{48}$ is unsubstituted or substituted cyclopentadienyl, indenyl, $R_{32}$-O- or halogen, or in formula Xa $R_{46}$, $R_{47}$ and $R_{48}$ independently of one another are unsubstituted or substituted cyclopentadienyl, indenyl, $R_{32}$-O- or halogen,

**49.** Composition according to claim 47, characterized in that it comprises niobium compounds, tantalum compounds, molybdenum compounds or tungsten compounds of the formula XI, XIa, XIb or XIc

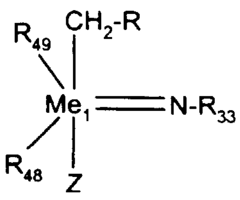 (XI),

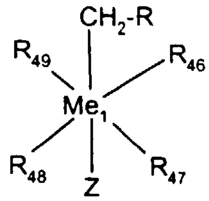 (XIa)

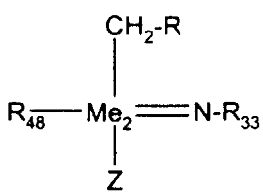 (XIb),

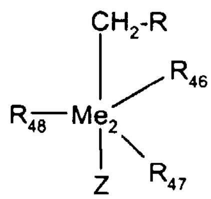 (XIc),

in which

$Me_1$ is Mo(VI) or W(VI);
$Me_2$ is Nb(V) or Ta(V);
R is $-Si(C_1-C_4alkyl)_3$;
Z is F, Cl or Br;
$R_{33}$ is phenyl or phenyl which is substituted from 1 to 3 times by $C_1$-$C_4$alkyl or $C_1$-$C_4$alkoxy,

(a) $R_{48}$ and $R_{49}$ in formula XI together are the group $=NR_{33}$ or individually, independently of one another, are F, Cl, Br, unsubstituted or fluorine-substituted linear or - in particular - branched $C_1$-$C_4$alkoxy, unsubstituted or $C_1$-$C_4$alkyl- or $C_1$-$C_4$alkoxy-substituted phenyloxy or $R_{41}$, $R_{42}$, $R_{43}$ and $R_{44}$ unsubstituted or $C_1$-$C_4$alkyl-substituted cyclopentadienyl;
(b) $R_{46}$, $R_{47}$ and $R_{48}$ and $R_{49}$ in formula XIa independently of one another are F, Cl, Br, unsubstituted or fluorine-substituted, linear or - in particular - branched $C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl;
(c) $R_{48}$ in formula XIb is F, Cl, Br, unsubstituted or fluorine-substituted, linear or - in particular - branched $C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl; and
(d) $R_{46}$, $R_{47}$ and $R_{48}$ in formula XIc independently of one another are F, Cl, Br, unsubstituted or fluorine-substituted, linear or -in particular - branched $C_1$-$C_4$alkoxy, unsubstituted or $C_1$-$C_4$alkyl- or $C_1$-$C_4$alkoxy-substituted phenyloxy or unsubstituted or $C_1$-$C_4$alkyl-substituted cyclopentadienyl or indenyl.

**50.** Composition according to claim 47, characterized in that it comprises compounds of the formula XII, XIIa, XIIb or XIIc

$$(R_{33}\text{-N=})_2Me_1X_aCH_2Si(CH_3)_3 \quad \text{(XII)},$$

$$(R_{33}\text{-N=})R_{46}Me_1X_a(OR_{32})CH_2Si(CH_3)_3 \quad \text{(XIIa)},$$

$$R_{46}R_{47}Me_2X_a(OR_{32})CH_2Si(CH_3)_3 \quad \text{(XIIb)},$$

$$R_{33}\text{-N=}Me_2X_a(OR_{32})CH_2Si(CH_3)_3 \quad \text{(XIIc)},$$

in which

$Me_1$ is Mo(VI) or W(VI);
$Me_2$ is Nb(V) or Ta(V); and
$X_a$ is F, Cl or Br;
$R_{32}$ is branched, optionally partially or completely fluorine-substituted $C_3$- or $C_4$alkyl or phenyloxy or phenyloxy substituted from 1 to 3 times by methyl or ethyl groups; $R_{33}$ is phenyl or phenyl substituted by 1 or 2 $C_1$-$C_4$alkyl groups;
$R_{46}$ and $R_{47}$ independently of one another are cyclopentadienyl which is unsubstituted or substituted by 1 to 5 methyl groups or are indenyl, $X_a$ or $R_{32}O$-; and
$R_{48}$ is cyclopentadienyl which is unsubstituted or substituted by 1 to 5 methyl groups or is $X_a$ or $R_{32}O$-.

**51.** Composition according to claim 1, characterized in that it comprises the one-component catalyst in an amount of from 0.001 to 20 mol-%, based on the amount of the monomers.

**52.** Composition according to claim 51, characterized in that it comprises the one-component catalyst in an amount of from 0.01 to 15 mol-%.

**53.** Composition according to claim 51, characterized in that it comprises the one-component catalyst in an amount of from 0.01 to 10 mol-%.

**54.** Composition according to claim 51, characterized in that it comprises the one-component catalyst in an amount of from 0.01 to 5 mol-%.

**55.** Composition according to claim 1, characterized in that it comprises formulation auxiliaries.

**56.** Process for preparing polymers from acetylenes by photometathesis polymerization, which is characterized in that a composition comprising at least one nonvolatile acetylene of the formula I

$$R_a\text{-}C\equiv C\text{-}R_b \qquad (I),$$

in which

$R_a$ is $C_1$-$C_{20}$alkyl which is unsubstituted or substituted by halogen, -OH, -CN, -$NH_2$, -NH($C_1$-$C_6$alkyl), -N($C_1$-$C_6$alkyl)$_2$, $C_1$-$C_6$alkyl, $C_1$-$C_6$alkyl-O-, $C_1$-$C_6$alkyl-S-, $C_1$-$C_6$alkyl-C(O)O-, $C_1$-$C_6$alkyl-OC(O)-, -C(O)-$NH_2$, $C_1$-$C_6$alkyl-C(O)NH- or $C_1$-$C_6$alkyl-NHC(O)-, or is $C_3$-$C_{12}$cycloalkyl, ($C_3$-$C_{12}$cycloalkyl)-$C_1$-$C_{12}$alkyl, $C_6$-$C_{18}$aryl, $C_7$-$C_{19}$aralkyl, $C_1$-$C_{20}$alkoxy, $C_3$-$C_{12}$-cycloalkoxy, ($C_3$-$C_{12}$cycloalkyl)-$C_1$-$C_{12}$alkoxy, $C_6$-$C_{18}$aryloxy, $C_7$-$C_{19}$aralkyloxy, $C_3$-$C_9$heterocycloalkyl having 1 to 3 heteroatoms selected from the group O, N and S, or $C_3$-$C_{15}$heteroaryl having 1 to 3 heteroatoms selected from the group O, N and S, or $R_a$ is -(O)$_k$-$SiR_cR_dR_e$, $C_1$-$C_{18}$alkyl-OC(O)-, -C(O)-$NH_2$ or $C_1$-$C_{18}$alkyl-NHC(O)-;
$R_b$ is hydrogen or, independently, has the meaning of $R_a$;
$R_c$, $R_d$ and $R_e$ independently of one another are $C_1$-$C_{18}$alkyl, $C_1$-$C_{18}$alkoxy $C_5$- or $C_6$cycloalkyl, $C_5$- or $C_6$cycloalkoxy or unsubstituted or $C_1$-$C_6$alkyl- or $C_1$-$C_6$alkoxy-substituted phenyl, phenyloxy, benzyl or benzyloxy; and
k is 0 or 1;

alone or together with a strained cycloolefin and catalytic amounts of at least one one-component catalyst from the group molybdenum compounds, tungsten compounds, niobium compounds and tantalum compounds, which (a) either comprise at least two methyl groups or two monosubstituted methyl groups without $\alpha$ hydrogen atoms in the substituent or (b) comprise at least one halogen and only one silylmethyl group attached to the metal,

($\alpha$) is polymerized by irradiation, or
($\beta$) the one-component catalyst is activated by brief irradiation and the polymerization is brought to an end by heating at temperatures from 30 to 300°C.

**57.** Process for preparing coated materials or relief images on carrier materials, wherein a composition according to claim 1 with or without solvent is applied as a layer to a carrier, the solvent (if used) is removed, and the layer is irradiated to polymerize it, or the layer is irradiated through a photomask, is subjected if desired to thermal aftercuring following the irradiation, and then the nonirradiated areas are removed with a solvent.

**58.** Coated carrier material, characterized in that a layer of a composition according to claim 1 has been applied to the carrier material.

**59.** Carrier material, characterized in that a polymerized layer of a composition according to claim 1 has been applied to the carrier material.

## Revendications

**1.** Composition d'au moins un acétylène non volatil de formule I

$$R_a\text{-}C\equiv C\text{-}R_b \qquad (I)$$

dans laquelle

$R_a$ représente des groupes hétéroaryle en $C_3$-$C_{15}$ avec 1 à 3 hétéroatomes pris dans le groupe comportant O, N et S, hétérocycloalkyle en $C_3$-$C_9$ avec 1 à 3 hétéroatomes pris dans le groupe comportant O, N et S, aralkyloxy en $C_7$-$C_{19}$, aryloxy en $C_6$-$C_{18}$, (cycloalkyl en $C_3$-$C_{12}$)-alkoxy en $C_1$-$C_{12}$, cycloalkoxy en $C_3$-$C_{12}$, alkoxy en $C_1$-$C_{20}$, aralkyle en $C_7$-$C_{19}$, aryle en $C_6$-$C_{18}$, (cycloalkyl en $C_3$-$C_{12}$)-alkyle en $C_1$-$C_{12}$, cycloalkyle en $C_3$-$C_{12}$ ou alkyle en $C_1$-$C_{20}$ non substitué ou substitué par des atomes d'halogènes, des groupes -OH, -CN, $-NH_2$, -NH(alkyle en $C_1$-$C_6$), -N(alkyle en $C_1$-$C_6$)$_2$, alkyle en $C_1$-$C_6$, (alkyl en $C_1$-$C_6$)-O-, (alkyl en $C_1$-$C_6$)-S-, (alkyl en $C_1$-$C_6$)-C(O)O-, (alkyl en $C_1$-$C_6$)-OC(O)-, -C(O)-$NH_2$, (alkyl en $C_1$-$C_6$)-C(O)NH- ou (alkyl en $C_1$-$C_6$)-NHC(O)-, ou $R_a$ représente $-(O)_k-SiR_cR_dR_e$, (alkyl en $C_1$-$C_{18}$)-OC(O)-, -C(O)-$NH_2$ ou (alkyl en $C_1$-$C_{18}$)-NHC(O)- ;

$R_b$ représente un atome d'hydrogène ou, indépendamment, possède la signification de $R_a$ ;

$R_c$, $R_d$ et $R_e$ représentent, indépendamment les uns des autres, des groupes alkyle en $C_1$-$C_{18}$, alkoxy en $C_1$-$C_{18}$, cycloalkyle en $C_5$ ou en $C_6$, cycloalkoxy en $C_5$ ou en $C_6$, ou phényle, phényloxy, benzyle ou benzyloxy non substitué ou substitué par alkyle en $C_1$-$C_6$ ou alkoxy en $C_1$-$C_6$ ; et

k vaut 0 ou 1 ;

seuls ou conjointement avec une cyclooléfine tendue et des quantités catalytiques d'un catalyseur pour la polymérisation par métathèse,

caractérisée en ce que qu'elle contient au moins un catalyseur à un composant pris dans le groupe comportant les composés de molybdène, de tungstène, de niobium et de tantale, contenant soit (a) au moins deux groupes méthyle ou deux groupes méthyle monosubstitués sans atomes d'hydrogène a dans le substituant, soit (b) au moins un halogène et seulement un groupe silyméthyle lié au métal.

**2.** Composition selon la revendication 1, caractérisée en ce que les substituants pour $R_a$ et $R_b$ sont choisis parmi les groupes -OH, -F, -Cl, -CN, alkyle en $C_1$-$C_4$ et alkoxy en $C_1$-$C_4$.

**3.** Composition selon la revendication 1, caractérisée en ce que $R_a$ et $R_b$ en tant que groupe alkyle comportent de 1 à 12 atomes de carbone.

**4.** Composition selon la revendication 1, caractérisée en ce que le groupe alkyle est ramifié.

**5.** Composition selon la revendication 1, caractérisée en ce qu'il s'agit pour $R_a$ et $R_b$ en tant que cycloalkyle de cycloalkyle en $C_5$-$C_8$.

**6.** Composition selon la revendication 1, caractérisée en ce qu'il s'agit pour $R_a$ et $R_b$ en tant que cycloalkyl-alkyle des groupes (cycloalkyl en $C_5$-$C_8$)-$CH_2$-, (cycloalkyl en $C_5$-$C_8$)-$CH(CH_3)$- ou (cycloalkyl en $C_5$-$C_8$)-$C(CH_3)_2$-.

**7.** Composition selon la revendication 1, caractérisée en ce que $R_a$ et $R_b$ en tant que aryle contiennent de 6 à 14 atomes de carbone.

8. Composition selon la revendication 1, caractérisée en ce que $R_a$ et $R_b$ en tant que aralkyle contiennent de 7 à 12 atomes de carbone.

9. Composition selon la revendication 1, caractérisée en ce que $R_a$ et $R_b$ en tant que hétérocycloalkyle contiennent 4 ou 5 atomes de carbone et un ou deux hétéroatomes pris dans le groupe comportant les atomes de O, S et N.

10. Composition selon la revendication 1, caractérisée en ce que $R_a$ et $R_b$ en tant que hétéroaryle contiennent 4 ou 5 atomes de carbone et un ou deux hétéroatomes pris dans le groupe comportant les atomes de O, S et N.

11. Composition selon la revendication 1, caractérisée en ce que $R_c$, $R_d$ et $R_e$ en tant que alkyle ou alkoxy sont linéaires ou ramifiés et contiennent de 1 à 12 atomes de carbone.

12. Composition selon la revendication 1, caractérisée en ce que $R_c$, $R_d$ et $R_e$ représentent des groupes alkyle en $C_1$-$C_4$, alkoxy en $C_1$-$C_4$, phényle ou benzyle.

13. Composition selon la revendication 1, caractérisée en ce que, dans la formule $-(O)_k-SiR_cR_dR_e$, k vaut 0.

14. Composition selon la revendication 1, caractérisée en ce que $R_a$ représente $-Si(CH_3)_3$, $-Si(OC_6H_5)_3$, $-Si(CH_2-C_2H_5)_3$, $-Si(CH_3)_2(C_2H_5)$, $-Si(C_6H_5)(CH_3)_2$, $-Si(OCH_2-C_6H_5)_3$, $-Si(CH_3)_2[C(CH_3)_2CH(CH_3)_2]$, $-Si(n-C_3H_7)_3$, $-Si(n-C_4H_9)_3$, $-Si(CH_3)_2(n-C_{12}H_{25})$, t $-Si(CH_3)_2(n-C_4H_9)$ , $-Si(CH_3)_2(t-C_4H_9)$, $-Si(CH_3)_2(n-C_{18}H_{37})$, $-Si(CH_2-C_6H_S)(CH_3)_2$, t $-Si(C_2H_5)_3$, $-Si(C_6H_5)_3$ ou $-Si(OCH_3)_3$.

15. Composition selon la revendication 1, caractérisée en ce que $R_a$ représente $-Si(CH_3)_3$.

16. Composition selon la revendication 1, caractérisée en ce que l'un des groupes $R_a$ et $R_b$ représente un groupe à exigences stériques.

17. Composition selon la revendication 1, caractérisée en ce qu'il s'agit pour les acétylènes de $CH_3-C\equiv CH$, $CH_3-C\equiv C-CH_3$, $C_2H_5-C\equiv CH$, n- ou i-$C_3H_7-C\equiv CH$, n-, i- ou t-$C_4H_9-C\equiv CH$, t-$C_4H_9-C\equiv C-CH_3$, $C_4H_9-C\equiv C-C_4H_9$, $C_6H_{11}-C\equiv CH$, $C_6H_5-C\equiv CH$, $C_6H_5-C\equiv C-C_6H_5$, $HC\equiv C-Si(CH_3)_3$, $(H_3C)_3Si-C\equiv C-Si(CH_3)_3$, $CH_3-C\equiv C-Si(CH_3)_3$, t-$C_4H_9O-C\equiv CH$ ou $HC\equiv C-Si(OCH_3)_3$.

18. Composition selon la revendication 17, caractérisée en ce qu'il s'agit pour les acétylènes du t-butylacétylène, du triméthylsilylacétylène ou de méthyltriméthylsilylacétylène.

19. Composition selon la revendication 1, caractérisée en ce qu'elle contient de plus des cyclooléfines tendues non volatiles, en tant que comonomères.

20. Composition selon la revendication 19, caractérisée en ce que la quantité de comonomères va de 0,1 à 99 % en poids, par rapport à la quantité totale des monomères.

21. Composition selon la revendication 19, caractérisée en ce que la quantité de comonomères va de 1 à 95 % en poids.

22. Composition selon la revendication 19, caractérisée en ce que la quantité de comonomères va de 5 à 90 % en poids.

23. Composition selon la revendication 19, caractérisée en ce que la quantité de comonomères va de 5 à 75 % en poids.

24. Composition selon la revendication 19, caractérisée en ce que la quantité de comonomères va de 5 à 60 % en poids.

25. Composition selon la revendication 19, caractérisée en ce qu'il s'agit pour les oléfines cycliques des systèmes cycliques monocycliques ou polycycliques, comportant de 2 à 4 cycles condensés et/ou pontés et/ou reliés directement ou par l'intermédiaire d'un groupe de pontage, lesquels sont non substitués ou substitués et contiennent, dans un ou plusieurs cycles et/ou cycles hétéroaromatiques ou aromatiques condensés, des hétéroatomes pris parmi les atomes de O, S, N ou Si.

26. Composition selon la revendication 25, caractérisée en ce que les différents cycles cyliques contiennent de 3 à 16 chaînons.

**27.** Composition selon la revendication 25, caractérisée en ce que les différents cycles cycliques contiennent de 3 à 12 chaînons.

**28.** Composition selon la revendication 25, caractérisée en ce que les différents cycles cycliques contiennent de 3 à 8 chaînons.

**29.** Composition selon la revendication 19, caractérisée en ce que les cyclooléfines répondent à la formule II

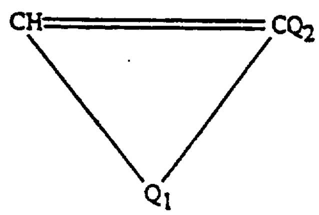

(II)

dans laquelle

| | |
|---|---|
| $Q_1$ | représente un reste avec au moins un atome de carbone, lequel forme, conjointement avec le groupe $-CH=CQ_2$, un cycle alicyclique à au moins trois chaînons, lequel comporte éventuellement un ou plusieurs hétéroatomes pris dans le groupe commportant des atomes de silicium, de phosphore, d'oxygène, d'azote et de soufre ; et lequel est non substitué ou substitué par des atomes d'halogène, =O, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, hydroxyalkyle en $C_1$-$C_{20}$, halogénoalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétéro-cycloalkyle en $C_3$-$C_6$, hétéroaryle en $C_3$-$C_{16}$, hétéroaralkyle en $C_4$-$C_{16}$ ou $R_4$-X- ; ou dans lequel deux atomes de carbone adjacents sont substitués par -CO-O-CO- ou $-CO-NR_5-CO-$ ; ou dans lequel sur les atomes de carbone adjacents du cycle alicyclique est éventuellement condensé un cycle alicyclique, aromatique ou hétéroaromatique, lequel est non substitué ou substitué par des atomes d'halogène, -CN, $-NO_2$, $R_6R_7R_8Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{20}$, halogénoalkyle en $C_1$-$C_{20}$, hydroxyalkyle en $C_1$-$C_{20}$, cyanoalkyle en $C_1$-$C_6$, cycloalkyle en $C_3$-$C_8$, aryle en $C_6$-$C_{16}$, aralkyle en $C_7$-$C_{16}$, hétérocycloalkyle en $C_3$-$C_6$, hétéroaryle en $C_3$-$C_{16}$, hétéroaralkyle en $C_4$-$C_{16}$ ou $R_{13}$-$X_1$- ; |
| X et $X_1$ | représentent, indépendamment l'un de l'autre, -O-, -S-, -CO-, -SQ-, $-SO_2-$, -O-C(O)-, -C(O)-O-, $-C(O)-NR_5-$, $-NR_{10}-C(O)-$, $-SO_2-O-$ ou $-O-SO_2-$ ; |
| $R_1$, $R_2$ et $R_3$ | représentent, indépendamment les uns des autres, des groupes alkyle en $C_1$-$C_{12}$, perfluoroalkyle en $C_1$-$C_{12}$, phényle ou benzyle ; |
| $R_4$ et $R_{13}$ | représentent, indépendamment l'un de l'autre, des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$, aralkyle en $C_7$-$C_{16}$ ; |
| $R_5$ et $R_{10}$ | représentent, indépendamment l'un de l'autre, des atomes d'hydrogène, des groupes alkyle en $C_1$-$C_{12}$, phényle ou benzyle, les groupes alkyle étant, de leur côté, non substitués ou substitués par des groupes alkoxy en $C_1$-$C_{12}$ ou cycloalkyle en $C_3$-$C_8$ ; |
| $R_6$, $R_7$ et $R_8$ | représentent, indépendamment l'un de l'autre, des groupes alkyle en $C_1$-$C_{12}$, perfluoroalkyle en $C_1$-$C_{12}$, phényle ou benzyle ; |
| M | représente un métal alcalin et $M_1$ un métal alcalino-terreux ; et |
| u | vaut 0 ou 1 ; |

le cycle alicyclique formé avec $Q_1$ éventuellement contenant d'autres doubles liaisons non aromatiques ;

| | |
|---|---|
| $Q_2$ | représente un atome d'hydrogène, des groupes alkyle en $C_1$-$C_{20}$, halogénoalkyle en $C_1$-$C_{20}$, alkoxy en $C_1$-$C_{12}$, halogène, -CN, $R_{11}$-$X_2$- ; |
| $R_{11}$ | représente des groupes alkyle en $C_1$-$C_{20}$, halogénoalkyle en $C_1$-$C_{20}$, hydroxyalkyle en $C_1$-$C_{20}$, cycloalkyle en $C_3$-$C_8$, aryle en $C_6$-$C_{16}$ ou aralkyle en $C_7$-$C_{16}$ ; |
| $X_2$ | représente -C(O)-O- ou $-C(O)-NR_{12}-$ ; |
| $R_{12}$ | représente un atome d'hydrogène, des groupes alkyle en $C_1$-$C_{12}$, phényle ou benzyle ; |

les groupes cycloalkyle, hétérocycloalkyle, aryle, hétéroaryle, aralkyle et hétéroaralkyle précités étant non substitués ou substitués par des groupes alkyle en $C_1$-$C_{12}$, alkoxy en $C_1$-$C_{12}$, $-NO_2$, -CN ou halogène, et les hétéroatomes des groupes hétérocycloalkyle, hétéroaryle et hétéroaralkyle précités sont pris dans le groupe comportant -O-, -S-, $-NR_9-$ et -N= ; et

$R_9$ représente un atome d'hydrogène, des groupes alkyle en $C_1$-$C_{12}$, phényle ou benzyle.

**30.** Composition selon la revendication 31, caractérisée en dans les cyclooléfines de formule II

$Q_1$ représente un reste avec au moins un atome de carbone, lequel forme, conjointement avec le groupe $-CH=CQ_2$ un cycle alicyclique de 3 à 20 chaînons, lequel comporte éventuellement un ou plusieurs hétéroatomes pris dans le groupe comportant des atomes de silicium, d'oxygène, d'azote et de soufre ; et lequel est non substitué ou substitué par des atomes d'halogène, =0, -CN, $-NO_2$, $R_1R_2R_3Si-(O)_u-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétéro-cycloalkyle en $C_3$-$C_6$, hétéroaryle en $C_3$-$C_{12}$, hétéroaralkyle en $C_4$-$C_{12}$ ou $R_4$-X- ; ou dans lequel deux atomes de carbone adjacents dans ce reste $Q_1$ sont substitués par -CO-O-CO- ou $-CO-NR_5-CO-$ ; ou dans lequel, sur les atomes de carbone adjacents du cycle alicyclique, est éventuellement condensé un cycle alicyclique, aromatique ou hétéro-aromatique, lequel est non substitué ou substitué par des atomes d'halogène, -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_{12}$, halogénoalkyle en $C_1$-$C_{12}$, hydroxyalkyle en $C_1$-$C_{12}$, cyanoalkyle en $C_1$-$C_4$, cycloalkyle en $C_3$-$C_6$, aryle en $C_6$-$C_{12}$, aralkyle en $C_7$-$C_{12}$, hétérocycloalkyle en $C_3$-$C_6$, hétéroaryle en $C_3$-$C_{12}$, hétéroaralkyle en $C_4$-$C_{12}$ ou $R_{13}-X_1-$ ;

X et $X_1$ représentent, indépendamment l'un de l'autre, -O-, -S-, -CO-, -SQ-, $-SO_2-$, -O-C(O)-, -C(O)-O-, $-C(O)-NR_5-$, $-NR_{10}-C(O)-$, $-SO_2-O-$ ou $-O-SO_2-$ ;

$R_1$, $R_2$ et $R_3$ représentent, indépendamment les uns des autres, des groupes alkyle en $C_1$-$C_6$, perfluoroalkyle en $C_1$-$C_6$, phényle ou benzyle ;

M représente un métal alcalin et $M_1$ un métal alcalino-terreux ; et

$R_4$ et $R_{13}$ représentent, indépendamment l'un de l'autre, des groupes alkyle en $C_1$-$C_{12}$, halogénoalkyle en $C_1$-$C_{12}$, hydroxyalkyle en $C_1$-$C_{12}$, cycloalkyle en $C_3$-$C_8$, aryle en $C_6$-$C_{12}$, aralkyle en $C_7$-$C_{12}$ ;

$R_5$ et $R_{10}$ représentent, indépendamment l'un de l'autre, des atomes d'hydrogène, des groupes alkyle en $C_1$-$C_6$, phényle ou benzyle, les groupes alkyle étant, de leur côté, non substitués ou substitués par des groupes alkoxy en $C_1$-$C_6$ ou cycloalkyle en $C_3$-$C_6$ ;

$R_6$, $R_7$ et $R_8$ représentent, indépendamment l'un de l'autre, des groupes alkyle en $C_1$-$C_6$, perfluoroalkyle en $C_1$-$C_6$, phényle ou benzyle ;

u vaut 0 ou 1 ;

le cycle alicyclique formé avec $Q_1$ contenant éventuellement d'autres doubles liaisons non aromatiques ;

$Q_2$ représente un atome d'hydrogène, des groupes alkyle en $C_1$-$C_{12}$, halogénoalkyle en $C_1$-$C_{12}$, alkoxy en $C_1$-$C_6$, halogène, -CN, $R_{11}-X_2-$ ;

$R_{11}$ représente des groupes alkyle en $C_1$-$C_{12}$, halogénoalkyle en $C_1$-$C_{12}$, hydroxyalkyle en $C_1$-$C_{12}$, cycloalkyle en $C_3$-$C_6$, aryle en $C_6$-$C_{12}$ ou aralkyle en $C_7$-$C_{12}$ ;

$X_2$ représente -C(O)-O- ou $-C(O)-NR_{12}-$ ;

$R_{12}$ représente un atome d'hydrogène, des groupes alkyle en $C_1$-$C_6$, phényle ou benzyle ;

les groupes cycloalkyle, hétérocycloalkyle, aryle, hétéroaryle, aralkyle et hétéroaralkyle précités étant non substitués ou substitués par des groupes alkyle en $C_1$-$C_6$, alkoxy en $C_1$-$C_6$, $-NO_2$, -CN ou halogène, et les hétéroatomes des groupes hétérocycloalkyle, hétéroaryle et hétéroaralkyle précités étant pris parmi les groupes -O-, -S-, $-NR_9-$ et -N= ; et

$R_9$ représente un atome d'hydrogène, des groupes alkyle en $C_1$-$C_6$, phényle ou benzyle.

**31.** Composition selon la revendication 29, caractérisée en ce que dans les cyclooléfines de formule II

$Q_1$ représente un reste avec au moins un atome de carbone, lequel forme, conjointement avec

le groupe $-CH=CQ_2-$, un cycle alicyclique de 3 à 10 chaînons, lequel éventuellement contient un ou plusieurs hétéroatomes pris dans le groupe comportant des atomes de silicium, d'oxygène, d'azote et de soufre ; et lequel est non substitué ou substitué par des groupes halogène, -CN, $-NO_2$, $R_1R_2R_3Si-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_4$-X- ; ou dans lequel, sur des atomes de carbone adjacents, est éventuellement condensé un cycle alicyclique, aromatique ou hétéroaromatique, lequel est non substitué ou substitué par des atomes d'halogène, des groupes -CN, $-NO_2$, $R_6R_7R_8Si-$, -COOM, $-SO_3M$, $-PO_3M$, $-COO(M_1)_{1/2}$, $-SO_3(M_1)_{1/2}$, $-PO_3(M_1)_{1/2}$, alkyle en $C_1$-$C_6$, halogénoalkyle en $C_1$-$C_6$, hydroxyalkyle en $C_1$-$C_6$, cyanoalkyle en $C_1$-$C_4$, cycloalkyle en $C_3$-$C_6$, phényle, benzyle ou $R_{13}$-$X_1$- ;

$R_1$, $R_2$ et $R_3$ représentent, indépendamment les uns des autres, des groupes alkyle en $C_1$-$C_4$, perfluoroalkyle en $C_1$-$C_4$, phényle ou benzyle ;

M représente un métal alcalin et $M_1$ un métal alcalino-terreux ;

$R_4$ et $R_{13}$ représentent, indépendamment l'un de l'autre, des groupes alkyle en $C_1$-$C_6$, halogénoalkyle en $C_1$-$C_6$, hydroxyalkyle en $C_1$-$C_6$ ou cycloalkyle en $C_3$-$C_6$ ;

X et $X_1$ représentent, indépendamment l'un de l'autre, -O-, -S-, -CO-, -SQ- ou $-SO_2-$ ;

$R_6$, $R_7$ et $R_8$ représentent, indépendamment l'un de l'autre, des groupes alkyle en $C_1$-$C_4$, perfluoroalkyle en $C_1$-$C_4$, phényle ou benzyle ;

et

$Q_2$ représente un atome d'hydrogène.

**32.** Composition selon la revendication 29, caractérisée en ce qu'il s'agit pour les cyclooléfines de formule II du norbornène et des dérivés du norbornène.

**33.** Composition selon la revendication 19, caractérisée en ce que les cyclooléfines tendues sont constituées uniquement de carbone et d'hydrogène.

**34.** Composition selon la revendication 19, caractérisée en ce que les comonomères sont pris dans le groupe comportant le norbornène, le cyclopentène, le cycloheptène et le cyclooctène.

**35.** Composition selon la revendication 1, caractérisée en ce que le groupe méthyle et le groupe méthyle substitué répond à la formule VII

$$-CH_2-R \quad (VII),$$

dans laquelle

R représente un atome d'hydrogène, $-CF_3$, $CR_{26}R_{27}R_{28}$, $-SiR_{29}R_{30}R_{31}$, hétéroaryle en $C_4$-$C_{15}$ avec 1 à 3 hétéroatomes pris dans le groupe comportant les atomes de O, S et N ou aryle en $C_6$-$C_{16}$ non substitué ou substitué par des groupes alkyle en $C_1$-$C_6$ ou alkoxy en $C_1$-$C_6$ ; et

$R_{26}$, $R_{27}$ et $R_{28}$ représentent, indépendamment l'un de l'autre, un groupe alkyle en $C_1$-$C_{10}$, lequel est non substitué ou substitué par un groupe alkoxy en $C_1$-$C_{10}$, ou $R_{26}$ et $R_{27}$ possèdent cette signification et $R_{28}$ représente un groupe aryle en $C_6$-$C_{10}$ ou hétéroaryle en $C_4$-$C_9$, lequel est non substitué ou substitué par des groupes alkyle en $C_1$-$C_6$ ou alkoxy en $C_1$-$C_6$ ; et

$R_{29}$, $R_{30}$ et $R_{31}$ représentent, indépendamment l'un de l'autre, des groupes alkyle en $C_1$-$C_{18}$, cycloalkyle en $C_5$ ou en $C_6$, ou phényle ou benzyle non substitué ou substitué par des groupes alkyle en $C_1$-$C_6$ ou alkoxy en $C_1$-$C_6$.

**36.** Composition selon la revendication 35, caractérisée en ce que le groupe R dans la formule VII représente un atome d'hydrogène, $-C(CH_3)_3$, $-C(CH_3)_2C_6H_5$, $-Si(CH_3)_3$, $-CF_3$ ou phényle non substitué ou substitué par les groupes méthyle, éthyle, méthoxy ou éthoxy.

**37.** Composition selon la revendication 1, caractérisée en ce que le groupe silylméthyle répond à la formule VIIa

$$-CH_2-SiR_{29}R_{30}R_{31},\qquad (VIIa),$$

dans laquelle

$R_{29}$, $R_{30}$ et $R_{31}$ représentent, indépendamment l'un de l'autre, des groupes alkyle en $C_1$-$C_{18}$, cycloalkyle en $C_5$ ou en $C_6$, ou benzyle ou phényle non substitué ou substitué par des groupes alkyle en $C_1$-$C_6$ ou alkoxy en $C_1$-$C_6$.

**38.** Composition selon la revendication 37, caractérisée en ce que dans le groupe formule VIIa $R_{29}$ à $R_{31}$ représentent des groupes alkyle en $C_1$-$C_4$, phényle ou benzyle.

**39.** Composition selon la revendication 37, caractérisée en ce que le groupe de formule VIIa est constitué de groupes $-CH_2-Si(CH_3)_3$, $-CH_2-Si(C_2H_5)_3$, $-CH_2-Si(n-C_3H_7)_3$, $-CH_2-Si(n-C_4H_9)_3$, $-CH_2-Si(CH_3)_2(n-C_4H_9)$, $-CH_2-Si(CH_3)_2(t-C_4H_9)$, $-CH_2-Si(CH_3)_2(C_2H_5)$, $-CH_2-Si-(C_6H_5)_3$, $-CH_2-Si(CH_3)_2[C(CH_3)_2CH(CH_3)_2]$, $-CH_2-Si(CH_3)_2(n-C_{12}H_{25})$, $-CH_2-Si(CH_2-C_6H_5)_3$, $-CH_2-Si(CH_3)_2(n-C_{18}H_{37})$, $-CH_2-Si(C_6H_5)(CH_3)_2$ et $-CH_2-Si(CH_2-C_6H_5)(CH_3)_2$.

**40.** Composition selon la revendication 1, caractérisée en ce que le groupe silylméthyle est le groupe

$$-CH_2-Si(CH_3)_3.$$

**41.** Composition selon la revendication 1, caractérisée en ce que les autres valences des atomes de Mo(VI), W(VI), Nb(V) et Ta(V) sont saturées par des ligands identiques ou différents pris parmi les groupes =O, =N-$R_{33}$, amines secondaires comportant de 2 à 18 atomes de carbone, $R_{32}$O-, $R_{32}$S-, halogène, cylopentadiényle ou biscyclopentadiényle ponté, indényle, bisphénolates, ligands monoanioniques tridentés, ou ligands neutres pris dans le groupe comportant les éthers, les nitriles, CO et les phosphines tertiaires et les amines tertiaires, dans lesquels les groupes $R_{32}$ représentent, indépendamment l'un de l'autre, des groupes alkyle en $C_1$-$C_{18}$ linéaire ou ramifié, non substitué ou substitué par des groupes alkoxy en $C_1$-$C_6$ ou halogène, cycloalkyle en $C_5$ ou en $C_6$ non substitué ou substitué par des groupes alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)-méthyle, (alkoxy en $C_1$-$C_6$)éthyle ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle ou halogène ; et $R_{33}$ représente un groupe alkyle en $C_1$-$C_{18}$ linéaire ou ramifié, non substitué ou substitué par un groupe alkoxy en $C_1$-$C_6$, ou cycloalkyle en $C_5$ ou en $C_6$ non substitué ou substitué par des groupes alkyle en $C_1$-$C_6$, alkoxy en $C_1$-$C_6$ ou halogène, ou phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di-(alkyl en $C_1$-$C_6$)-amino, di-(alkyl en $C_1$-$C_6$)-amino-alkyle en $C_1$-$C_3$ ou halogène, ou phényl-éthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle ou halogène.

**42.** Composition selon la revendication 41, caractérisée en ce que les composés de molybdène, de tungstène, de niobium et de tantale répondent à une des formule VIII à VIIId

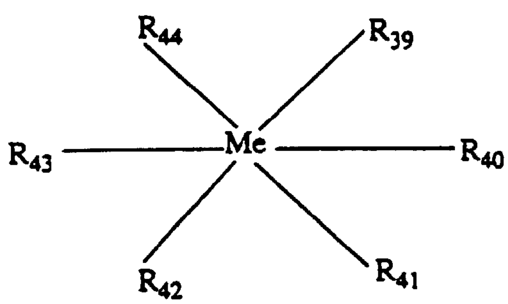

(VIII),

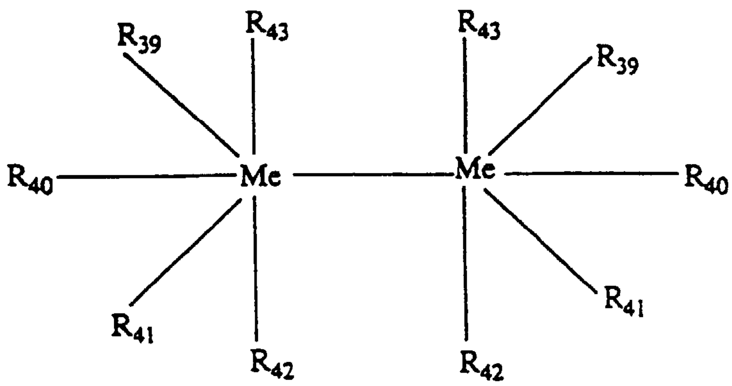

(VIIIa),

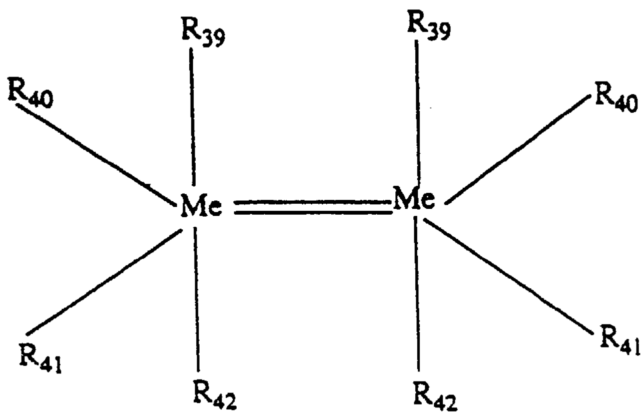

(VIIIb),

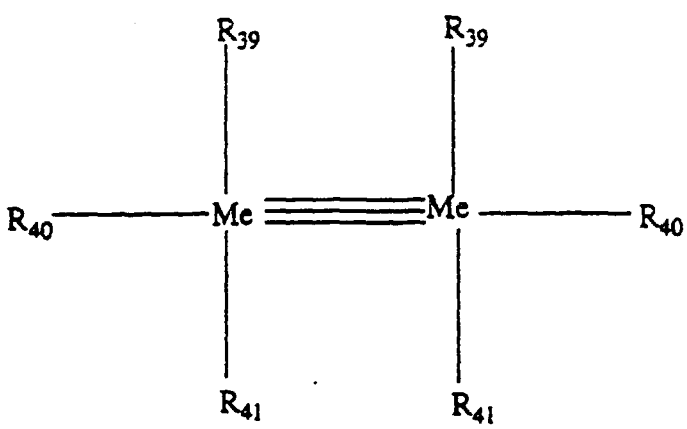

(VIIIc)

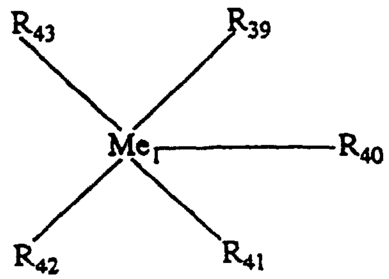

(VIIId)

dans lesquelles

Me représente Mo(VI) ou W(VI),
$Me_1$ représente Nb(V) ou Ta(V),

au moins deux des restes $R_{39}$ à $R_{43}$ représente un reste $-CH_2-R$ de formule VII,

R représente un atome d'hydrogène, $-CF_3$, $CR_{26}R_{27}R_{28}$, $-SiR_{29}R_{30}R_{31}$, hétéroaryle en $C_4$-$C_{15}$ avec 1 à 3 hétéroatomes pris dans le groupe comportant des atomes de O, S et N ou aryle en $C_1$-$C_6$ non substitué ou substitué par des groupes alkyle en $C_1$-$C_6$ ou alkoxy en $C_1$-$C_6$ ; et

$R_{26}$, $R_{27}$ et $R_{28}$ représentent, indépendamment l'un de l'autre, un groupe alkyle en $C_1$-$C_{10}$, lequel est non substitué ou substitué par un groupe alkoxy en $C_1$-$C_{10}$, ou $R_{26}$ et $R_{27}$ possèdent cette signification et $R_{28}$ représente un groupe aryle en $C_6$-$C_{10}$ ou hétéroaryle en $C_4$-$C_9$, lequel est non substitué ou substitué par des groupes alkyle en $C_1$-$C_6$ ou alkoxy en $C_1$-$C_6$ ; et

$R_{29}$, $R_{30}$ et $R_{31}$ représentent, indépendamment l'un de l'autre, des groupes alkyle en $C_1$-$C_{18}$, cycloalkyle en $C_5$ ou en $C_6$, ou phényle ou benzyle non substitué ou substitué par des groupes alkyle en $C_1$-$C_6$ ou alkoxy en $C_1$-$C_6$ ;

à chaque fois, deux des autres restes de $R_{39}$ à $R_{43}$ représentent =O ou $=N-R_{33}$, et $R_{33}$ représente un groupe alkyle en $C_1$-$C_{18}$ linéaire ou ramifié non substitué ou substitué par un groupe alkoxy en $C_1$-$C_6$, cycloalkyle en $C_5$ ou en $C_6$ non substitué ou substitué par un groupe alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$) amino, di(alkyl en $C_1$-$C_6$)amino-alkyle en $C_1$-$C_3$ ou halogène, ou phényléthyle ou benzyle non substitué ou substitué par des groupes alkyle en $C_1$-$C_6$, alkoxy en $C_1$-$C_6$, (alkoxy en $C_1$-$C_6$)-méthyle, (alkoxy en $C_1$-$C_6$)éthyle, di(alkyl en $C_1$-$C_6$)amino, di(alkyl en $C_1$-$C_6$) amino-alkyle en $C_1$-$C_3$ ou halogène ; et/ou

les autres restes de $R_{39}$ à $R_{43}$ représentent un groupe amino secondaire comportant 2 à 18 atomes de carbone, $R_{32}O-$ ou $R_{32}S-$, halogène, indényle, cyclopentadiényle ou biscyclopentadiényle ponté ou un ligand neutre, où les groupes $R_{32}$ représentent, indépendamment l'un de l'autre, des groupes alkyle en $C_1$-$C_{18}$ linéaire ou ramifié, non substitué ou substitué par un groupe alkoxy en $C_1$-$C_6$ ou halogène, cycloalkyle en $C_5$ ou en $C_6$ non substitué ou substitué par des groupes alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)amino-alkyle en $C_1$-$C_3$ ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$)-amino-alkyle en $C_1$-$C_3$ ou halogène.

**43.** Composition selon la revendication 42, caractérisée en ce que les composés de molybdène et de tungstène répondent à la formule VIII, dans laquelle

a) $R_{39}$ à $R_{44}$ représentent un reste de formule VII $-CH_2-R$, ou
b) $R_{39}$ et $R_{40}$ représentent un reste de formule VII $-CH_2-R$, $R_{41}$ et $R_{42}$ conjointement représentent le reste de formule $=N-R_{33}$, et $R_{43}$ et $R_{44}$ conjointement représentent, indépendamment l'un de l'autre, un groupe $R_{32}$-O- ou halogène, ou
c) $R_{43}$ et $R_{44}$ conjointement et $R_{41}$ et $R_{42}$ conjointement représentent le reste de formule $=N-R_{33}$, et $R_{39}$ à $R_{40}$ représentent un reste de formule VII $-CH_2-R$.

**44.** Composition selon la revendication 42, caractérisée en ce que les composés de molybdène et de tungstène réponsent aux formules IX, IXa ou IXb

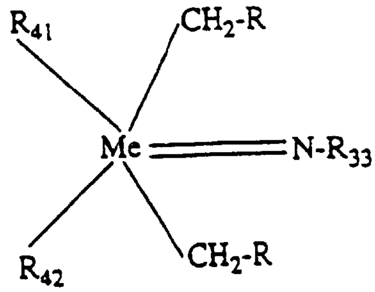

(IX)

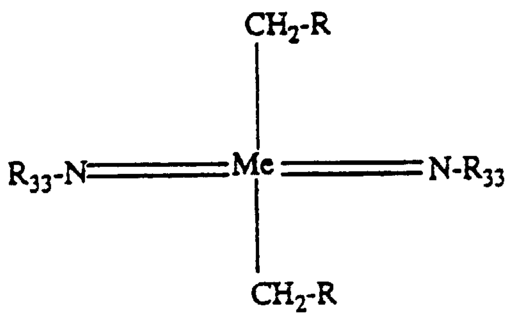

(IXa)

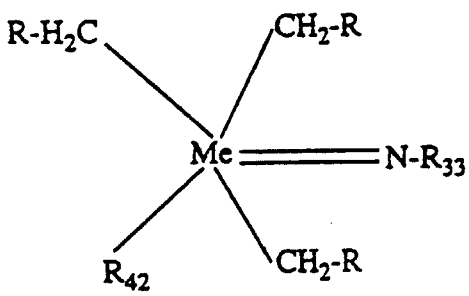

(IXb)

dans lesquelles

Me représente Mo(VI) ou W(VI),

R représente un atome d'hydrogène, $-C(CH_3)_3$, $C(CH_3)_2-C_6H_5$, $-C_6H_5$ ou -Si(alkyle en $C_1$-$C_4$)$_3$,

$R_{33}$ représente des groupes phényle ou phényle substitué par 1 à 3 groupes alkyle en $C_1$-$C_4$ ou alkoxy en $C_1$-$C_4$,

$R_{41}$ représente un groupe alkoxy en $C_1$-$C_4$ linéaire et en particulier ramifié non substitué ou substitué par du fluor, et

$R_{42}$ possède la même signification que $R_{41}$ ou représente F, Cl ou Br.

**45.** Composition selon la revendication 42, caractérisée en ce qu'elle contient des composés de noibium ou de tantale de formule VIIId, dans laquelle

a) $R_{39}$ à $R_{43}$ représentent un reste de formule VII $-CH_2-R$, ou

b) $R_{39}$ et $R_{40}$ représentent un reste de formule VII $-CH_2-R$, $R_{41}$ et $R_{42}$ conjointement représentent le reste de formule $=N-R_{33}$, et $R_{43}$ représente des groupes halogène, $R_{32}$-O-, cyclopentadiényle, indényle non substitué ou substitué, ou

c) $R_{39}$, $R_{40}$ et $R_{41}$ représentent un reste de formule VII $-CH_2-R$, et $R_{42}$ et $R_{43}$ conjointement représentent le reste de formule $=N-R_{33}$, ou $R_{39}$, $R_{40}$, $R_{41}$ et $R_{42}$ représentent un reste de formule VII $-CH_2-R$, et $R_{43}$ représente un groupe de formule $R_{32}-O-$, halogène, indényle ou cyclopentadiényle non substitué ou substitué.

**46.** Composition selon la revendication 42, caractérisée en ce qu'elle contient des composés de noibium ou de tantale formules IXc, IXd ou IXe,

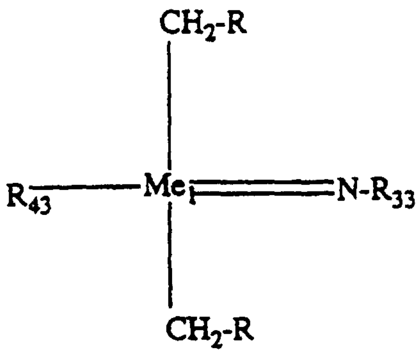
(IXc),

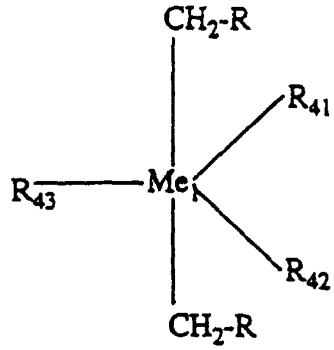
(IXd)

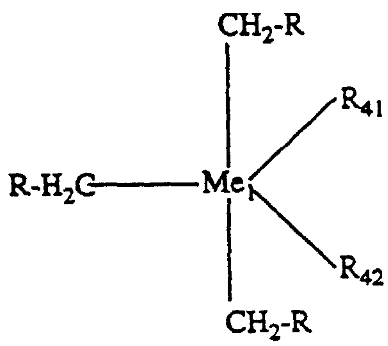
(IXe)

dans lesquelles

| | |
|---|---|
| $Me_1$ | représente Nb(V) ou Ta(V), |
| R | représente un atome d'hydrogène, $-C(CH_3)_3$, $C(CH_3)_2-C_6H_5$, $-C_6H_5$ ou -Si(alkyle en $C_1$-$C_4$)$_3$, |
| $R_{33}$ | représente des groupes phényle ou phényle substitué par 1 à 3 groupes alkyle en $C_1$-$C_4$ ou alkoxy en $C_1$-$C_4$, |
| $R_{43}$ | représente dans la formule IXc le groupe $-CH_2-R$ ou F, Cl, Br, des groupes alkoxy en $C_1$-$C_4$ linéaire ou en particulier ramifié, non substitué ou substitué par du fluor, phényloxy non substitué ou substitué par des groupes alkyle en $C_1$-$C_4$ ou alkoxy en $C_1$-$C_4$, indényle ou cyclopentadiényle non substitué ou substitué par alkyle en $C_1$-$C_4$ ; |
| $R_{41}$, $R_{42}$ et $R_{43}$ | représentent dans la formule IXd, indépendamment l'un de l'autre, F, Cl, Br, alkoxy en $C_1$-$C_4$ linéaire et en particulier ramifié, non substitué ou substitué par du fluor, phényloxy non substitué ou substitué par des groupes alkyle en $C_1$-$C_4$ ou alkoxy en $C_1$-$C_4$, ou indényle ou cyclopentadiényle non substitué ou substitué par alkyle en $C_1$-$C_4$ ; et |
| $R_{41}$ et $R_{42}$ | représentent dans la formule IXe, indépendamment l'un de l'autre, F, Cl, Br, alkoxy en $C_1$-$C_4$ linéaire et en particulier ramifié, non substitué ou substitué par du fluor, phényloxy non substitué ou substitué par des groupes alkyle en $C_1$-$C_4$ ou alkoxy en $C_1$-$C_4$, ou indényle ou cyclopentadiényle non substitué ou substitué par des groupes alkyle en $C_1$-$C_4$. |

**47.** Composition selon la revendication 1, caractérisée en ce qu'elle contient des composés de niobium, de tantale, de molybdène et de tungstène de formule X ou Xa,

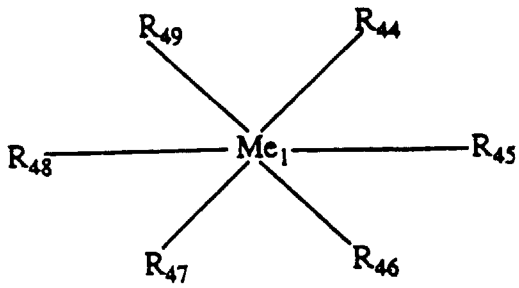

(X)

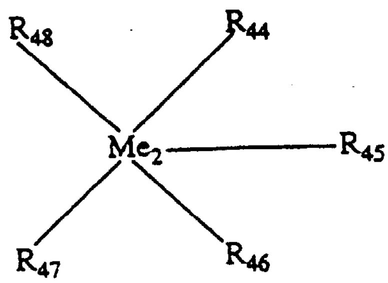

(Xa)

dans lesquelles

$Me_1$ représente Mo(VI) ou W(VI) ;
$Me_2$ représente Nb(V) ou Ta(V) ;

l'un des restes $R_{44}$ à $R_{49}$ représente un reste $-CH_2-SiR_{29}R_{30}R_{31}$ de formule VIIa ;

au moins l'un des restes $R_{44}$ à $R_{49}$ représente F, Cl ou Br ;

$R_{29}$, $R_{30}$ et $R_{31}$ représentent, indépendamment l'un de l'autre, des groupes alkyle en $C_1$-$C_6$, cycloalkyle en $C_5$ ou en $C_6$, ou benzyle ou phényle non substitué ou substitué par des groupes alkyle en $C_1$-$C_6$ ou alkoxy en $C_1$-$C_6$ ;

dans la formule X, deux ou à chaque fois deux, et dans la formule Xa, deux des autres restes de $R_{44}$ à $R_{49}$, à chaque fois conjointement, représentent =O ou $=N-R_{33}$, et $R_{33}$ représente des groupes alkyle en $C_1$-$C_{18}$ linéaire ou ramifié, non substitué ou substitué par un groupe alkoxy en $C_1$-$C_6$, cycloalkyle en $C_5$ ou en $C_6$ non substitué ou substitué par des groupes alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)-amino, di(alkyl en $C_1$-$C_6$)amino-alkyle en $C_1$-$C_3$ ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)-amino, di(alkyl en $C_1$-$C_6$)amino-alkyle en $C_1$-$C_3$ ou halogène, et

les autres restes $R_{44}$ à $R_{48}$ représentent des groupes amino secondaire comportant 2 à 8 atomes de carbone, $R_{32}O$- ou $R_{32}S$-, halogène, indényle, biscyclopentadiényle ponté ou cyclopentadiényle non substitué ou substitué ou un ligand neutre, où les groupes $R_{32}$ représentent, indépendamment l'un de l'autre, alkyle en $C_1$-$C_{18}$ linéaire ou ramifié, non substitué ou substitué par un groupe alkoxy en $C_1$-$C_6$ ou halogène, cycloalkyle en $C_5$ ou en $C_6$ non substitué ou substitué par des groupes alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)amino, di(alkyl en $C_1$-$C_6$) amino-alkyle en $C_1$-$C_3$ ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)-amino, di(alkyl en $C_1$-$C_6$)amino-alkyle en $C_1$-$C_3$ ou halogène ; ou

dans les formules X et Xa, les autres restes de $R_{44}$ à $R_{49}$ représentent, indépendamment les uns des autres, des groupes amino secondaire comportant 2 à 18 atomes de carbone, $R_{32}O$- ou $R_{32}S$-, halogène, biscyclopentadiényle ponté, indényle, cyclopentadiényle non substitué ou substitué ou un ligand neutre, où les groupes $R_{32}$ représentent, indépendamment l'un de l'autre, alkyle en $C_1$-$C_{18}$ linéaire ou ramifié, non substitué ou substitué par des groupes alkoxy en $C_1$-$C_6$ ou halogène, cycloalkyle en $C_5$ ou en $C_6$ non substitué ou substitué par des groupes alkyle en $C_1$-$C_6$, alkoxy en $C_1$-$C_6$ ou halogène, phényle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)-amino, di(alkyl en $C_1$-$C_6$)amino-alkyle en $C_1$-$C_3$ ou halogène, ou phényléthyle ou benzyle non substitué ou substitué par des groupes alkyle en $C_1$-$C_6$, alkoxy en $C_1$-$C_6$, (alkoxy en $C_1$-$C_6$)méthyle, (alkoxy en $C_1$-$C_6$)éthyle, di(alkyl en $C_1$-$C_6$)-amino,

di(alkyl en $C_1$-$C_6$)-amino-alkyle en $C_1$-$C_3$ ou halogène.

**48.** Composition selon la revendication 47, caractérisée en ce qu'elle contient des composés de niobium, de tantale, de molybdène ou de tungstène de formule X ou Xa, dans laquelle

$R_{44}$ représente un reste de formule VIIa $-CH_2-(SiR_{29}R_{30}R_{31})_3$ et $R_{45}$ représente F, Cl ou Br ; et

(a) dans la formule X, $R_{46}$ et $R_{47}$ ainsi que $R_{48}$ et $R_{49}$ à chaque fois ensemble, représentent le reste $=N-R_{33}$, ou $R_{46}$ et $R_{47}$ ensemble représentent le reste $=N-R_{33}$, et $R_{48}$ et $R_{49}$ représentent, indépendamment l'un de l'autre, des groupes halogène, $R_{32}$-O-, indényle, cyclopentadiényle non substitué ou substitué, ou

(b) dans la formule Xa, $R_{46}$ et $R_{47}$ conjointement représentent le reste $=N-R_{33}$, et $R_{48}$ représente des groupes halogène, $R_{32}$-O-, indényle, cyclopentadiényle non substitué ou substitué, ou dans la formule Xa, $R_{46}$, $R_{47}$ et $R_{48}$ représentent, indépendamment les uns des autres, des groupes halogène, $R_{32}$-O-, indényle ou cyclopentadiényle non substitué ou substitué.

**49.** Composition selon la revendication 47, caractérisée en ce qu'elle contient des composés de niobium, de tantale, de molybdène ou de tungstène de formule XI, XIa, XIb ou XIc,

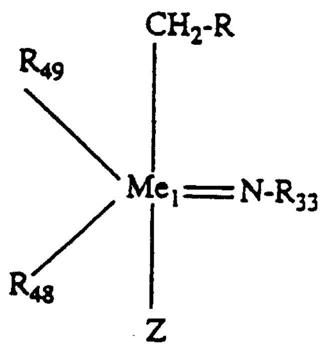

(IX)

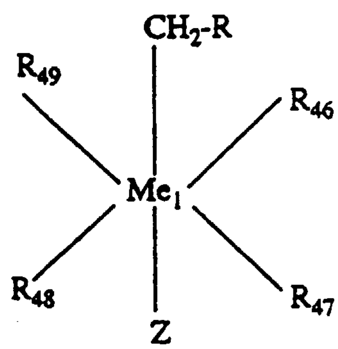

(XIa)

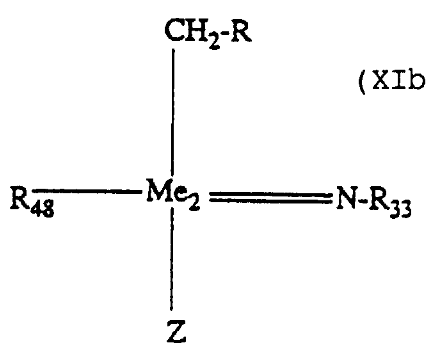

(XIb)

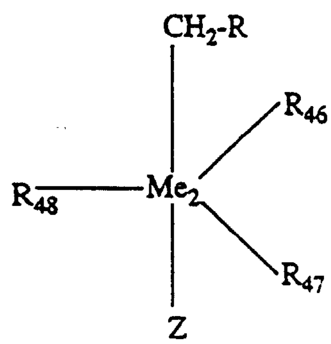

(XIc)

$Me_1$ représente Mo(VI) ou W(VI) ;
$Me_2$ représente Nb(V) ou Ta(V) ;
R représente -Si(alkyle en $C_1$-$C_4$)$_3$ ;
Z représente des atomes de F, Cl ou Br ;
$R_{33}$ représente des groupes phényle ou phényle substitué par 1 à 3 groupes alkyle en $C_1$-$C_4$ ou alkoxy en $C_1$-$C_4$,

(a) $R_{48}$ et $R_{49}$ dans la formule XI conjointement avec le groupe $=N-R_{33}$ ou seuls, indépendamment l'un de l'autre, représentent des atomes F, Cl, Br, des groupes alkoxy en $C_1$-$C_4$ linéaire ou en particulier ramifié, non substitué ou substitué par du fluor, phényloxy non substitué ou substitué par des groupes alkyle en $C_1$-$C_4$ ou alkoxy en $C_1$-$C_4$, ou $R_{41}$, $R_{42}$, $R_{43}$ et $R_{44}$ représentent cyclopentadiényle non substitué ou substitué par des groupes alkyle en $C_1$-$C_4$;

(b) $R_{46}$, $R_{47}$ et $R_{48}$ et $R_{49}$ dans la formule XIa représentent, indépendamment les uns des autres, des atomes de F, Cl, Br, des groupes alkoxy en $C_1$-$C_4$ linéaire et en particulier ramifié, non substitué ou substitué par du fluor, phényloxy non substitué ou substitué par des groupes alkoxy en $C_1$-$C_4$ ou alkyle en $C_1$-$C_4$, ou indényle ou cyclopentadiényle non substitué ou substitué par un groupe alkyle en $C_1$-$C_4$ ;
(c) $R_{48}$ dans la formule XIb représente des atomes de F, Cl, Br, des groupes alkoxy en $C_1$-$C_4$ linéaire ou en particulier ramifié, non substitué ou substitué par du fluor, phényloxy non substitué ou substitué par des groupes alkoxy en $C_1$-$C_4$ ou alkyle en $C_1$-$C_4$, indényle ou cyclopentadiényle non substitué ou substitué par un groupe alkyle en $C_1$-$C_4$ ;
(d) $R_{46}$, $R_{47}$ et $R_{48}$ dans la formule XIc représentent, indépendamment les uns des autres, des atomes de F, Cl, Br, des groupes alkoxy en $C_1$-$C_4$ linéaire ou en particulier ramifié, non substitué ou substitué par du fluor, phényloxy non substitué ou substitué par des groupes alkoxy en $C_1$-$C_4$ ou alkyle en $C_1$-$C_4$ ou représentent indényle ou cyclopentadiényle non substitué ou substitué par un groupe alkyle en $C_1$-$C_4$.

**50.** Composition selon la revendication 47, caractérisée en ce qu'elle contient des composés de formule XII, XIIa, XIIb ou XIIc,

$$(R_{33}\text{-N=})_2Me_1X_aCH_2\text{-Si}(CH_3)_3 \quad \text{(XII)}$$

$$(R_{33}\text{-N=})R_{46}Me_1X_a(OR_{32})CH_2\text{-Si}(CH_3)_3 \quad \text{(XIIa)}$$

$$R_{46}\text{-}R_{47}Me_2X_a(OR_{32})CH_2\text{-Si}(CH_3)_3 \quad \text{(XIIb)}$$

$$R_{33}\text{-N=}Me_2X_a(OR_{32})CH_2\text{-Si}(CH_3)_3 \quad \text{(XIIc)}$$

dans lesquelles

| | |
|---|---|
| $Me_1$ | représente Mo(VI) ou W(VI) ; |
| $Me_2$ | représente Nb(V) ou Ta(V) ; et |
| $X_a$ | représente des atomes de F, Cl ou Br ; |
| $R_{32}$ | représente un groupe alkyle en $C_3$ ou en $C_4$ ramifié, éventuellement partiellement ou entièrement substitué par du fluor, ou phényloxy ou phényloxy substitué par 1 à 3 groupes méthyle ou éthyle ; |
| $R_{33}$ | représente des groupes phényle ou phényle substitué par 1 ou 2 groupes alkyle en $C_1$-$C_4$ ; |
| $R_{46}$ et $R_{47}$ | représentent, indépendamment l'un de l'autre, des groupes indényle, cyclopentadiényle non substitué ou substitué par 1 à 5 groupes méthyle, $X_a$ ou $R_{32}O$- ; |

et

$R_{48}$ représente un groupe cyclopentadiényle non substitué ou substitué par 1 à 5 groupes méthyle, $X_a$ ou $R_{32}O$-.

**51.** Composition selon la revendication 1, caractérisée en qu'elle contient le catalyseur à un composant dans une quantité de 0,001 à 20 % en moles, par rapport à la quantité de monomères.

**52.** Composition selon la revendication 51, caractérisée en ce qu'elle contient le catalyseur à un composant dans une quantité de 0,01 à 15 % en moles.

**53.** Composition selon la revendication 51, caractérisée en ce qu'elle contient le catalyseur à un composant dans une quantité de 0,01 à 10 % en moles.

**54.** Composition selon la revendication 51, caractérisée en ce qu'elle contient le catalyseur à un composant dans une quantité de 0,01 à 5 % en moles.

**55.** Composition selon la revendication 1, caractérisée en ce qu'elle contient des adjuvants de formulation.

**56.** Procédé pour la préparation de polymères à partir d'acétylènes par photopolymérisation par métathèse, caractérisé en ce qu'une composition, laquelle contient au moins un acétylène non volatil de formule I

$$R_a\text{-}C{\equiv}C\text{-}R_b \qquad (I)$$

dans laquelle

| | |
|---|---|
| $R_a$ | représente des groupes hétéroaryle en $C_3$-$C_{15}$ comportant 1 à 3 hétéroatomes pris dans le groupe comportant des atomes de O, N et S, hétérocycloalkyle en $C_3$-$C_9$ avec 1 à 3 hétéroatomes pris dans le groupe comportant des atomes de O, N et S, aralkyloxy en $C_7$-$C_{19}$, aryloxy en $C_6$-$C_{18}$, (cycloalkyl en $C_3$-$C_{12}$)-alkoxy en $C_1$-$C_{12}$, cycloalkoxy en $C_3$-$C_{12}$, alkoxy en $C_1$-$C_{20}$, aralkyle en $C_7$-$C_{19}$, aryle en $C_6$-$C_{18}$, (cycloalkyl en $C_3$-$C_{12}$)alkyle en $C_1$-$C_{12}$, cycloalkyle en $C_{13}$-$C_{12}$ ou alkyle en $C_1$-$C_{20}$ non substitué ou substitué par des atomes d'halogènes, des groupes -OH, -CN, -$NH_2$, -NH(alkyle en $C_1$-$C_6$), -N(alkyle en $C_1$-$C_6$)$_2$, alkyle en $C_1$-$C_6$, (alkyl en $C_1$-$C_6$)-O-, (alkyl en $C_1$-$C_6$)-S-, (alkyl en $C_1$-$C_6$)-C(O)O-, (alkyl en $C_1$-$C_6$)-OC(O)-, -C(O)-$NH_2$, (alkyl en $C_1$-$C_6$)-C(O)NH- ou (alkyl en $C_1$-$C_6$)-NHC(O)-, ou $R_a$ représente -(O)$_k$-Si$R_cR_dR_e$, (alkyl en $C_1$-$C_{18}$)-OC(O)-, -C(O)-$NH_2$ ou (alkyl en $C_1$-$C_{18}$)-NHC(O)- ; |
| $R_b$ | représente un atome d'hydrogène ou, indépendamment, possède la signification de $R_a$ ; |
| $R_c$, $R_d$ et $R_e$ | représentent, indépendamment les uns des autres, des groupes alkyle en $C_1$-$C_{18}$, alkoxy en $C_1$-$C_{18}$, cycloalkyle en $C_5$ ou en $C_6$, cycloalkoxy en $C_5$ ou en $C_6$, ou phényle, phényloxy, benzyle ou benzyloxy non substitué ou substitué par alkyle en $C_1$-$C_6$ ou alkoxy en $C_1$-$C_6$ ; et |
| k | vaut 0 ou 1; |

seuls ou conjointement avec une cyclooléfine tendue et des quantités catalytiques d'au moins un catalyseur à un composant pris dans le groupe comportant des composés de molybdène, de tungstène, de niobium et de tantale, contenant soit (a) au moins deux groupes méthyle ou deux groupes méthyle monosubstitués sans atomes d'hydrogène $\alpha$ dans le substituant, soit (b) au moins un atome d'halogène et seulement une groupe silyméthyle lié au métal.

($\alpha$) est polymérisée par irradiation, ou
($\beta$) le catalyseur à un composant est activé par irradiation de courte durée et la polymérisation est terminée par réchauffage à une température de 30 à 300 °C.

**57.** Procédé pour la préparation de matières revêtues ou d'images en relief sur des matières de support, dans lequel on applique sur un support une composition selon la revendication 1 et éventuellement un solvant sous forme de couche, éventuellement on élimine le solvant et on irradie la couche pour la polymérisation, ou on irradie la couche à travers un photomasque, éventuellement, après l'irradiation, on réalise un post-durcissement thermique, et ensuite on élimine les portions non irradiées à l'aide d'un solvant.

**58.** Matière de support revêtue, caractérisée en ce que l'on applique sur la matière de support une couche d'une composition selon la revendication 1.

**59.** Matière de support, caractérisée en ce qu'une couche polymérisée d'une composition selon la revendication 1 est appliquée sur la matière de support.